(19) Europäisches Patentamt / European Patent Office / Office européen des brevets

(11) **EP 4 709 018 A1**

(12) **EUROPEAN PATENT APPLICATION**
published in accordance with Art. 153(4) EPC

(43) Date of publication:
**11.03.2026 Bulletin 2026/11**

(21) Application number: **24797490.0**

(22) Date of filing: **26.04.2024**

(51) International Patent Classification (IPC):
$H04W\ 74/04^{(2009.01)}$   $H04W\ 74/00^{(2009.01)}$
$H04W\ 74/08^{(2024.01)}$   $H04W\ 72/0453^{(2023.01)}$
$H04W\ 84/12^{(2009.01)}$

(52) Cooperative Patent Classification (CPC):
H04W 72/0453; H04W 74/00; H04W 74/04;
H04W 74/08; H04W 84/12

(86) International application number:
**PCT/KR2024/005732**

(87) International publication number:
**WO 2024/225836 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 26.04.2023  KR 20230054981
03.01.2024  KR 20240000888
20.03.2024  KR 20240038550
16.04.2024  KR 20240050440

(71) Applicant: **Wilus Institute of Standards and Technology Inc.**
**Gyeonggi-do 13595 (KR)**

(72) Inventors:
• KIM, Sanghyun
  **Seongnam-si Gyeonggi-do 13595 (KR)**
• SON, Juhyung
  **Seongnam-si Gyeonggi-do 13595 (KR)**
• KO, Geonjung
  **Seongnam-si Gyeonggi-do 13595 (KR)**
• KWAK, Jinsam
  **Seongnam-si Gyeonggi-do 13595 (KR)**

(74) Representative: **Schmitt-Nilson Schraud Waibel Wohlfrom**
**Patentanwälte Partnerschaft mbB**
**Pelkovenstraße 143**
**80992 München (DE)**

(54) **METHOD FOR TRANSMITTING AND RECEIVING DATA IN WIRELESS COMMUNICATION SYSTEM, AND WIRELESS COMMUNICATION TERMINAL USING SAME**

(57)   Disclosed are a method and device for operating a wireless communication terminal. Specifically, a wireless communication terminal, according to the present invention, transmits a request frame for multi-access point (AP) coordination to a first terminal, the frame including channel information indicating a specific channel to be used for transmission and reception of low-latency data during a specific period. The terminal may receive a response frame in response to the frame, and perform transmission and reception of the low-latency data within the specific period with a second terminal. Here, the transmission and reception of the low-latency data through the specific channel within the specific period is guaranteed by the frame, and the specific channel is not occupied by the first terminal during the specific period and is used for transmission and reception of the low-latency data with the second terminal.

FIG. 3

## Description

### Technical Field

The present disclosure relates to a method for acquiring a transmission opportunity (TXOP) and occupying a channel to improve the efficiency of a wireless LAN.

### Background Art

In recent years, with supply expansion of mobile apparatuses, a wireless LAN technology that can provide a rapid wireless s Internet service to the mobile apparatuses has been significantly spotlighted. The wireless LAN technology allows mobile apparatuses including a smart phone, a smart pad, a laptop computer, a portable multimedia player, an embedded apparatus, and the like to wirelessly access the Internet in home or a company or a specific service providing area based on a wireless communication technology in a short range.

Institute of Electrical and Electronics Engineers (IEEE) 802.11 has commercialized or developed various technological standards since an initial wireless LAN technology is supported using frequencies of 2.4 GHz. First, the IEEE 802.11b supports a communication speed of a maximum of 11 Mbps while using frequencies of a 2.4 GHz band. IEEE 802.11a which is commercialized after the IEEE 802.11b uses frequencies of not the 2.4 GHz band but a 5 GHz band to reduce an influence by interference as compared with the frequencies of the 2.4 GHz band which are significantly congested and improves the communication speed up to a maximum of 54 Mbps by using an OFDM technology. However, the IEEE 802.11a has a disadvantage in that a communication distance is shorter than the IEEE 802.11b. In addition, IEEE 802.11g uses the frequencies of the 2.4 GHz band similarly to the IEEE 802.11b to implement the communication speed of a maximum of 54 Mbps and satisfies backward compatibility to significantly come into the spotlight and further, is superior to the IEEE 802.11a in terms of the communication distance.

Moreover, as a technology standard established to overcome a limitation of the communication speed which is pointed out as a weak point in a wireless LAN, IEEE 802.11n has been provided. The IEEE 802.11n aims at increasing the speed and reliability of a network and extending an operating distance of a wireless network. In more detail, the IEEE 802.11n supports a high throughput (HT) in which a data processing speed is a maximum of 540 Mbps or more and further, is based on a multiple inputs and multiple outputs (MIMO) technology in which multiple antennas are used at both sides of a transmitting unit and a receiving unit in order to minimize a transmission error and optimize a data speed. Further, the standard can use a coding scheme that transmits multiple copies which overlap with each other in order to increase data reliability.

As the supply of the wireless LAN is activated and further, applications using the wireless LAN are diversified, the need for new wireless LAN systems for supporting a higher throughput (very high throughput (VHT)) than the data processing speed supported by the IEEE 802.11n has come into the spotlight. Among them, IEEE 802.11ac supports a wide bandwidth (80 to 160 MHz) in the 5 GHz frequencies. The IEEE 802.11ac standard is defined only in the 5 GHz band, but initial 11ac chipsets will support even operations in the 2.4 GHz band for the backward compatibility with the existing 2.4 GHz band products. Theoretically, according to the standard, wireless LAN speeds of multiple stations are enabled up to a minimum of 1 Gbps and a maximum single link speed is enabled up to a minimum of 500 Mbps. This is achieved by extending concepts of a wireless interface accepted by 802.11n, such as a wider wireless frequency bandwidth (a maximum of 160 MHz), more MIMO spatial streams (a maximum of 8), multi-user MIMO, and high-density modulation (a maximum of 256 QAM). Further, as a scheme that transmits data by using a 60 GHz band instead of the existing 2.4 GHz/5 GHz, IEEE 802.11ad has been provided. The IEEE 802.11ad is a transmission standard that provides a speed of a maximum of 7 Gbps by using a beamforming technology and is suitable for high bit rate moving picture streaming such as massive data or non-compression HD video. However, since it is difficult for the 60 GHz frequency band to pass through an obstacle, it is disadvantageous in that the 60 GHz frequency band can be used only among devices in a short-distance space.

As a wireless LAN standard after 802.11ac and 802.11ad, the IEEE 802.11ax (high efficiency WLAN, HEW) standard for providing a high-efficiency and high-performance wireless LAN communication technology in a high-density environment, in which APs and terminals are concentrated, is in the development completion stage. In an 802.11ax-based wireless LAN environment, communication with high frequency efficiency should be provided indoors/outdoors in the presence of high-density stations and access points (APs), and various technologies have been developed to implement the same.

In order to support new multimedia applications, such as high-definition video and real-time games, the development of a new wireless LAN standard has begun to increase a maximum transmission rate. In IEEE 802.11be (extremely high throughput, EHT), which is a 7th generation wireless LAN standard, development of standards is underway aiming at supporting a transmission rate of up to 30Gbps via a wider bandwidth, an increased spatial stream, multi-AP cooperation, and the like in a 2.4/5/6 GHz band

Recently, discussions have begun on ultra-high reliability (UHR) wireless LAN communication technology as a wireless LAN standard following 802.11be, in order to overcome the reliability issue that has been pointed out as a limit of wireless LANs. The UHR wireless LAN standard is under development with the goal of supporting low latency and low jitter in wireless LAN traffic with a high probability (e.g., 99.9999% or higher).

**Disclosure of Invention**

**Technical Problem**

An aspect of the present disclosure is to provide a UHR wireless LAN service for new multimedia applications by enhancing a method for channel occupancy in a wireless LAN.

The technical tasks to be achieved by the present specification are not limited to the above-described technical tasks, and other technical tasks which are not mentioned herein will be clearly understood by those skilled in the art to which the present disclosure belongs from the following description.

**Solution to Problem**

In a wireless communication terminal according to the present disclosure, a processor is configured to transmit a request frame for multi-access point (AP) coordination to a first terminal, the frame including channel information indicating a specific channel used for transmission and reception of low-latency data during a specific period, receive a response frame in response to the frame, and perform transmission and reception of the low-latency data with a second terminal within the specific period, wherein the transmission and reception of the low-latency data via the specific channel within the specific period is guaranteed by the frame, and the specific channel is not occupied by the first terminal during the specific period and is used for the transmission and reception of the low-latency data with the second terminal.

Furthermore, in the present disclosure, in case that the specific period partially or fully overlaps transmission opportunity (TXOP) duration through a network allocation vector (NAV) configuration by the first terminal, the specific channel is used to perform the transmission and reception of the low-latency data with the second terminal during the specific period.

Furthermore, in the present disclosure, the request frame is duplicated and transmitted in 20 MHz units within the entire bandwidth of the wireless communication terminal.

Furthermore, in the present disclosure, the processor is configured to transmit, to the first terminal, a release request message for releasing the use of the specific channel by the multi-AP coordination, and the use of the specific channel within the specific period is released based on the release request message.

Furthermore, in the present disclosure, the processor is configured to transmit a specific frame to the first terminal at intervals of a predetermined time to notify the first terminal of the use of the specific channel.

Furthermore, in the present disclosure, in case that the specific frame is not transmitted to the first terminal within the predetermined time, the use of the specific channel within the specific period is released, and the predetermined time, which is a transmission period of the specific frame, is longer than a transmission period of a beacon frame.

Furthermore, in the present disclosure, the specific period is a restricted-target wake time (R-TWT) period for the transmission and reception of the low-latency data.

Furthermore, the present disclosure provides a method including: transmitting a request frame for multi-access point (AP) coordination to a first terminal, the frame including channel information indicating a specific channel used for transmission and reception of low-latency data during a specific period; receiving a response frame in response to the frame; and performing transmission and reception of the low-latency data with a second terminal within the specific period, wherein the transmission and reception of the low-latency data via the specific channel within the specific period is guaranteed by the frame, and the specific channel is not occupied by the first terminal during the specific period and is used for the transmission and reception of the low-latency data with the second terminal.

Furthermore, the present disclosure provides a wireless communication terminal which receives, from a first terminal, a frame indicating that use of a specific channel within a specific period is not allowed, the specific channel being used by a second terminal of another BSS to transmit and receive low-latency data during the specific period, and performs transmission and reception of data with the first terminal, based on the frame, wherein the transmission and reception of the low-latency data via the specific channel within the specific period is guaranteed by the frame, and the specific channel is not occupied by the first terminal during the specific period and is used for the transmission and reception of the low-latency data with the second terminal.

Furthermore, in the present disclosure, in case that a first primary channel of the second terminal and a second primary channel of the wireless communication terminal are identical, a channel access procedure between the wireless communication terminal and the first terminal is performed via a subchannel of an operating channel not including the first primary channel in the entire bandwidth.

## Advantageous Effects of Invention

An embodiment of the present disclosure provides a wireless communication method for efficiently managing TXOP and a wireless communication terminal using the same.

According to an embodiment of the present disclosure, data may be transmitted and received on a channel occupied by a TXOP configuration of another terminal through multi-access point (AP) coordination between terminals.

Furthermore, according to an embodiment of the present disclosure, by performing multi-AP coordination between an access point (AP) and another AP, the other AP does not occupy the AP's primary channel, thereby enabling the AP to perform channel access for transmission and reception of low-latency traffic.

Furthermore, according to an embodiment of the present disclosure, before a restricted-target wake time (R-TWT) service period (SP) of an AP starts, access by another AP to a band included in the operating bandwidth may be suspended.

effects obtainable in the present invention are not limited to the above-mentioned effects, and other effects that are not mentioned may be clearly understood by those skilled in the art to which the present invention belongs, from descriptions below.

## Brief Description of Drawings

FIG. 1 illustrates a wireless LAN system according to an embodiment of the present invention.

FIG. 2 illustrates a wireless LAN system according to another embodiment of the present invention.

FIG. 3 illustrates a configuration of a station according to an embodiment of the present invention.

FIG. 4 illustrates a configuration of an access point according to an embodiment of the present invention.

FIG. 5 schematically illustrates a process in which a STA and an AP set a link.

FIG. 6 illustrates a carrier sense multiple access (CSMA)/collision avoidance (CA) method used in wireless LAN communication.

FIG. 7 illustrates physical layer protocol data unit (PPDU) formats of various standard generations according to an embodiment of the present disclosure.

FIG. 8 illustrates an EHT/UHR PPDU format according to an embodiment of the present disclosure.

FIG. 9 illustrates a transmission/TXOP protection method using an RTS frame and a CTS frame according to an embodiment of the present disclosure.

FIG. 10 illustrates a transmission/TXOP protection method using an MU-RTS frame and a CTS frame according to an embodiment of the present disclosure.

FIG. 11 illustrates an example where transmission of low-latency traffic of other APs is delayed by the TXOP of an AP according to an embodiment of the present disclosure.

FIG. 12 illustrates a format of an element exchanged between APs for multi-AP cooperative puncturing, and a configuration state of operating bandwidths and primary channels of APs to which multi-AP cooperative puncturing is applied according to an embodiment of the present disclosure.

FIG. 13 illustrates an example of a frame exchange sequence to which coordinated puncturing for AP 2 is applied according to an embodiment of the present disclosure.

FIG. 14 illustrates another example of a frame exchange sequence to which coordinated puncturing applied for AP 2 is applied according to an embodiment of the present disclosure.

FIG. 15 illustrates an example of an element format which an AP performing a multi-AP cooperation operation according to an embodiment of the present disclosure transmits to indicate STAs information related to channel access restriction to STAs of the AP's BSS.

FIG. 16 illustrates an example of a method for exchanging occupied channel information to enhance protection between basic service sets (BSSs) that perform multi-AP coordination according to an embodiment of the present disclosure.

FIG. 17 illustrates an example of a method for changing a CCA threshold to enhance protection between BSSs that have performed multi-AP coordination according to an embodiment of the present disclosure.

FIG. 18 illustrates an example of a frame format used in a multi-AP coordination process according to an embodiment of the present disclosure.

FIG. 19 illustrates an example of a multi-AP coordination process between APs according to an embodiment of the present disclosure.

FIG. 20 illustrates an example of a multi-AP coordination teardown frame format according to an embodiment of the present disclosure.

FIG. 21 illustrates an example of the format of an operation information field transmitted by an AP according to an embodiment of the present disclosure to change a disabled subchannel of a BSS.

FIG. 22 illustrates an example of a method in which multi-AP coordination puncturing is applied to a subchannel other than a primary channel according to an embodiment of the present disclosure.

FIG. 23 illustrates an example of a positional relationship of puncturing channels between APs that perform multi-AP coordinated puncturing negotiation according to an embodiment of the present disclosure, and an example of coordination restrictions according to the same.

FIG. 24 illustrates an example of a method for designating a PPC and an APC with respect to 80 MHz, 160 MHz, and 320 MHz channels according to an embodiment of the present disclosure.

FIG. 25 is a flowchart showing an example of a data transmission and reception method performed by a terminal according to an embodiment of the present disclosure.

## Mode for Carrying out the Invention

Terms used in the specification adopt general terms which are currently widely used by considering functions in the present invention, but the terms may be changed depending on an intention of those skilled in the art, customs, and emergence of new technology. Further, in a specific case, there is a term arbitrarily selected by an applicant and in this case, a meaning thereof will be described in a corresponding description part of the invention. Accordingly, it should be revealed that a term used in the specification should be analyzed based on not just a name of the term but a substantial meaning of the term and contents throughout the specification.

Throughout this specification and the claims that follow, when it is described that an element is "coupled" to another element, the element may be "directly coupled" to the other element or "electrically coupled" to the other element through a third element. Further, unless explicitly described to the contrary, the word "comprise" and variations such as "comprises" or "comprising", will be understood to imply the inclusion of stated elements but not the exclusion of any other elements. Moreover, limitations such as "or more" or "or less" based on a specific threshold may be appropriately substituted with "more than" or "less than", respectively.

Hereinafter, in the present invention, a field and a subfield may be interchangeably used.

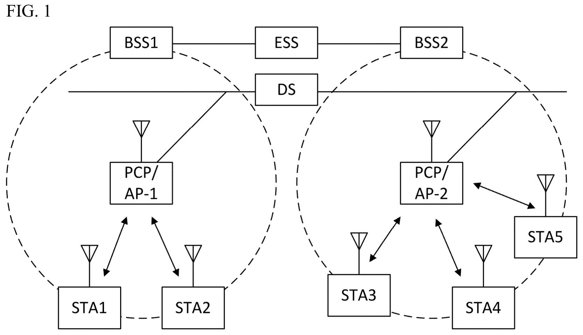

FIG. 1 illustrates a wireless LAN system according to an embodiment of the present invention.

FIG. 1 is a diagram illustrating a wireless LAN system according to an embodiment of the present invention. The wireless LAN system includes one or more basic service sets (BSS) and the BSS represents a set of apparatuses which are successfully synchronized with each other to communicate with each other. In general, the BSS may be classified into an infrastructure BSS and an independent BSS (IBSS) and FIG. 1 illustrates the infrastructure BSS between them.

As illustrated in FIG. 1, the infrastructure BSS (BSS1 and BSS2) includes one or more stations STA1, STA2, STA3, STA4, and STA5, access points AP-1 and AP-2 which are stations providing a distribution service, and a distribution system (DS) connecting the multiple access points AP-1 and AP-2.

The station (STA) is a predetermined device including medium access control (MAC) following a regulation of an IEEE 802.11 standard and a physical layer interface for a wireless medium, and includes both a non-access point (non-AP) station and an access point (AP) in a broad sense. Further, in the present specification, a term 'terminal' may be used to refer to a non-AP STA, or an AP, or to both terms. A station for wireless communication includes a processor and a communication unit and according to the embodiment, may further include a user interface unit and a display unit. The processor may generate a frame to be transmitted through a wireless network or process a frame received through the wireless network and besides, perform various processing for controlling the station. In addition, the communication unit is functionally connected with the processor and transmits and receives frames through the wireless network for the station. According to the present invention, a terminal may be used as a term which includes user equipment (UE).

The access point (AP) is an entity that provides access to the distribution system (DS) via wireless medium for the station associated therewith. In the infrastructure BSS, communication among non-AP stations is, in principle, performed via the AP, but when a direct link is configured, direct communication is enabled even among the non-AP stations. Meanwhile, in the present invention, the AP is used as a concept including a personal BSS coordination point (PCP) and may include concepts including a centralized controller, a base station (BS), a node-B, a base transceiver system (BTS), and a site controller in a broad sense. In the present invention, an AP may also be referred to as a base wireless communication terminal. The base wireless communication terminal may be used as a term which includes an AP, a base station, an eNB (i.e. eNodeB) and a transmission point (TP) in a broad sense. In addition, the base wireless communication terminal may include various types of wireless communication terminals that allocate medium resources and perform scheduling in communication with a plurality of wireless communication terminals.

A plurality of infrastructure BSSs may be connected with each other through the distribution system (DS). In this case, a plurality of BSSs connected through the distribution system is referred to as an extended service set (ESS).

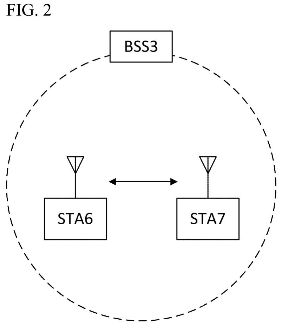

FIG. 2 illustrates an independent BSS which is a wireless LAN system according to another embodiment of the present invention. In the embodiment of FIG. 2, duplicative description of parts, which are the same as or correspond to the embodiment of FIG. 1, will be omitted.

Since a BSS3 illustrated in FIG. 2 is the independent BSS and does not include the AP, all stations STA6 and STA7 are not connected with the AP. The independent BSS is not permitted to access the distribution system and forms a self-contained network. In the independent BSS, the respective stations STA6 and STA7 may be directly connected with each other.

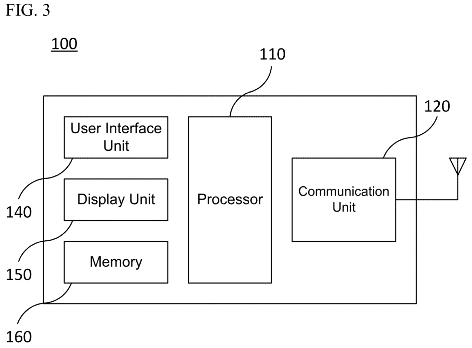

FIG. 3 is a block diagram illustrating a configuration of a station 100 according to an embodiment of the present invention. As illustrated in FIG. 3, the station 100 according to the embodiment of the present invention may include a processor 110, a communication unit 120, a user interface unit 140, a display unit 150, and a memory 160.

First, the communication unit 120 transmits and receives a wireless signal such as a wireless LAN packet, or the like and may be embedded in the station 100 or provided as an exterior. According to the embodiment, the communication unit 120 may include at least one communication module using different frequency bands. For example, the communication unit 120 may include communication modules having different frequency bands such as 2.4 GHz, 5 GHz, 6GHz and 60 GHz. According to an embodiment, the station 100 may include a communication module using a frequency band of 7.125 GHz or more and a communication module using a frequency band of 7.125 GHz or less. The respective communication modules may perform wireless communication with the AP or an external station according to a wireless LAN standard of a frequency band supported by the corresponding communication module. The communication unit 120 may operate only one communication module at a time or simultaneously operate multiple communication modules together according to the performance and requirements of the station 100. When the station 100 includes a plurality of communication modules, each communication module may be implemented by independent elements or a plurality of modules may be integrated into one chip. In an embodiment of the present invention, the communication unit 120 may represent a radio frequency (RF) communication module for processing an RF signal.

Next, the user interface unit 140 includes various types of input/output means provided in the station 100. That is, the user interface unit 140 may receive a user input by using various input means and the processor 110 may control the station 100 based on the received user input. Further, the user interface unit 140 may perform output based on a command of the processor 110 by using various output means.

Next, the display unit 150 outputs an image on a display screen. The display unit 150 may output various display objects such as contents executed by the processor 110 or a user interface based on a control command of the processor 110, and the like. Further, the memory 160 stores a control program used in the station 100 and various resulting data. The control program may include an access program required for the station 100 to access the AP or the external station.

The processor 110 of the present invention may execute various commands or programs and process data in the station 100. Further, the processor 110 may control the respective units of the station 100 and control data transmission/reception among the units. According to the embodiment of the present invention, the processor 110 may execute the program for accessing the AP stored in the memory 160 and receive a communication configuration message transmitted by the AP. Further, the processor 110 may read information on a priority condition of the station 100 included in the communication configuration message and request the access to the AP based on the information on the priority condition of the station 100. The processor 110 of the present invention may represent a main control unit of the station 100 and according to the embodiment, the processor 110 may represent a control unit for individually controlling some component of the station 100, for example, the communication unit 120, and the like. That is, the processor 110 may be a modem or a modulator/demodulator for modulating and demodulating wireless signals transmitted to and received from the communication unit 120. The processor 110 controls various operations of wireless signal transmission/reception of the station 100 according to the embodiment of the present invention. A detailed embodiment thereof will be described below.

The station 100 illustrated in FIG. 3 is a block diagram according to an embodiment of the present invention, where separate blocks are illustrated as logically distinguished elements of the device. Accordingly, the elements of the device may be mounted in a single chip or multiple chips depending on design of the device. For example, the processor 110 and the communication unit 120 may be implemented while being integrated into a single chip or implemented as a separate chip. Further, in the embodiment of the present invention, some components of the station 100, for example, the user interface unit 140 and the display unit 150 may be optionally provided in the station 100.

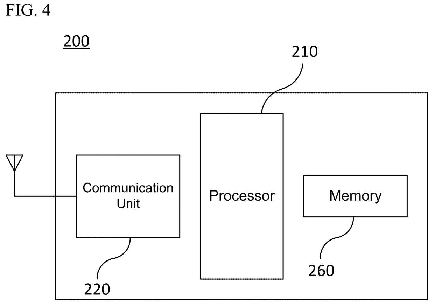

FIG. 4 is a block diagram illustrating a configuration of an AP 200 according to an embodiment of the present invention. As illustrated in FIG. 4, the AP 200 according to the embodiment of the present invention may include a processor 210, a communication unit 220, and a memory 260. In FIG. 4, among the components of the AP 200, duplicative description of parts which are the same as or correspond to the components of the station 100 of FIG. 2 will be omitted.

Referring to FIG. 4, the AP 200 according to the present invention includes the communication unit 220 for operating the BSS in at least one frequency band. As described in the embodiment of FIG. 3, the communication unit 220 of the AP 200 may also include a plurality of communication modules using different frequency bands. That is, the AP 200 according to the embodiment of the present invention may include two or more communication modules among different frequency bands, for example, 2.4 GHz, 5 GHz, 6GHz and 60 GHz together. Preferably, the AP 200 may include a communication module using a frequency band of 7.125GHz or more and a communication module using a frequency band of 7.125 GHz or less. The respective communication modules may perform wireless communication with the station according to a wireless LAN standard of a frequency band supported by the corresponding communication module. The communication unit 220 may operate only one communication module at a time or simultaneously operate multiple communication modules together according to the performance and requirements of the AP 200. In an embodiment of the present invention, the communication unit 220 may represent a radio frequency (RF) communication module for processing an RF signal.

Next, the memory 260 stores a control program used in the AP 200 and various resulting data. The control program may include an access program for managing the access of the station. Further, the processor 210 may control the respective units of the AP 200 and control data transmission/reception among the units. According to the embodiment of the present invention, the processor 210 may execute the program for accessing the station stored in the memory 260 and transmit communication configuration messages for one or more stations. In this case, the communication configuration messages may include information about access priority conditions of the respective stations. Further, the processor 210 performs an access configuration according to an access request of the station. According to an embodiment, the processor 210 may be a modem or a modulator/demodulator for modulating and demodulating wireless signals transmitted to and received from the communication unit 220. The processor 210 controls various operations such as wireless signal transmission/reception of the AP 200 according to the embodiment of the present invention. A detailed embodiment thereof will be described below.

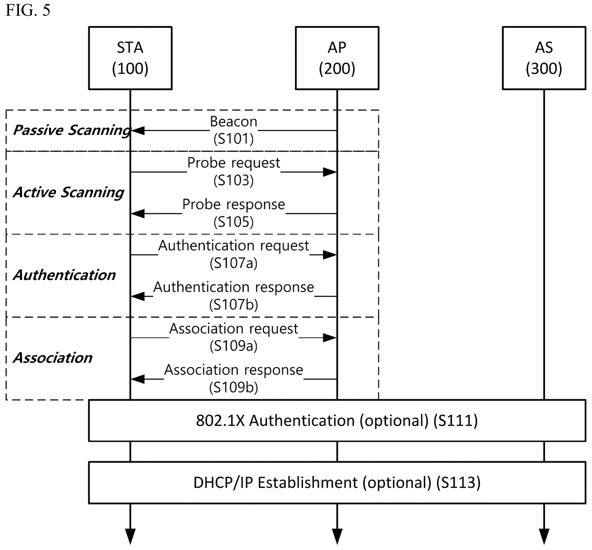

FIG. 5 is a diagram schematically illustrating a process in which a STA sets a link with an AP.

Referring to FIG. 5, the link between the STA 100 and the AP 200 is set through three steps of scanning, authentication, and association in a broad way. First, the scanning step is a step in which the STA 100 obtains access information of BSS operated by the AP 200. A method for performing the scanning includes a passive scanning method in which the AP 200 obtains information by using a beacon message (S101) which is periodically transmitted and an active scanning method in which the STA 100 transmits a probe request to the AP (S103) and obtains access information by receiving a probe response from the AP (S105).

The STA 100 that successfully receives wireless access information in the scanning step performs the authentication step by transmitting an authentication request (S107a) and receiving an authentication response from the AP 200 (S107b). After the authentication step is performed, the STA 100 performs the association step by transmitting an association request (S109a) and receiving an association response from the AP 200 (S109b). In this specification, an association basically means a wireless association, but the present invention is not limited thereto, and the association may include both the wireless association and a wired association in a broad sense.

Meanwhile, an 802.1X based authentication step (S111) and an IP address obtaining step (S113) through DHCP may be additionally performed. In FIG. 5, the authentication server 300 is a server that processes 802.1X based authentication with the STA 100 and may be present in physical association with the AP 200 or present as a separate server.

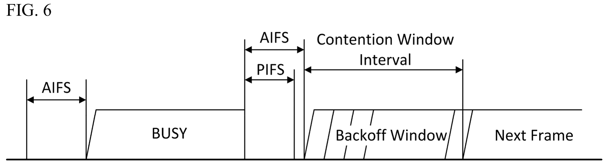

FIG. 6 is a diagram illustrating a carrier sense multiple access (CSMA)/collision avoidance (CA) method used in wireless LAN communication.

A terminal that performs a wireless LAN communication checks whether a channel is busy by performing carrier sensing before transmitting data. When a wireless signal having a predetermined strength or more is sensed, it is determined that the corresponding channel is busy and the terminal delays the access to the corresponding channel. Such a process is referred to as clear channel assessment (CCA) and a level to decide whether the corresponding signal is sensed is referred to as a CCA threshold. When a wireless signal having the CCA threshold or more, which is received by the terminal, indicates the corresponding terminal as a receiver, the terminal processes the received wireless signal. Meanwhile, when a wireless signal is not sensed in the corresponding channel or a wireless signal having a strength smaller than the CCA threshold is sensed, it is determined that the channel is idle.

When it is determined that the channel is idle, each terminal having data to be transmitted performs a backoff procedure after an inter frame space (IFS) time depending on a situation of each terminal, for instance, an arbitration IFS (AIFS), a PCF IFS (PIFS), or the like elapses. According to the embodiment, the AIFS may be used as a component which substitutes for the existing DCF IFS (DIFS). Each terminal stands by while decreasing slot time(s) as long as a random number determined by the corresponding terminal during an interval of an idle state of the channel and a terminal that completely exhausts the slot time(s) attempts to access the corresponding channel. As such, an interval in which each terminal performs the backoff procedure is referred to as a contention window interval. In this case, the random number may be referred to as a backoff counter. That is, an initial value of the backoff counter is configured by an integer corresponding to a random number acquired by the terminal. When the terminal detects that the channel is idle during a slot time, the terminal may reduce the backoff counter by 1. In addition, when the backoff counter reaches 0, the terminal may be allowed to perform channel access in the corresponding channel. Accordingly, when the channel is idle for a slot time of the backoff counter or an AIFS time, transmission of the terminal may be allowed.

When a specific terminal successfully accesses the channel, the corresponding terminal may transmit data through the channel. However, when the terminal which attempts the access collides with another terminal, the terminals which collide with each other are assigned with new random numbers, respectively to perform the backoff procedure again. According to an embodiment, a random number newly assigned to each terminal may be decided within a range (2*CW) which is twice larger than a range (a contention window, CW) of a random number which the corresponding terminal is previously assigned. Meanwhile, each terminal attempts the access by performing the backoff procedure again in a next contention window interval and in this case, each terminal performs the backoff procedure from slot time(s) which remained in the previous contention window interval. By such a method, the respective terminals that perform the wireless LAN communication may avoid a mutual collision for a specific channel.

<Examples of various PPDU formats>

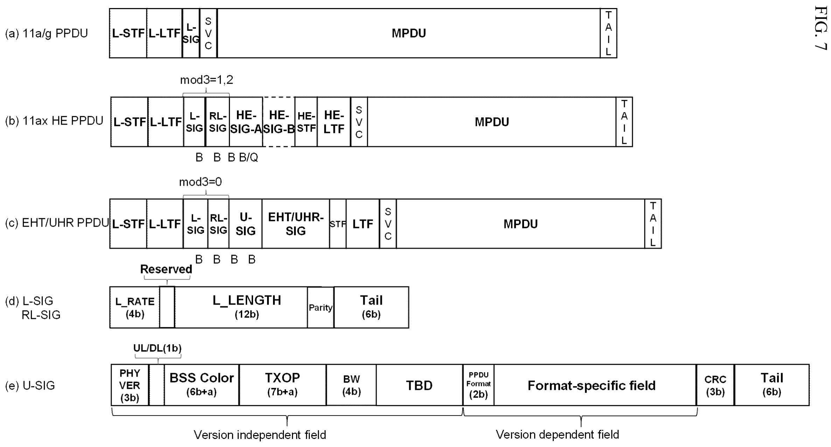

FIG. 7 illustrates physical layer protocol data unit (PPDU) formats of various standard generations according to an embodiment of the present disclosure.

More specifically, FIG. 7A illustrates an embodiment of a legacy PPDU format based on 802.11 a/g, FIG. 7B illustrates an embodiment of an HE PPDU format based on 802.11ax, and FIG. 7C illustrates an embodiment of a non-legacy PPDU (i.e., EHT PPDU) format based on 802.11be. Furthermore, FIG. 7D illustrates a detailed field configuration of an L-SIG and an RL-SIG commonly used in the PPDU formats.

Referring to FIG. 7(a), a preamble of the legacy PPDU includes a legacy short training field (L-STF), a legacy long training field (L-LTF), and a legacy signal field (L-SIG). In an embodiment of the present invention, the L-STF, the L-LTF, and the L-SIG may be referred to as a legacy preamble.

Referring to FIG. 7(b), a preamble of the HE PPDU additionally includes, in the legacy preamble, a repeated legacy short training field (RL-SIG), a high efficiency signal A field (HE-SIG-A), a high efficiency signal B field (HE-SIG-B), a high efficiency short training field (HE-STF), and a high efficiency long training field (HE-LTF). In an embodiment of the present invention, the RL-SIG, HE-SIG-A, the HE-SIG-B, the HE-STF and the HE-LTF may be referred to as an HE preamble. A specific configuration of the HE preamble may be modified according to an HE PPDU format. For example, HE-SIG-B may be used only in an HE MU PPDU format.

Referring to FIG. 7(c), a preamble of the EHT PPDU additionally includes, in the legacy preamble, a repeated legacy short training field (RL-SIG), a universal signal field (U-SIG), and an extremely high throughput signal A field (EHT-SIG-A), an extremely high throughput signal B field (EHT-SIG-B), an extremely high throughput short training field (EHT-STF), and an extremely high throughput long training field (EHT-LTF). In an embodiment of the present invention, the RL-SIG, EHT-SIG-A, the EHT-SIG-B, the EHT-STF and the EHT-LTF may be referred to as an EHT preamble. A specific configuration of a non-legacy preamble may be modified according to an EHT PPDU format. For example, EHT-SIG-A and EHT-SIG-B may be used only in a part of the EHT PPDU format.

As such, the PPDU used in the UHR standard may have a format similar to that of the PPDU used in the EHT standard. This is because the EHT PPDU format defined in 802.11be includes a U-SIG field that has been agreed to be commonly used by a plurality of wireless LAN generations. In this case, the value of the PHY Version Identifier field of the U-SIG field included in the EHT PPDU may be 0, and the value of the PHY Version identifier field of the U-SIG field included in the UHR PPDU may be 1, which is a value other than 0. The EHT PPDU includes an extremely high throughput short training field (EHT-STF) in the STF field, and includes an extremely high throughput long training field (EHT-LTF) in the LTF field. The UHR PPDU includes a UHR-STF (Ultra High Reliability Short Training field) in the STF field, and includes a UHR-LTF (Ultra High Reliability Long Training field) in the LTF field.

64-FFT OFDM is applied in an L-SIG field included in the preamble of the PPDU, and the L-SIG field includes a total of 64 subcarriers. Among 64 subcarriers, 48 subcarriers excluding a guard subcarrier, a DC subcarrier, and a pilot subcarrier are used for transmission of L-SIG data. BPSK and a modulation and coding scheme (MCS) of rate=1/2 are applied in L-SIG, and therefore the L-SIG may include a total of 24 bits of information. FIG. 7(d) illustrates a 24-bit information configuration of L-SIG.

Referring to FIG. 7(d), the L-SIG includes an L_RATE field and an L_LENGTH field. The L_RATE field includes 4 bits and indicates an MCS used for data transmission. Specifically, the L_RATE field indicates one value among transmission rates of 6/9/12/18/24/36/48/54Mbps obtained by combining a modulation scheme of BPSK/QPSK/16-QAM/64-QAM, etc. and an inefficiency of 1/2, 2/3, 3/4, etc. A total length of a corresponding PPDU may be indicated by combining information of the L_RATE field and information of the L_LENGTH field. In a non-legacy PPDU format, the L_RATE field is configured to a minimum rate of 6Mbps.

A unit of the L_LENGTH field is a byte and a total of 12 bits are allocated to signal up to 4095, and a length of the PPDU may be indicated in combination with the L_RATE field. A legacy terminal and a non-legacy terminal may interpret the L_LENGTH field in different ways.

Firstly, a method of interpreting the length of the PPDU by the legacy terminal and the non-legacy terminal by using the L_LENGTH field is described below. When a value of the L_RATE field is configured to indicate 6 Mbps, 3 bytes during 4 us which is one symbol duration of 64 FET (i.e., 24 bits) may be transmitted. Therefore, the 64 FET standard symbol number after an L-SIG is acquired by adding 3 bytes corresponding to a SVC field and a Tail field to the L_LENGTH field value and then dividing the same by 3 bytes which is a transmission amount of one symbol. When multiplying the acquired symbol number by 4 us which is one symbol duration and then adding 20 us which is consumed to transmit the L-STF, the L-LTF, and the L-SIG, the length of a corresponding PPDU, i.e., a receipt time (RXTIME) is acquired, which is expressed by Equation 1 below.

【Equation 1】

$$\mathbf{RXTIME(us)} = \left(\left\lceil \frac{\mathbf{L\_LENGTH+3}}{\mathbf{3}} \right\rceil \right) \times \mathbf{4} + \mathbf{20}$$

In this case, $\lceil x \rceil$ denotes the smallest natural number greater than or equal to x. Since the maximum value of the L_LENGTH field is 4095, the length of the PPDU can be set up to 5.464ms. The non-legacy terminal transmitting the PPDU should set the L_LENGTH field as shown in Equation 2 below.

【Equation 2】

$$\mathbf{L\_LENGTH(byte)} = \left(\left\lceil \frac{\mathbf{TXTIME-20}}{\mathbf{4}} \right\rceil \right) \times \mathbf{3} - \mathbf{3}$$

Herein, TXTIME is the total transmission time constituting the corresponding PPDU, and is expressed by Equation 3 below. In this case, TX represents the transmission time of X.

【Equation 3】

$$TXTIME(us) = T_{L-STF} + T_{L-LTF} + T_{L-SIG} + T_{RL-SIG} + T_{U-SIG} + (T_{EHT-SIG-A}) + (T_{EHT-SIG-B})$$
$$+ T_{EHT-STF} + N_{EHT-LTF} \cdot T_{EHT-LTF} + T_{DATA}$$

Referring to the above Equations, the length of the PPDU is calculated based on the ceiling value of L_LENGTH/3. Therefore, for any k value, three different values of L_LENGTH = {3k+1, 3k+2, 3(k+1)} indicate the same PPDU length.

Referring to FIG. 7(e), the U-SIG (Universal SIG) field persists in EHT/UHR PPDUs and subsequent generation wireless LAN PPDUs, serving to distinguish which generation PPDU it belongs to, including EHT/UHR. Additionally, the U-SIG field may facilitate spatial reuse for EHT/UHR and subsequent generation wireless LANs. The U-SIG may be a 64FFT-based OFDM 2 symbol, and may transmit a total of 52 bits of information. Of these, 43 bits, excluding the CRC/Tail 9 bits, are broadly divided into a version independent (VI) field and a version dependent (VD) field.

The VI bit may continue to maintain the current bit configuration in the future, so that even if a PPDU of a subsequent generation is defined, the current EHT/UHR terminals may obtain information about the PPDU through VI fields of the PPDU. To this end, a VI field includes PHY version, UL/DL, BSS color, TXOP, and reserved fields. The PHY version ID field is 3 bits and serves to sequentially distinguish EHT/UHR and subsequent generation wireless LAN standards by versions. The PHY version ID field of the EHT (11be) PPDU has a value of 000b, and the PHY version ID field of the UHR PPDU has a value other than 000b. The UL/DL field distinguishes whether the relevant PPDU is an uplink/downlink PPDU. The BSS color refers to a BSS-specific identifier defined in 11ax, and has a value of 6 bits or more. A TXOP refers to a transmit opportunity duration that has been transferred in a MAC header, and by being added to a PHY header, the length of the TXOP, in which the PPDU is included, may be inferred without the need to decode an MPDU, and has a value of 7 bits or more.

The VD field in EHT may indicate signaling information useful only for the 11be version PPDU, and may include a field that is commonly used in any PPDU format such as a PPDU format and BW, and a field that is differently defined for each PPDU format. The PPDU format is an identifier for distinguishing between EHT single user (SU), EHT multiple user (MU), EHT trigger-based (TB), EHT extended range (ER) PPDUs, and the like.

The BW field may signal 5 basic PPDU BW options of 20, 40, 80, 160 (80+80), and 320 (160+160) MHz (BW expressible in the form of $20 \times 2^n$ may be referred to as a basic BW), and various other PPDU bandwidths configured through preamble puncturing. In addition, after signaled as 320 MHz, the PPDU BWs may be signaled in the form in which some 80 MHz punctured. In addition, the punctured and modified channel formed may be signaled directly in a BW field, or may be signaled by using both the BW field and a field (for example, a field in the EHT-SIG field) that appears after the BW field. If the BW field is 3 bits, a total of 8 BW signaling options are possible, and thus in the puncturing mode, up to 3 BW signaling options may be signaled. If the BW field is 4 bits, a total of 16 BW signaling options are possible, and thus in the puncturing mode, up to 11 BW signaling options may be signaled.

The VD field of UHR is a field for indicating signaling information useful only for the UHR PPDU. However, the information indicated by each field included in the VD field of a UHR PPDU may be the same as information indicated by a field that plays the same role as the VD field of EHT (11be), or may be an extended form thereof. For example, a field indicating a puncturing pattern included in the VD field of the UHR PPDU may indicate more diverse types of patterns than a field indicating a puncturing pattern included in the VD field of the EHT PPDU. Alternatively, the field indicating the puncturing pattern included in the VD field of the UHR PPDU may be interpreted in combination with the BW field. This makes it possible to indicate more diverse types of puncturing patterns.

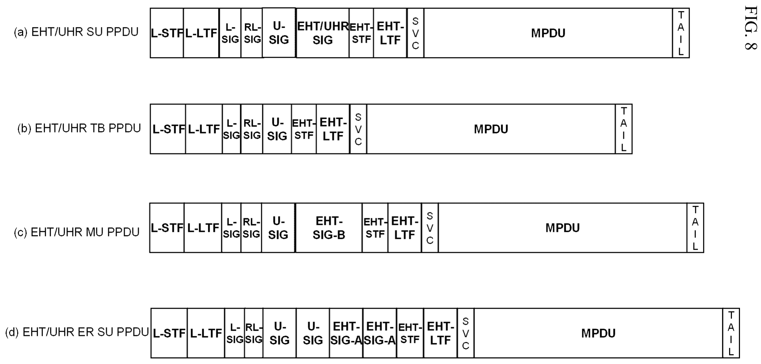

FIG. 8 illustrates an EHT/UHR PPDU format according to an embodiment of the present disclosure.

The EHT/UHR PPDU format may be indicated by the PPDU Format field of the U-SIG field of a PPDU. FIG. 8A illustrates an EHT/UHR SU PPDU according to an embodiment of the present disclosure. The EHT/UHR SU PPDU may be a PPDU used for single-user transmission between an AP and a single station, and may include an EHT-SIG-A field for additional signaling after U-SIG.

FIG. 8B illustrates an EHT/UHR trigger-based PPDU according to an embodiment of the present disclosure. The EHT/UHR trigger-based PPDU is an uplink PPDU used for transmission in response to a trigger frame, and may not have a separate EHT/UHR-SIG-A field after U-SIG.

FIG. 8C illustrates an EHT/UHR MU PPDU according to an embodiment of the present disclosure. The EHT/UHR MU PPDU is a PPDU used for transmission to one or more terminals. An EHT/UHR MU PPDU format may include HE-SIG-B after a U-SIG field.

FIG. 8D illustrates an EHT/UHR ER SU PPDU according to an embodiment of the present disclosure. The EHT/UHR ER SU PPDU is used for single-user transmission to a station in the extended range. An EHT/UHR ER SU PPDU format may have a U-SIG repeated in the time axis.

The EHT/UHR MU PPDU described with reference to FIG. 8C may be used by an AP to perform downlink transmission to a plurality of stations. In this case, the EHT/UHR MU PPDU may include scheduling information for multiple stations to simultaneously receive the PPDU. In this case, the EHT/UHR MU PPDU may transfer AID information of a receiver or transmitter of the PPDU through a user-specific field of the EHT/UHR-SIG-B. A station that has received an EHT/UHR MU PPDU may perform a spatial reuse operation, based on the AID information acquired from the PPDU's preamble. More specifically, the resource unit allocation (RA) field of the EHT/UHR-SIG-B may include information about a resource unit (RU) division form in a specific bandwidth (e.g., 20 MHz) in the frequency domain. In addition, information about a station designated for each divided resource unit may be transferred through a user-specific field of the EHT/UHR-SIG-B. The user-specific field may include one or more user fields corresponding to each divided resource unit.

An AID of a receiver or a transmitter may be inserted in a user field corresponding to a resource unit in which data transmission is performed, among the multiple divided resource units. A pre-designated null STA ID may be inserted into a user field corresponding to the remaining resource units in which data transmission is not performed.

Two or more PPDUs described with reference to FIG. 8 may be indicated by the same PPDU format. For example, the value of the U-SIG PPDU format subfield indicating an EHT/UHR SU PPDU and the value of the U-SIG PPDU format subfield indicating an EHT/UHR MU PPDU may equal.

Some of the fields included in the PPDU format described above, or some information of the fields, may be omitted. This may be referred to as a compression mode or a compressed mode.

< Method for channel access of Wi-Fi terminal >

Wi-Fi terminals (AP, non-AP STA, etc.) perform communication by using an unlicensed band, and thus, before performing frame transmission, identify whether a channel on which the terminals intend to use for transmission is being used by another device. Carrier sense multiple access (CSMA) is a channel access method in which a terminal intending to transmit a packet performs carrier sense to determine whether a channel is being used by another device, and performs transmission only when the channel is determined to be not being used by the other device (idle). A terminal using CSMA, when a medium (channel) is identified as being used at least another device (is determined to be busy), may perform an operation that avoids attempting transmission, and therefore, a transmission started first may be protected from other device.

However, when multiple terminals that have discovered that a medium has been occupied by another device attempt to transmit packets simultaneously when the medium occupation by the other device is confirmed to have ended (the medium becomes idle), thereby experiencing a transmission collision. That is, when a specific terminal attempts to transmit a packet and concurrently multiple other terminals also attempt to transmit packets, a terminal that should receive the packet transmitted by the specific terminal may fail to properly receive and decode the packet to be received, due to interference caused by the transmission performed by the multiple other terminals.

As described above, CSMA with collision avoidance (CSMA/CA) is a channel access mechanism that prevents multiple terminals, having detected the medium becoming idle, from attempting packet transmission simultaneously. Terminals that access a medium (channel) by using CSMA/CA attempt transmission after waiting for a random time, when the state of the medium observed by the terminals becomes idle. The random time may be aslottime (which may be 9 us in general) multiplied by a random number (random backoff counter) generated by each terminal attempting transmission. That is, unlike in the case of using only CSMA, the terminals that access the medium by using CSMA/CA attempt transmission at different times because the terminals wait for different random times before attempting transmission. In this case, when a specific terminal having waited for the shortest random time after the medium becomes idle attempts the first transmission, other terminals may stop the channel access procedure after discovering that the medium has been occupied (become busy) by the specific terminal. In this case, the specific terminal may perform an operation of decrement the backoff counter maintained by the specific terminal by 1 at each aslottime while the medium remains idle, and may attempt transmission when the backoff counter reaches 0 or, alternatively, when the aslottime has passed after the backoff counter has reached 0. In this case, the specific terminal that has performed the transmission may generate a new random number (a new backoff counter) after the transmission is completed, and then may attempt transmission when the new random number again reaches 0 or after the new random number reaches 0.

The above-mentioned CSMA/CA and random backoff procedures are commonly applied to basic functions used when Wi-Fi terminals attempt channel access, i.e., a distributed coordination function (DCF) and an enhanced distributed channel access (EDCAF). The procedures are well-known and widely used unlicensed band channel access methods, and thus a more detailed description thereof will be omitted.

The DCF and the EDCAF used by a Wi-Fi terminal's MAC evaluate the channel status by considering not only the channel state (idle or busy) that has been directly identified by each terminal by performing a physical carrier sense (CS) but also the result of a virtual CS (virtual CS). More specifically, even if the result of physical (physical) CS performed for a channel is idle, the Wi-Fi terminal considers the channel state to be busy if a virtual CS result is busy. In this case, the virtual CS is a channel evaluation method for determining a channel to be busy when the network allocation vector (NAV) is not 0. The NAV may be a value maintained for future traffic that is predicted to occupy a medium. More specifically, when the Wi-Fi MAC has received an RTS/CTS frame, the MAC may configure an NAV (NAV count) based on duration information of the received frame, for example, the value of a duration field, and may maintain the NAV as a value other than 0 during the time in which the medium is expected to be occupied after RTS/CTS frame exchange. That is, a value maintained by the NAV is reduced as time passes. If a specific MAC has an NAV value of 0, it may be interpreted that the medium is no longer occupied by the future traffic that the specific MAC had discovered. If the NAV is 0, the MAC may determine the virtual CS result to be idle. In this case, the Wi-Fi MAC may configure the NAV, not only based on the RTS/CTS frame, but also based on a duration value acquired from another received MAC frame.

The channel evaluation method (determine the state of the medium) that considers both the physical CS and virtual CS results, briefly described above, is also one of well-known Wi-Fi MAC functions, and thus a detailed explanation thereof will be omitted.

<EDCA and TXOP>

EDCA provides a mechanism to manage traffic by differentiating the traffic into four types of access categories (ACs) according to the characteristics of the traffic. In this case, the four types of ACs may be AC_VO (AC Voice), AC_VI (AC Video), AC_BE (AC Best effort), and AC_BK (AC Background), and the ACs may have different contention windows (CWs), transmit opportunity (TXOP), and AIFSN parameters. In short, EDCA is a mechanism for differentiating CWs, TXOP, and AIFSN parameters for four types of ACs and adjusting the transmission priority of traffic transmitted by using each AC. To this end, EDCA may map traffic (MSDU) that the MAC should service to one of the four ACs according to a traffic category (TC) or a traffic stream (TS). The traffic mapped to one of four ACs by EDCA is managed separately in four queues for respective ACs. In this case, the four queues may be logically separated queues, rather than physically separated queues.

AC_VO may be an AC to be used for traffic which, like such as voice traffic, is not large in the absolute amount of traffic but is vulnerable to transmission delay, and has relatively small CW and AIFSN parameter values in order to increase the probability of being preferentially served compared to the traffic of other ACs. The TXOP parameter of AC_VO is limited to a value relatively smaller than the TXOP parameters of other ACs, and thus, only a short transmission time is ensured compared to other ACs.

AC_VI is an AC that can be used for traffic, such as video, which is more tolerant to transmission delays than voice traffic but still requires low-latency transmission and in which a large volume of traffic is required to be processed. AC_VI has CW and AIFSN parameter values that are larger than those of AC_VO but smaller than those of other ACs, and instead, the TXOP is approximately twice as long as that of AC_VI.

AC_BE is an AC that may be used for traffic tolerant to transmission delay, and most general traffic excluding voice data and streaming video data, may be classified as AC_BE. AC_BE uses CW and AIFSN parameters having values larger than those of AC_VO and AC_VI. In addition, AC_BE does not have a separate TXOP. Therefore, traffic corresponding to AC_BE cannot be used in a TXOP transmission sequence in which a PPDU is transmitted, an ACK is received in response thereto, and then a PPDU is transmitted again after SIFS.

AC_BK is an AC that may be used for traffic which is tolerant to transmission delay, like AC_BE, but has a lower priority than BE traffic. AC_BK uses the same CW parameter value as AC_BE, and uses a larger AIFSN parameter value than AC_BE. In addition, traffic corresponding to AC_BK, like AC_BE, does not have a separate TXOP and thus may not be used in a TXOP transmission sequence.

The four types of EDCA ACs are mapped to the user-priority (UP) of 802.1D, and the EDCA AC is determined according to the UP value of traffic received through a wire or the TID of an MSDU indicated from the upper layer. In this case, when the TID of the MSDU indicates a value of 0 to 7, the value indicated by the TID may be mapped one-to-one to the UP.

Furthermore, the four types of EDCA ACs have respective default CW (CWmin, CWmax), AIFSN, and TXOP parameters defined in the standard, and the parameter values of each AC may be changed by the AP, allowing different values to be used for each BSS.

By using the EDCA mechanism, Wi-Fi traffic may be stored in one of the four queues corresponding to the four ACs, and may be transmitted to a destination device only when the AC including the traffic wins the channel access competition against other ACs. In this case, each AC performs competition by using the access parameters (CW[AC], AIFSN[AC]) allocated to the AC in the channel access competition between the ACs, and the channel access competition operation performed by each AC is the same as that of DCF. In this case, if a specific AC has no traffic to be transmitted to the queue, the specific AC may not participate in the competition.

However, as described above, the CW and AIFSN parameter values used by the ACs are different, and thus the AC_VO having the smallest CW and AIFSN parameters has a high probability of winning in channel access competition with other ACs, and therefore, the traffic of AC_VO is likely to be preferentially served over the traffic of other ACs.

Furthermore, the EDCA mechanism defines internal competition rules, such as allowing a high-priority AC to win when an (internal) collision occurs between the ACs and increasing the CW of other ACs that caused the collision, and rules for constructing a PPDU including traffic of other ACs other than the AC which has won the competition (the primary AC). However, since the rules are not closely related to the proposal of the present disclosure, a detailed description thereof will be omitted.

EDCA provides, in addition to the function of operating a differentiated AC according to the type of traffic (frame, packet, etc.) for QoS enhancement as described above, an EDCA transmission opportunity (EDCA TXOP) function. An EDCA TXOP refers to a time during which, when an EDCA function (EDCAF) of a specific AC has acquired a channel access opportunity, i.e., has become a TXOP holder, a medium can be controlled without being disturbed by other devices during the TXOP duration. In this case, the EDCA TXOP may be limited by a TXOP limit advertised by an AP. The TXOP holder should ensure that the TXOP holder's transmission and transmission of a response frame in response to the TXOP holder's transmission are completed within the TXOP limit.

The TXOP holder may transmit multiple frames (multiple PPDU) during the EDCA TXOP duration. When the transmission of each frame is performed within the obtained TXOP duration, the TXOP holder may continuously transmit multiple frames without performing a separate channel access procedure, for example, a backoff procedure, between transmissions of the frames. In this case, when the multiple frames are MPDUs or aggregated MAC protocol data units (A-MPDUs) that do not request immediate ACK, the transmission of the multiple frames may be performed at a short interframe space (SIFS) or reduced interframe space (RIFS) interval. In this case, when there is an MPDU or A-MPDU requesting an immediate ACK among the multiple frames, the TXOP holder may transmit the frame requesting the immediate ACK, receive the ACK, and then transmit the next frame after SIFS.

In this case, when traffic (packet, frame, etc.) of another AC other than the specific AC which is the TXOP holder satisfies a specific condition, the traffic may be also transmitted within the TXOP acquired by the TXOP holder (the specific AC). The transmission of the traffic of the AC other than the TXOP holder within the TXOP may be an operation by TXOP sharing between the ACs, and details regarding the specific condition are unrelated to the present disclosure, and thus will be omitted.

As described above, a TXOP holder may perform continuous frame transmission without performing a separate channel access procedure within the TXOP. This may be an operation that may be achieved when other terminals understand and protect the TXOP duration acquired by the TXOP holder. That is, to acquire a medium control right regarding the EDCA TXOP duration, the TXOP holder may need a procedure to notify other terminals of the acquired TXOP duration so that the other terminals can discover the TXOP duration.

To this end, a terminal (AC) that has become a TXOP holder, or that has completed a channel access procedure and has started transmission, may attempt to transmit an RTS frame to allow another terminal to discover the TXOP duration. In this case, the RTS frame refers to a frame in which the Type subfield (fourth bit B3 and third bit B2) of the Frame Control field of an MAC frame header is set to 01b (Type = control frame), and the Subtype subfield (eighth bit B7, seventh bit B6, sixth bit B5, and fifth bit B4) of the Frame Control field is set to 1011b. The other terminal that has received the RTS frame from the TXOP holder may configure a NAV, based on information regarding a duration included in the RTS frame, for example, a value of a duration field. The configured NAV may be maintained at a value other than 0 during a time corresponding to the TXOP of the TXOP holder. However, a terminal indicated as a destination device of the RTS frame must respond to a CTS frame, instead of configuring the NAV, based on the information of the RTS frame. In this case, the destination device of the RTS frame transmitted to start the TXOP is a TXOP responder, and must transmit a CTS frame (after the RTS frame is received and after SIFS) in response to the RTS. In this case, the duration field of the responding CTS frame is set to a value calculated by: a value indicated by the duration field of the received RTS frame - CTS frame transmission time - SIFS. Terminals having received the CTS frame may configure a NAV, based on information (e.g., the value of the duration field) related to the duration included in the CTS frame.

Therefore, the NAV of a terminal that has received an RTS frame from the TXOP holder and the NAV of a terminal that has received a CTS frame from the TXOP responder are configured to be 0 after the TXOP obtained by the TXOP holder ends. Through this, the Wi-Fi MAC mechanism may protect the TXOP holder and the TXOP responder so that the TXOP holder and the TXOP responder can exchange multiple frames without being disturbed during the TXOP.

However, in a case where the TXOP holder transmits the RTS frame as a non-HT duplicate PPDU over the primary 80 MHz bandwidth, but the CTS frame (non-HT duplicate PPDU) responded by the TXOP responder is responded only in the primary 40 MHz bandwidth, the TXOP holder may use only a bandwidth of the primary 40 MHz or less than the primary 40 MHz, for example, the primary 20 MHz, for frame exchange during the acquired TXOP. The CH_BANDWIDTH (a type of TXVECTOR parameter) of the PPDU transmitted by the TXOP holder should be configured to be a value equal to or smaller than the CH_BANDWIDTH_IN-NON_HT (a type of RXVECTOR parameter) of the received CTS frame. In this case, the RTS frame may be an RTS frame that allows a CTS frame to be responded in a BW smaller than a BW in which the RTS frame is transmitted. The RTS frame may be an RTS frame transmitted with DYN_BANDWIDTH_IN_NON_HT (a type of TXVECTOR parameter) dynamically configured. If DYN_BANDWIDTH_IN_NON_HT is statically configured and an RTS frame is transmitted from the TXOP holder, the TXOP responder may be required to respond with a CTS frame by using the same BW as a BW in which the RTS frame has been received.

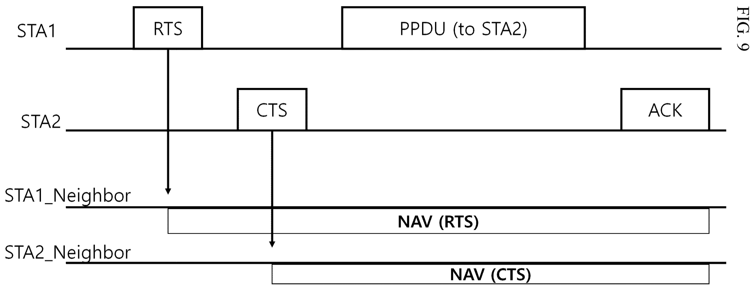

FIG. 9 illustrates a transmission/TXOP protection method using an RTS frame and a CTS frame according to an embodiment of the present disclosure.

Before transmitting a PPDU, a first station (STA1) transmits an RTS frame to a second station (STA2) which is a destination device of the PPDU, and the second station (STA2) may respond with a CTS frame after discovering that the received RTS frame is an RTS frame indicating the second station as a destination device and after SIFS.

STA1_Neighbor, which is a neighboring station (Neighbor STA) of the first station (STA1), receives the RTS frame transmitted by the first station (STA1), and then configures an NAV, based on a value indicated by the duration field of the RTS frame. STA2_Neighbor, which is a neighboring station of the second station (STA2), receives the CTS frame transmitted by the second station (STA2), and then configures an NAV, based on information indicated by the duration field of the CTS frame. STA1_Neighbor and STA2_Neighbor, after receiving the RTS/CTS frame, determine that a virtual CS is not busy while the configured NAV (counter) is maintained at a value other than 0, and perform an operation such as not reducing a backoff counter. As a result, a neighbor terminal having received the RTS/CTS frame does not attempt transmission during a duration in which the NAV is maintained at a value other than 0. Therefore, the first station (STA1) and the second station (STA2) may not be disturbed by neighboring terminals during the exchange of a PPDU and an Ack frame.

Even if the first station (STA1) and STA2_Neighbor are in a hidden relationship in which signals from each other's transmissions are not detected, STA2_Neighbor can perform an operation considering that a channel (WM, wireless medium) is in use while the first station (STA1) transmits a PPDU.

<TXOP Protection Using MU-RTS Trigger Frame>

11ax (6th generation Wi-Fi, Wi-Fi6, HEW, High Efficiency WLAN) defines an MU-RTS trigger/CTS frame exchange procedure and adds a function allowing an AP to start a TXOP and protect a TXOP frame exchange procedure by using an MU-RTS trigger frame (hereinafter, MU-RTS or MU-RTS frame). The MU-RTS frame is a type of trigger frame, and a station that receives an MU-RTS frame and has AID12 (LSB 12 bits of the association ID) indicated by the user field included in the MU-RTS frame responds with a CTS frame at the same time. When the AP uses an MU-RTS frame to protect a TXOP, multiple stations respond with CTS frames, and thus the TXOP may be protected from neighboring devices of the multiple stations, which are the destination devices of a downlink multi user PPDU ((DL MU) PPDU). In addition, the MU-RTS frame may be used to protect a UL MU PPDU. More specifically, before requesting a trigger based (TB) PPDU from multiple stations through a trigger frame, the AP may transmit an MU-RTS frame to cause the multiple stations, which will respond with the TB PPDU, to respond with a CTS frame. In this case, the CTS frames responded by the multiple stations may induce the neighboring station of each station to configure a NAV so as to protect a TB PPDU and an Ack frame (Ack, Block Ack, etc.) to be transmitted after the TB PPDU, and thus legacy stations (STAs) which cannot discover (interpret, decode) the trigger frame and the TB PPDU may not perform channel access during a packet exchange sequence period (or TXOP) initiated via the trigger frame.

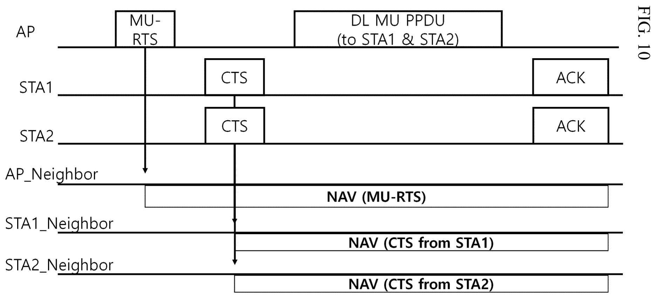

FIG. 10 illustrates a transmission/TXOP protection method using an MU-RTS frame and a CTS frame according to an embodiment of the present disclosure.

In the embodiment of FIG. 10, before transmission of a MU PPDU, an AP transmits an MU-RTS frame to a first station (STA1) and a second station (STA2) which are the destination devices of the MU PPDU, and the first station (STA1) and the second station (STA2) receive the MU-RTS frame, and each of the stations responds to the MU-RTS frame by using a CTS frame after SIFS.

A neighboring station STA1_Neighbor of the first station (STA1) receives a CTS frame transmitted by the first station (STA1), and then configures an NAV, based on information indicated by the duration field of the CTS frame. A neighboring station STA2_Neighbor of the second station STA2 receives a CTS frame transmitted by the second station STA2, and then configures a NAV, based on information indicated by the duration field of the CTS frame. While Virtual CS (virtual carrier sense) is determined to be busy while the NAVs (counter) configured after reception of the CTS frames are maintained at a value other than 0, STA1_Neighbor and STA2_Neighbor determines virtual carrier sense (virtual CS) and perform an operation such as not reducing a backoff counter. Therefore, each of the neighboring terminals that have received the CTS frames does not attempt transmission during the duration in which the NAV is maintained at a value other than 0. Through this, the AP may transmit an MU PPDU, and the first station (STA1) and the second station (STA2) may not be disturbed by the neighboring terminals while transmitting Ack frames.

The trigger frame described above is a frame type defined in 11ax, in which type (the fourth bit B3 and the third bit B2) and subtype (the eighth bit B7, the seventh bit B6, the sixth bit B5, and the fifth bit B4) subfields of a Frame Control field are configured to be 01b and 0010b, respectively. The trigger frame is a control type frame in which the type subfield of the Frame Control field is 01b, and a subtype value, 0010, indicates a trigger frame type. 11ax defines a trigger frame such that an AP may request response frames from multiple stations at one time, and an MU-RTS frame is used by the AP to request a CTS frame from multiple stations (non-AP STAs). Trigger types other than the MU-RTS frame include a basic trigger frame which requests a UL MU PPDU, a beamforming report poll (BRP) trigger frame which requests a beamforming report, an MU-BAR trigger frame which requests BlockAck, a buffer status report poll (BSRP) trigger frame which requests a buffer status report), a GCR MU-BAR trigger frame, a bandwidth query report poll (BQRP) trigger frame, and a NDP feedback report poll trigger frame. The trigger types other than the MU-RTS frame are not related to the subject matter of the present disclosure, and thus a detailed description thereof will be omitted.

<Transmission delay problem occurring during the time when a medium is occupied >

As described above, in conventional Wi-Fi, an STA (an AP and a non-AP STA) having acquired a channel access right may transmit and receive frames with other STAs during an acquired transmission opportunity (TXOP) duration, without being disturbed by other STAs. A network allocation vector (NAV) which is maintained at a value of other than 0 during a time period corresponding to the TXOP may be used to achieve TXOP protection by which an STA can transmit and receive a frame without being disturbed by other STAs.

Due to NAV configuration in Wi-Fi, the conventional NAV configuration method, which was considered to guarantee the right of an STA having acquired a TXOP (i.e., a TXOP holder), has an aspect that makes it difficult to achieve low-latency transmission targeted in UHR. Specifically, a channel access procedure of an STA for low-latency traffic may be interrupted due to a NAV configured by a frame transmitted by another STA. Therefore, the transmission time of the low-latency traffic is delayed as a result. That is, the conventional Wi-Fi channel access mechanism, which stops a channel access procedure in order to protect a TXOP of another STA, may act as a factor that disturbs the transmission of low-latency traffic which needs to be completed within a short time. In addition, when a PPDU transmitted by a specific STA occupies a medium for a very long time, that is, when the specific STA transmits a large PPDU, channel access of other STAs is restricted during the time in which the PPDU occupies the medium. If a channel access procedure of an STA that needs to transmit low-latency traffic is delayed by a long PPDU being transmitted by another STA, the low-latency traffic may not be transmitted in a timely manner.

Therefore, in order to enhance support for low-latency traffic, which is a target of UHR, it is necessary to introduce methods for solving the channel access delay problem caused by the medium being occupied by another STA.

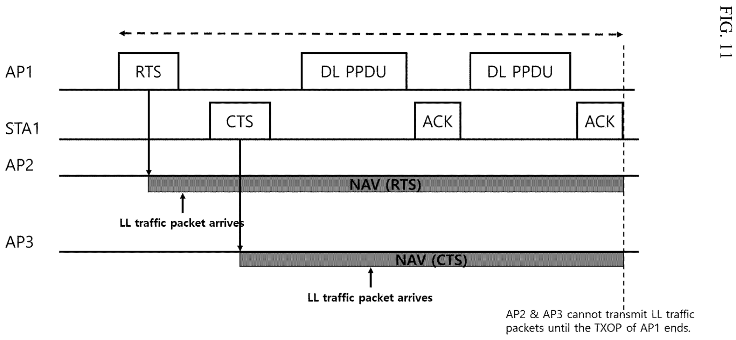

FIG. 11 illustrates an example where transmission of low-latency traffic of other APs is delayed by the TXOP of an AP according to an embodiment of the present disclosure.

Referring to FIG. 11, transmission by AP 2 and AP 3 may be delayed by a TXOP configured by a frame (e.g., an RTX frame) transmitted by AP 1.

Specifically, as illustrated in FIG. 11, after acquiring a channel access right, AP1 may transmit an RTS frame to STA1 and receive a CTS frame in response from STA1, thereby becoming a TXOP holder. AP1 may transmit DL PPDUs to STA1 during the TXOP and receive an Ack frame. During the time period in which AP1 has obtained TXOP, AP2 and AP3 each have a NAV configured by the RTS frame and the CTS frame, and thus the NAV does not reach 0 until the TXOP of AP1 ends. Therefore, even though a LL traffic packet (a traffic packet requesting low latency) has been generated after receiving the RTS frame, channel access is restricted until AP1's TXOP ends, and thus, AP2 cannot process low-latency traffic. Also, it is impossible for AP to process the low-latency traffic packet generated after receiving the CTS frame until the TXOP of AP1 ends.

<Multi-AP Cooperation Operation>

The reason for introducing the TXOP concept in conventional Wi-Fi is to ensure that an STA having acquired a channel access right can continue a frame exchange sequence for a predetermined time without being disturbed by another STA. Through this, when each STA has obtained a channel access right, the STA may secure as much frame exchange time as required by the STA within the maximum time limit (TXOP limit). This is a method which, by securing minimum throughput obtainable through a single channel access procedure, allows each of the STAs to perform a more energy-efficient operation. However, in terms of supporting low-latency transmission which is a target of UHR, the phenomenon that channel access of other STAs is restricted during a TXOP acquired by a specific STA may act as a problem that makes it difficult to support low-latency transmission. Therefore, in UHR, the conventional TXOP acquisition and operation methods must be appropriately adjusted to guarantee that low-latency transmission of each of the STAs is performed in a timely manner.

In UHR, which is a next-generation standard, an operation in which APs enhance the service for the respective BSSs by coordination between APs, or enhance the service for an STA located in the edge of the coverage of a specific AP in which the signal attenuation is large, is being reviewed. In particular, methods for improving the stability and increasing the wireless LAN efficiency by sharing a wireless resource (frequency resource and/or time resource) and/or coordinated transmission (cooperative transmission for a single STA) between APs performing a coordinated operation are being developed.

As an example of sharing wireless resources between APs, a part of the time and frequency resources of a TXOP acquired by a specific AP may be allocated (shared) to another AP, and the other AP may perform services for STAs belonging to the other AP's BSS by using the allocated resources. This may be enabled by requirements-related information exchanged between the specific AP having acquired the TXOP and the other AP. More specifically, the other AP may notify the specific AP in advance of information regarding a time at which the other AP should perform transmission and the amount of required radio resources (e.g., frequency BW or resource unit (RU)). The specific AP may, when having acquired the TXOP, allocate (share) the radio resource acquired by the specific AP to (with) the other AP, based on the information previously provided by the other AP. In this case, the specific AP which has obtained the TXOP (is a TXOP holder of) may be referred to as a sharing AP, and the other AP which has been allocated (shared) a wireless resource from the specific AP may be referred to as a shared AP.

As described above, the process in which APs exchange information about wireless resources required by APs may be understood as a multi-AP coordination process. In addition, an operation of a specific AP to allocate (share) the obtained radio resource in consideration of a requirement of another AP, and an operation of the other AP to perform transmission by using the same may be a multi-AP coordinated operation.

<Multi-AP Cooperation Method for Low-Latency Traffic Service>

Furthermore, multiple APs performing a coordination operation may perform further coordination for supporting services for low-latency traffic. For example, each AP may exchange information about the amount of low-latency traffic to be served by the AP and quality-of-service (QoS) requirements, or exchange information related to R-TWT SP operated by the AP in the AP's BSS, to request another AP to perform an operation considering the low-latency traffic to be processed by the AP.

For example, a first AP may indicate, to a second AP performing a coordination operation, the start point and the length of the R-TWT SP that the first AP is operating in the first AP's BSS, and information related to the period of the R-TWT SP. In this case, if the second AP has acquired TXOP, the second AP may terminate the TXOP before the R-TWT SP of the first AP starts, thereby allowing the first AP to serve low-latency traffic during the R-TWT SP. That is, when the second AP receives a request frame requesting channel coordination from the first AP, the second AP may terminate the TXOP that the second AP has acquired, before the start of a specific period (e.g., an R-TWT SP) for transmission of low-latency traffic of the first AP, which is included in the request frame, based on the start time of the specific period, the length of the specific period, and the configuration interval of the specific period.

<Multi-AP Cooperative Puncturing Method for Low-Latency Traffic Service>

As part of a multi-AP cooperation operation, APs that have occupied a medium may occupy the medium in a pre-coordinated manner. That is, each AP may obtain a TXOP or transmit a PPDU without occupying a specific band, based on information exchanged in advance, in order to allow another AP to access the medium.

In other words, each of the APs may coordinate a channel for channel access with each of other APs for transmission and reception of traffic for low-latency transmission, and each of the APs may use the channel for channel access (or traffic transmission and reception) for a specific time (e.g., an R-TWT period) even when the channel has a TXOP configured by another AP through a coordination procedure. For example, when the first AP has configured a TXOP through frame transmission/reception with a first non-AP STA, the second AP may need to transmit/receive low-latency traffic with a second non-AP STA within the configured TXOP. In this case, due to the TXOP duration already configured by the first AP, the second AP may not transmit or receive the low-latency traffic until the TXOP ends. However, in the case of low-latency traffic, there is a requirement that delay in transmission and reception of the traffic should be short, and thus, when the TXOP is long, a problem may occur in transmitting and receiving the traffic. Therefore, in this case, the second AP may transmit a frame (for example, a request frame or a beacon frame) requesting the first AP not to occupy a channel for transmitting/receiving the low-latency traffic (e.g., a primary channel for performing channel access for serving the low-latency traffic). In this case, the request frame may include the BSSID of the second AP, a MAC address, and/or information about a channel for transmission and reception of low-latency traffic (e.g., channel information for channel access, etc.).

When the first AP receives a frame from the second AP, the first AP may not occupy the corresponding channel, based on information included in the frame. In this case, a method for not occupying the corresponding channel may include using puncturing of the corresponding channel, or transmitting, to non-AP STAs, information indicating that the corresponding channel is disabled. A channel for low-latency traffic may be used within a TXOP only in a specific period (for example, an R-TWT period, etc.). In other words, in a period that does not overlap the TXOP duration configured by the first AP, the second AP may freely transmit and receive low-latency traffic. Therefore, in a period overlapping a specific period in the TXOP, the second AP may use a channel for low-latency traffic through coordination with the first AP with regard to the channel.

That is, a specific channel may be prevented from being occupied by the first AP during a specific period through a channel coordination procedure, and may be used to serve low-latency traffic by the second AP. In other words, even when the first AP is able to occupy or use a specific channel, when a coordination procedure with the second AP is performed, the first AP may not occupy the specific channel, and the second AP may use the specific channel to transmit and receive low-latency data.

For example, when the first AP acquires a TXOP, the first AP may acquire the TXOP in a manner that the first AP's primary channel is not occupied, in case that the TXOP is predicted to overlap the R-TWT SP of the second AP in time. Therefore, even if the TXOP of the first AP is in progress, it is possible for the second AP to serve low-latency traffic in the R-TWT SP after completing a channel access procedure performed by the second AP, because the second AP has not occupied the second AP's primary channel.

Specific operation procedures will be described in more detail through an embodiment of the present disclosure described later. In addition, for convenience of description, a procedure performed between two APs (the first AP and the second AP) will be mainly described, but each AP in an AP group including multiple APs may perform a coordination operation described later with each AP, or may perform the coordination operation with multiple APs at the same time. That is, the coordination procedure and coordination operations performed by the first AP and the second AP may be identically/similarly applied to coordination procedures and coordination operations performed between the first AP and multiple second APs.

The first AP and the second AP may perform a coordination operation in which, through prior coordination, they promise not to occupy a BW including each other's primary channel. To this end, when acquiring a TXOP, the first AP and the second AP may acquire the TXOP in a manner in which a specific BW including the primary channel of the counterpart AP is not occupied. An AP's channel occupancy operation as described above may be applied permanently regardless of the presence or absence of the R-TWT SP of a counterpart AP, or may be applied on the basis of an indication performed by another method.

That is, when there is an indication performed through another method, the first AP may acquire a TXOP only in a manner in which the first AP does not occupy a specific BW including the primary channel of the second AP. To this end, the first AP and the second AP may need to exchange information regarding the position of each other's primary channel in advance. In this way, when acquiring a TXOP, an AP does not occupy a specific BW (for example, 80 MHz, 40 MHz, or 20 MHz) including the primary channel of a counterpart AP, thereby enabling a counterpart AP to perform channel access via the primary channel. In this case, the method for avoiding occupying the specific BW band including the counterpart AP's primary channel may be to limit the BW of a TXOP acquired by the counterpart AP (for example, occupy only a 160 MHz band in a situation where 320 MHz band occupancy is possible), or to puncture (preamble-puncture) the band including the primary channel of the counterpart AP. In this case, a PPDU transmission method that does not occupy the specific BW band including the primary channel of counterpart AP may be understood to be a PPDU transmission method employing coordinated puncturing. In this case, a PPDU configured by a specific AP by applying coordinated puncturing may have a configuration in which a preamble puncturing is applied or a BW is limited in order to avoid occupying a specific BW band including the primary channel of another AP. In this case, the coordinated puncturing may be applied on a TXOP basis, on a PPDU basis, or based on a negotiation procedure performed between two APs.

That is, when acquiring a specific TXOP, the first AP may obtain the TXOP excluding a specific BW including the primary channel of the second AP. That is, when the first AP transmits a specific PPDU, the first AP may transmit the PPDU excluding a specific BW including the primary channel of the second AP. That is, based on the negotiation with the second AP, the first AP may access and occupy a channel excluding a specific BW including the primary channel of the second AP.

In the case in which the coordinated puncturing is applied on a PPDU basis, the first AP may occupy a band including the second AP's primary 20 MHz channel when acquiring a TXOP, and apply the coordinated puncturing from a specific PPDU transmitted while the TXOP is ongoing.

For example, the first AP may transmit a first PPDU, transmitted within the TXOP, in a manner in which the first AP occupies the primary channel of the second AP, and may transmit a second PPDU and subsequent PPDUs in a manner in which the first AP does not occupy a specific BW band including the primary channel of the second AP. In this case, the second AP may ignore an NAV configured by the first PPDU transmitted by the first AP, and may perform channel access through the primary channel of the second AP while the TXOP of the first AP is ongoing. This may be an NAV-ignoring operation allowed because the second AP has previously performed a coordination process with the first AP. That is, the operation in which the second AP ignores the NAV configured by the first AP may be understood as an operation allowed by coordination performed between the first AP and the second AP. However, the operation in which the second AP may ignore the NAV of the first AP may be allowed only when the second AP has an intention to serve LL traffic. Furthermore, the operation in which the second AP may ignore the NAV of the first AP may be allowed only in an R-TWT SP operated by the second AP.

As another example, the first AP may transmit a first PPDU, transmitted within a TXOP, in a manner in which the first AP occupies the primary channel of the second AP, and may transmit a second PPDU or subsequent PPDUs in a manner in which the first AP does not occupy a specific BW band including the primary channel of the second AP, but the first AP may allocate a frequency resource for a band including the primary channel of the second AP to the second AP through a PPDU (e.g., the first PPDU) transmitted before transmission of the second PPDU. For example, the first AP may allow the second AP to access a channel by allocating a 242-tone size RU located at the primary 20 MHz channel of the second AP to the second AP through the first PPDU. Thereafter, the first AP may transmit the second PPDU by using only a band other than the band allocated to the second AP. In this case, the second PPDU may be considered to be a PPDU to which a coordinated puncturing configured according to an embodiment of the present disclosure is applied.

Meanwhile, each AP may need to manage non-AP STAs, which are members of a basic service set (BSS) thereof, so as not to occupy a specific bandwidth (BW) band that includes the primary channel of another AP that has performed coordination with the AP. This means that, when coordination between the first AP and the second AP is performed, member STAs of BSSs operated by the first AP and the second AP must perform an operation that avoids accessing a specific BW band according to the coordination performed by the AP associated with themselves. This may prevent the second AP's channel access from being disturbed by a non-AP STA associated with the first AP.

As a method, each AP may configure a specific BW band including the primary channel of a counterpart AP as a disabled subchannel of the AP's basic service set (BSS) in order to prevent non-AP STAs of the AP's BSS from disturbing the channel access of the counterpart AP. In this case, the disabled subchannel is a subchannel that is indicated as not being used by the corresponding BSS, and when the AP indicates that a specific subchannel is disabled, the member STAs do not access the subchannel. That is, the first AP may indicate, to STAs in a BSS, that subchannels in a band including the primary channel of the second AP are disabled subchannels, thereby guiding non-AP STAs in the BSS not to access the band including the primary channel of the second AP. In this case, a method in which the AP indicates information about the disabled subchannel to the non-AP STAs may be a method of indicating the information through a disabled subchannel bitmap subfield included in an EHT operation element, or a method of indicating the information through a disabled subchannel bitmap subfield included in a UHR operation element. In this case, an operation performed by non-AP STAs having received the information about the disabled subchannel via the disabled subchannel bitmap subfield may be the same as an operation performed by an EHT non-AP STA for a subchannel indicated as disabled via the disabled subchannel bitmap subfield. That is, this may be applying a preamble puncturing to 20 MHz subchannels indicated by a disabled subchannel bitmap.

In another embodiment, each AP may indicate, to non-AP STAs of the AP's basic service set (BSS), information about a subchannel to which access is restricted by a coordination operation and information about the time (time point, period, time length, etc.) at which access is restricted. In this case, STAs of the BSS should not access the channel indicated by the AP during the indicated time period. In this case, the AP may indicate information about a specific subchannel (or subchannels) to which access is restricted by the coordination operation and time information, and an operation in which non-AP STAs do not access the specific subchannel (or subchannels) based on the information is a new operation of UHR non-AP STAs which is not defined in conventional Wi-Fi. The non-AP STAs must not access specific subchannels indicated by the AP during the indicated time period, and to this end, may need to apply preamble puncturing for the specific subchannels to a PPDU transmitted during the indicated time period. Alternatively, the non-AP STAs may perform transmission, which does not occupy the specific subchannels, by transmitting a PPDU of a BW that does not occupy the specific subchannels, instead of using preamble puncturing. In this case, the specific subchannel(s) indicated by the AP to the STAs of the AP's BSS may be subchannel(s) including a primary subchannel of another AP that performs multi-AP coordination. In this case, the time period (information related to a time during which access to the specific subchannel is restricted) that an AP indicates to the STAs of the AP's BSS may be indicated based on an R-TWT SP of another AP that performs multi-AP coordination. More specifically, the time period indicated by an AP may indicate a time period identical to or including an R-TWT SP of another AP.

An AP which indicates at least one of subchannels existing in a BSS's operating BW as a disabled/coordinated subchannel by a multi-AP cooperation operation should set a bit of a disabled subchannel bitmap of an EHT operation element corresponding to the subchannels designated as disabled/coordinated subchannels to 1.

Furthermore, when a specific bit of the disabled subchannel bitmap included in the UHR operation element is set to 1, the AP must also set, to 1, a bit of the disabled subchannel bitmap of the EHT operation element corresponding to the subchannel, which is corresponding to the specific bit. That is, a subchannel indicated as disabled by the UHR operation element must also be indicated as disabled by the EHT operation element.

However, a subchannel that is not indicated as disabled by the UHR operation element may be indicated as disabled by the EHT operation element. This may be a phenomenon occurring when a subchannel indicated as disabled only by the EHT operation element is a subchannel to which access is restricted by a multi-AP cooperation operation. More specifically, the AP may indicate through a disabled subchannel bitmap subfield included in the UHR operation element that a specific subchannel is not disabled, but may indicate through a disabled subchannel bitmap subfield included in the EHT operation element that the specific subchannel is disabled. In this case, the specific subchannel may be a subchannel indicated as disabled only for EHT STAs for a multi-AP coordination operation. In this case, the reason the AP indicates the specific subchannel as disabled only to EHT STAs may be that it may be impossible for the EHT STAs to coordinate whether to access the specific subchannel according to the coordination operation.

As a specific example of the coordinated puncturing operation, the first AP and non-AP STAs associated with the first AP (STAs that are members of a BSS operated by the first AP) may transmit an initial frame (e.g., an RTS or MU-RTS frame) to acquire a TXOP in a manner that the first AP does not occupy a specific BW band including the primary channel of the second AP. In this case, the first AP may determine the position and width of the specific BW band, based on primary channel information and/or minimum BW information (information indicated by the second AP to request that the first AP does not occupy the same) pre-indicated by the second AP. In this case, the method by which the first AP and the non-AP STAs associated with the first AP do not occupy the specific BW including the primary channel of the second AP may involve either not transmitting a non-HT duplicated PPDU to the specific BW when transmitting the non-HT duplicated PPDU, or applying preamble puncturing to the specific BW. In this case, the above-described operation may be allowed only when the primary channel of the first AP and the primary channel of the second AP are 20 MHz channels different from each other. In this case, the first AP and the second AP may pre-coordinate the positions of the primary channels to perform the above-described operation. In this case, the above-described operation may be used only when the primary channel of the second AP exists among the 20 MHz subchannels included in the first AP's operating BW.

The R-TWT SP is a TWT SP that is committed to prioritize the handling of low-latency traffic, and an AP and a non-AP STA transmit and receive frames of a TID defined as low-latency traffic during the R-TWT SP. In addition, the start time of the R-TWT SP is configured to be a period overlapping a quiet interval, and thus has the feature of being a period in which channel access of legacy STAs is restricted.

An R-TWT SP is a type of broadcast TWT and may be operated in each link, and non-AP STAs may participate in each R-TWT SP as member STAs. A broadcast TWT element transmitted to establish an R-TWT SP includes a restricted TWT parameter set field, and the restricted TWT parameter set field includes a TID indicator considered to be low-latency traffic in the corresponding TWT SP.

Puncturing refers to a technique for transmitting a PPDU without using some subchannels located in a BW in which the PPDU is transmitted. For example, an 80 MHz PPDU may be transmitted without occupying a specific 20 MHz band located in the 80 MHz band in which the 80 MHz PPDU is transmitted. Accordingly, an STA may transmit an 80 MHz PPDU even when a 20 MHz subchannel already occupied by another STA exists in the 80 MHz bandwidth. In this case, the 80 MHz PPDU transmitted by the STA is transmitted in a manner in which the 20 MHz subchannel occupied by the other STA is punctured. That is, subcarriers located in the specific 20 MHz band are not used for PPDU transmission. Therefore, even if a subchannel is included in the BW of a PPDU transmitted by a specific STA, in the case that puncturing is applied to the subchannel, the subchannel may be identified as IDLE by another STA. Preamble puncturing may refer to a method in which the preamble of a PPDU does not appear with respect to a specific 20 MHz subchannel, and may mean that the puncturing technique described above is applied to the preamble of the PPDU.

In this case, in order to transmit a PPDU that does not occupy a specific BW including a primary channel of another AP, a specific AP performing coordinated puncturing and non-AP STAs of the specific AP set bits corresponding to the specific BW among bits of the TXVECTOR parameter INACTIVE_SUBCHANNEL to 1, and transmit the PPDU.

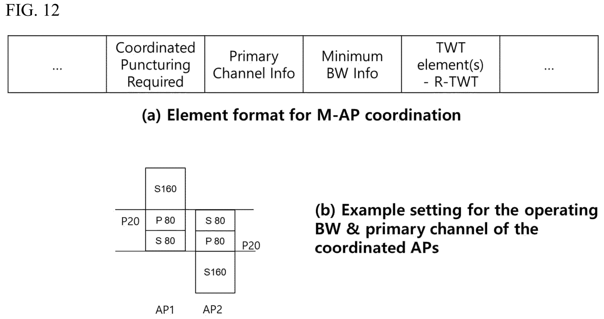

FIG. 12 illustrates a format of an element exchanged between APs for multi-AP cooperative puncturing, and a configuration state of operating bandwidths and primary channels of APs to which multi-AP cooperative puncturing is applied according to an embodiment of the present disclosure.

Hereinafter, the names of subfields described in the present disclosure are for convenience of explanation. The names of the subfield are not limited thereto and may be used in other names. Therefore, although the names of the subfields are different, if the purpose and function of transmission are the same, the subfields may be considered the same subfields in the embodiments of the present disclosure.

FIG. 12(a) illustrates an element format exchanged between APs to perform multi-AP cooperative puncturing.

A coordinated puncturing required subfield is a subfield indicating whether an AP that has transmitted an element requests an AP that is to receive the element to support a coordinated puncturing operation. That is, when a first AP transmits the element to a second AP, the first AP may transmit an element in which a coordinated puncturing required subfield is set to 1, in order to request that the second AP should apply coordinated puncturing to a band including the second AP's primary channel.

For example, when the coordinated puncturing required subfield is indicated as 0, it may indicate that support is not required, when it is indicated as 1, it may indicate that support of puncturing coordinated based on the R-TWT SP is required, and when the coordinated puncturing required subfield is indicated as 2, it may indicate that support of always-coordinated puncturing is required, and thus the coordinated puncturing required subfield may have different meanings.

In the above example, if a specific AP transmits an element where the corresponding subfield is indicated as 1, other APs may need to apply coordinated puncturing when acquiring a TXOP that is expected to overlap the R-TWT SP of the specific AP. In this case, the element in which the corresponding subfield is indicated as 1 has a configuration that includes a TWT element.

In the above example, if a specific AP transmits an element in which the subfield is indicated as 2, other APs may need to always apply coordinated puncturing until an element in which the subfield is indicated as 0 or 1 is received from the specific AP.

In the above example, if the corresponding subfield is configured to have a value (e.g., 0) indicating that coordinated puncturing support is not required, the remaining subfields described later may be reserved or omitted. That is, only when the corresponding subfield is set to a value requiring the support of coordinated puncturing, the subfields described later may be included in the corresponding element, and may be interpreted in the original meanings of the subfields (rather than being reserved).

A primary channel information (Info) subfield indicates information related to the primary channel location of an AP that transmits the corresponding element. The primary channel info subfield may be configured in the same manner as a channel number field interpreted by the global operating classes table.

A minimum BW information (info) subfield includes information regarding a minimum BW that an AP transmitting the corresponding element requests from an AP receiving the corresponding element. More specifically, the minimum BW info subfield indicates the BW size of a band including a primary 20 MHz channel to be secured through a coordinated puncturing operation. For example, when the AP transmitting the corresponding element intends to secure only a primary 20 MHz band, the minimum BW info subfield may be set to a value signifying the 20 MHz band. In this case, the AP that has received the corresponding element may support securing the primary 20 MHz channel by transmitting a PPDU that does not occupy the primary 20 MHz band of the AP that has transmitted the corresponding element. In another example, when the AP that transmits the corresponding element intends to reserve a primary 80 MHz band, the minimum BW info subfield may be set to a value indicating the 80 MHz band. In this case, the AP that has received the corresponding element may support the securing of the 80 MHz band by transmitting a PPDU that does not occupy the 80 MHz band (the 80 MHz bandwidth including the primary 20 MHz subchannel) of the AP that has transmitted the corresponding element.

When a TWT element is included in an element exchanged between APs to perform multi-AP cooperative puncturing, the TWT element indicates information related to an R-TWT SP being operated by an AP, which transmits the corresponding element, in a BSS of the AP. Another AP, which has received, from a specific AP, an element exchanged between APs to perform multi-AP cooperative puncturing, may need to perform coordinated puncturing in consideration of the R-TWT SP of the specific AP when a TWT element is included in the corresponding element. In this case, the TWT element may be included in the corresponding element only when the coordinated puncturing required subfield indicates with a specific value.

FIG. 12B illustrates the operating BW and primary subchannel configuration of AP1 and AP2, which are in a relationship that allows multi-AP cooperative puncturing.

Referring to FIG. 12B, AP1 and AP2 each have an operating BW corresponding to 320 MHz. The primary 160 MHz band of AP1 and the primary 160 MHz band of AP2 are the same, and the primary 80 MHz band of AP1 and the primary 80 MHz band of AP2 are different from each other. In this case, if AP2 has indicated a value corresponding to the 80 MHz band to AP1 through the minimum BW info subfield (see FIG. 12A), AP1 may perform an operation that avoids occupying a band (the secondary 80 MHz of AP1) overlapping the primary 80 MHz of AP2 by applying coordinated punching when acquiring TXOP. Thus, even during a time period when AP1 has obtained a TXOP, it is possible for AP2 to perform a channel access procedure through the primary 20 MHz subchannel and then access the frequency resources of the primary 80 MHz and secondary 160 MHz bands.

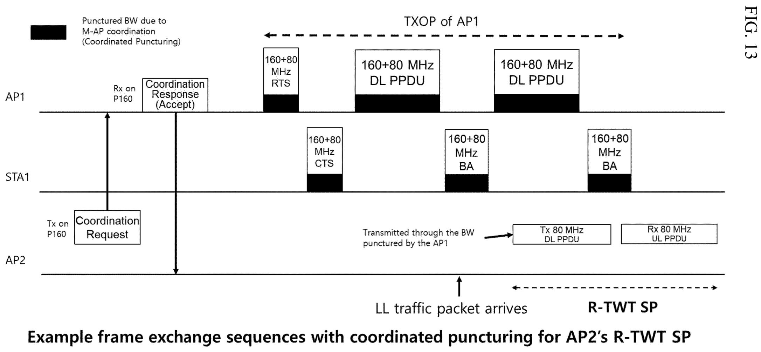

FIG. 13 illustrates an example of a frame exchange sequence to which coordinated puncturing for AP 2 is applied according to an embodiment of the present disclosure.

AP1 and AP2 in FIG. 13 are APs having the same operating BW and primary channel configurations as AP1 and AP2 illustrated in FIG. 12B.

AP2 transmits a coordination request frame to AP1 through a primary 160 MHz band of AP2. In this case, the coordination request frame is a frame having a configuration including the element illustrated in FIG. 12A, and thus, AP2 has requested AP1 to apply coordinated puncturing to the primary 80 MHz band of AP2. After receiving the coordination request frame from AP2, AP1 responds with a coordination response frame that accepts the requested coordination operation.

Therefore, in order to avoid occupying the primary 80 MHz band of AP2 when acquiring the TXOP, AP1 occupies the 160+80 MHz form, which is a form in which an 80 MHz band is punctured in a 320 MHz PPDU. In this case, the punctured 80 MHz band is the same band as the primary 80 MHz band of AP2. Therefore, the TXOP of AP1 is obtained and proceeds in a state in which the primary 80 MHz band of AP2 is not occupied, and even while AP1 transmits a DL PPDU to STA1 and receives a BlockAck frame in response, AP2 may acquire channel access right through EDCA performed in the primary 20 MHz subchannel.

Although LL traffic that requires low-latency support is generated while AP1's TXO is in progress, AP2 may process LL traffic through the primary 80 MHz band without delaying the transmission of the LL traffic until AP1's TXOP ends.

Furthermore, although AP1's TXOP is in progress, AP2 may transmit/receive LL traffic via the P80 MHz band which AP1 does not occupy by applying a coordinated puncturing operation in accordance with the R-TWT SP.

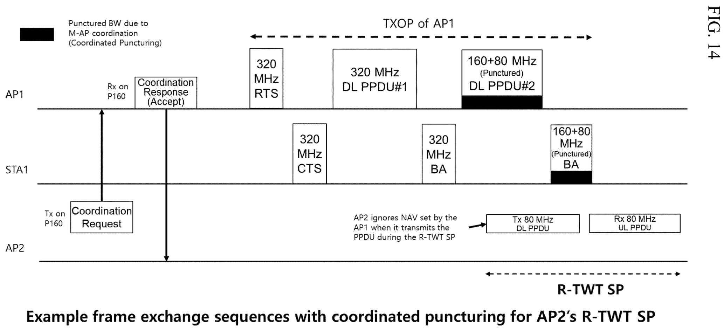

FIG. 14 illustrates another example of a frame exchange sequence to which coordinated punching for AP2 is applied according to an embodiment of the present disclosure.

AP1 and AP2 in FIG. 14 are APs having the same operating BW and primary channel configuration as AP1 and AP2 illustrated in FIG. 12B.

AP2 transmits a coordination request frame to AP1 through a primary 160 MHz band of AP2. In this case, the coordination request frame is a frame having a configuration including the element illustrated in FIG. 12A, and through this, AP2 has requested AP1 to apply coordinated puncturing to the primary 80 MHz band of AP2, and after receiving the coordinated request frame from AP2, AP1 responds with a coordination response frame that accepts the requested coordination operation.

AP1 transmits an RTS frame to acquire the TXOP and transmits both the RTS frame and DL PPDU#1 across a 320 MHz band because DL PPDU#1 does not temporally overlap AP2's R-TWT SP. However, since DL PPDU#2 overlaps AP2's R-TWT SP, AP1 transmits DL PPDU#2 in a 160+80 MHz PPDU form, thereby continuing the TXOP in a manner in which AP1 does not occupy AP2's primary 80 MHz band.

Although the TXOP of AP1 is in progress, AP2 may transmit/receive LL traffic through the P80 MHz band during the R-TWT SP, because AP1 has applied the coordinated puncturing operation in accordance with the R-TWT SP.

In this case, even when an NAV configured by the RTS frame and DL PPDU #1 transmitted by AP1 is not 0, AP2 ignores the NAV and accesses AP2's 80 MHz band. This is an NAV ignoring operation of AP2, considering that AP1, a TXOP holder, is a device that has performed coordination with AP2.

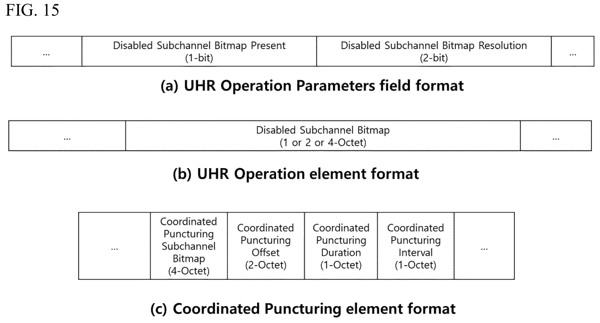

FIG. 15 illustrates an example of an element format which an AP performing a multi-AP cooperation operation according to an embodiment of the present disclosure transmits to indicate STAs information related to channel access restriction to STAs of the AP's BSS.

FIG. 15A illustrates a UHR operation parameters field format. A disabled subchannel bitmap present subfield is a subfield indicating whether a disabled subchannel bitmap subfield is included in the UHR operation element. The disabled subchannel bitmap present subfield is set to 1 when the disabled subchannel bitmap subfield is included in the UHR operation element, and is set to 0 when the disabled subchannel bitmap subfield is not included. A disabled subchannel bitmap resolution subfield may indicate how many 20 MHz subchannels each bit of the disabled subchannel bitmap included in the UHR operation element corresponds to. The disabled subchannel bitmap resolution subfield is reserved when the disabled subchannel bitmap present subfield is indicated as 0. If the disabled subchannel bitmap resolution subfield is indicated as 0, this means that each bit in the disabled subchannel bitmap included in the UHR operation element corresponds to one 20 MHz subchannel. If the disabled subchannel bitmap resolution subfield is indicated as 1, this means that each bit in the disabled subchannel bitmap included in the UHR operation element corresponds to two 20 MHz subchannels. If the disabled subchannel bitmap resolution subfield is indicated as 2, this means that each bit in the disabled subchannel bitmap included in the UHR operation element corresponds to four 20 MHz subchannels. In this case, the configuration values and meanings of the disabled subchannel bitmap resolution subfield are for illustrative purposes, and the disabled subchannel bitmap resolution subfield may be indicated or interpreted with different meanings, such as being indicated as 1 meaning one 20 MHz subchannel, indicated as 2 meaning two 20 MHz subchannels, and indicated 3 meaning four 20 MHz subchannels.

FIG. 15B illustrates a UHR operation element format. The UHR operation element may include a disabled subchannel bitmap subfield, and each bit of the disabled subchannel bitmap subfield may correspond to each subchannel in an operating BW. In this case, a specific bit of the disabled subchannel bitmap subfield may correspond to multiple subchannels, and this may be determined by the disabled subchannel bitmap resolution subfield described with reference to FIG. 15A. The disabled subchannel bitmap subfield may have a size of 1, 2, or 4 octets. In this case, the size of the disabled subchannel bitmap subfield is determined based on the operating BW size of a BSS and resolution information indicated by the disabled subchannel bitmap resolution subfield.

For example, when the BSS operating BW is 640 MHz, a 4-octet disabled subchannel bitmap, which includes 32 bits respectively corresponding to 32 20 MHz subchannels included in 640 MHz, may be indicated. In this case, the disabled subchannel bitmap resolution subfield is configured to have a value indicating that each bit of the disabled subchannel bitmap corresponds to one 20 MHz subchannel. If the disabled subchannel bitmap resolution subfield indicates that each bit of the disabled subchannel bitmap corresponds to two 20 MHz subchannels, the disabled subchannel bitmap transmitted by the AP of a BSS having a 640 MHz operating BW has a size of 2 octets. If the disabled subchannel bitmap resolution subfield indicates that each bit of the disabled subchannel bitmap corresponds to four 20 MHz subchannels, the disabled subchannel bitmap transmitted by the AP of a BSS having a 640 MHz operating BW has a size of 1 octet.

As another example, when the BSS operating BW is 320 MHz, a 2-octet disabled subchannel bitmap, which includes 16 bits corresponding to 16 20 MHz subchannels included in 320 MHz, may be indicated. Therefore, an AP of a BSS having a 320 MHz operating BW may not configure the disabled subchannel bitmap subfield to have a 4-octet size. If the disabled subchannel bitmap resolution subfield indicates that each bit of the disabled subchannel bitmap corresponds to two 20 MHz subchannels, the disabled subchannel bitmap transmitted by the AP of the BSS having the 320 MHz operating BW has a size of 1 octet.

The above-described UHR operation parameters field and UHR operation element may be transmitted by being included in a beacon frame, a probe response frame, an association response frame, or the like transmitted by the AP, or may be transmitted by being included in a frame transmitted by the AP to change the operating mode.

FIG. 15C illustrates a coordinated puncturing element format. A coordinated puncturing subchannel bitmap subfield is a subfield indicating information about a subchannel to which coordinated puncturing is to be applied by a multi-AP cooperation operation. The number of bits included in the coordinated puncturing subchannel bitmap subfield is (the largest operating BW/20 MHz supported by UHR). For example, if the largest operating BW supported by UHR is 640 MHz, the coordinated puncturing subchannel bitmap subfield may include 32 bits.

The first bit of the coordinated puncturing subchannel bitmap subfield corresponds to a 20 MHz subchannel located at the lowest position in the frequency axis among subchannels included in the operating BW, and the x-th bit corresponds to the x-th 20 MHz subchannel in ascending order in the frequency axis among the subchannels included in the operating BW. Therefore, in a case where the operating BW of the BSS is limited, only the first x bits of the coordinated puncturing subchannel bitmap subfield may correspond to respective 20 MHz subchannels, and the remaining bits from the (x+1)th may not correspond to subchannels. Therefore, bits of the coordinated puncturing subchannel bitmap subfield for which the corresponding 20 MHz subchannel does not exist are set to a predetermined value (e.g., 0).

When a specific bit of the coordinated puncturing subchannel bitmap subfield is set to 1, a subchannel corresponding to the specific bit is a subchannel to which coordinated puncturing should be applied. Therefore, when a specific bit of the coordinated puncturing subchannel bitmap subfield received from an AP is indicated as 1, non-AP STAs may need to transmit a PPDU without occupying the subchannel corresponding to the specific bit. That is, when a specific bit of the coordinated puncturing subchannel bitmap subfield is indicated as 1, non-AP STAs is required to set a bit corresponding to the specific bit (a bit corresponding to the same subchannel) of TXVECTOR parameter INACTIVE_SUBCHANNEL of a PPDU being transmitted by the non-AP STAs to 1.

A coordinated puncturing offset subfield is a subfield indicating information related to a time point at which coordinated puncturing should be applied. The coordinated puncturing offset subfield is interpreted together with a coordinated puncturing interval subfield to indicate a time point at which the coordinated puncturing should be applied. Specifically, this means that coordinated puncturing should be applied from a time point at which a value indicated through the coordinated puncturing offset subfield is equal to a timing synchronization function (TSF) % interval (the value indicated by the coordinated puncturing interval subfield). In this case, the above-described mathematical symbol % denotes a modulation operator (a remainder operator). That is, the coordinated puncturing offset subfield and the coordinated puncturing interval subfield serve to indicate a TSF timer value having an interval indicated by the coordinated puncturing interval subfield, and this means that coordinated puncturing should be applied to a PPDU transmitted from a time point at which the TSF timer value is equal to an indicated value. For example, if the coordinated puncturing offset subfield is set to a value indicating 100 and the coordinated puncturing interval subfield is set to a value indicating 1000, the TSF values indicated by the two subfields are 100, 1100, 2100, 3100, and so on.

A coordinated puncturing duration subfield is a subfield that indicates whether coordinated puncturing should be applied for a certain period of time from a TSF timer value specified by the coordinated puncturing offset subfield and the coordinated puncturing interval subfield. That is, non-AP STAs should indicate the coordinated puncturing to a PPDU transmitted during a time period indicated by the coordinated puncturing duration subfield, from the time point indicated by the coordinated puncturing offset subfield and the coordinated puncturing interval subfield. For example, when the coordinated puncturing offset subfield is set to a value indicating 100, the coordinated puncturing interval subfield is set to a value indicating 1000, and the coordinated puncturing duration is indicated as 30, non-AP STAs should apply the coordinated puncturing when transmitting a PPDU at a time point at which the TSF values are 100 to 130, 1100 to 1130, 2100 to 2130, or 3100 to 3130.

In this case, the TSF refers to a local timer used by of Wi-Fi terminals to achieve timing synchronization, an AP indicates the local timer value thereof through the time stamp field of a beacon frame, and non-AP STAs adjust TSF timers thereof, based on a time stamp value received from the AP.

<Method for Enhancing Protection Between BSSs Performing Multi-AP Coordination>

As described above, APs may configure disabled subchannels of the respective BSSs through coordination, and thereby, even when a BSS of a specific AP occupies a medium, a primary channel of a BSS of another AP may be guaranteed to be in an idle state.

Wi-Fi STAs perform a channel access procedure (e.g., EDCA) in a primary channel, and then determine whether to access a non-primary channel by considering whether the non-primary channel has been identified as IDLE for the previous PIFS duration before accessing the non-primary channel. For example, if a CCA result of a specific non-primary channel performed by a specific STA is BUSY, the specific STA must perform transmission in a manner in which the specific STA does not occupied the specific non-primary channel. This is a very basic channel access method of a Wi-Fi STA, so a detailed description thereof will be omitted.

In short, the CCA method for a non-primary channel defined in Wi-Fi is performed based on whether a signal measured in the non-primary channel is higher than a specific threshold value (e.g., -62 dBm or -72 dBm) and does not utilize NAV information. Due to such a limitation, a Wi-Fi STA may provide only a lower level of protection to a frame exchange sequence performed without occupying the STA's primary channel, compared to the protection provided to a frame exchange sequence performed while occupying the STA's primary channel.

Therefore, an STA that performs a channel access procedure such as EDCA by using a subchannel to which multi-AP coordinated puncturing is applied by a first BSS cannot know in advance that another non-primary channel is occupied by the first BSS when the channel access procedure is completed in the subchannel (the STA's primary channel), and must directly determine whether the non-primary channel is in a BUSY state or an IDLE state through a PHY layer CCA. If the result of CCA performed by the STA with regard to the non-primary channel is IDLE, the STA may perform access to the non-primary channel, and disturb transmission of the first BSS occupying the non-primary channel. This may be a problem that occurs because the conventional Wi-Fi STA's operation for evaluating whether a non-primary channel is IDLE or BUSY depends only on the result of the PHY layer CCA, without using a network allocation vector (NAV). As a result, the transmission of a BSS that has punctured (disabled) a specific subchannel through multi-AP coordination may fail due to interference from another BSS that has completed a channel access procedure in the specific subchannel.

As briefly described through the above example, if the transmission of a BSS having performed multi-AP coordinated puncturing fails due to interference from another BSS having performed coordination, an adverse effect may occur in which each BSS having performed the coordination may experience more transmission failures, contrary to the original intention of performing more harmonious operation through multi-AP coordinated puncturing.

[Sharing Occupied Channel Information for Protection Enhancement]

Two BSSs performing multi-AP coordinated puncturing may be required to exchange information regarding a channel occupied by a frame exchange sequence performed in the BSSs, identify, based on the exchanged information, whether a non-primary channel (a subchannel other than a primary channel, e.g., a secondary channel) is occupied by a counterpart BSS, and then determine whether to access the non-primary channel.

According to an embodiment of the present disclosure, frame transmission in a specific format may be allowed in a subchannel disabled by multi-AP coordinated puncturing. More specifically, in a subchannel disabled by multi-AP coordinated puncturing, transmission of an initial control frame (ICF) (e.g., RTS/MU-RTS/BlockAck request frame and/or another type of control frame) and an initial control response frame (ICR) (e.g., a CTS/BlockAck frame) may be allowed, and transmission of a data frame (a PPDU including a data frame) may be restricted. That is, the disabling (puncturing) applied by multi-AP coordinated puncturing may be applied only to a data frame (data PPDU). In this case, the specific frame includes information related to a channel (BW information and/or subchannel information and/or puncturing pattern) occupied by a frame exchange sequence in which an STA that has transmitted the frame participates. Therefore, an STA that has received the specific frame may identify which subchannels are occupied by the TXOP of a BSS to which the STA that has transmitted the specific frame belongs, and may consider that subchannels occupied by the TXOP of another BSS are busy (virtual BUSY) until the end of the TXOP. That is, even when the PHY layer CCA result of a specific subchannel is IDLE, it is possible to determine the specific subchannel as BUSY (virtual BUSY) during a period in which another BSS is using the specific subchannel, thereby protecting the transmission of the other BSS.

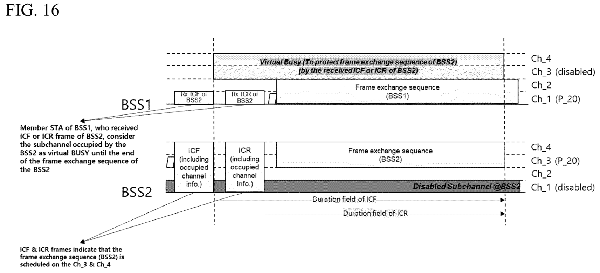

FIG. 16 illustrates an example of a method for exchanging occupied channel information to enhance protection between basic service sets (BSSs) that perform multi-AP coordination according to an embodiment of the present disclosure.

Referring to FIG. 16, BSS1 and BSS2 are BSSs that have performed multi-AP coordination for using multi-AP coordinated puncturing. BSS2 has configured Ch_1 as the BSS's disabled subchannel, taking into account that the primary channel of BSS1 is Ch_1. The STA of BSS2 transmits an ICF for starting a frame exchange sequence in a manner in which the disabled subchannel, Ch_1, is occupied, and the STA of BSS1 receives the ICF or an ICR which is a response frame to the ICF. The ICF and the ICR transmitted by the STA of BSS2 include information related to the occupied channel of the frame exchange sequence performed by the STA of BSS2, and in the example of FIG. 16, it is indicated that an area corresponding to Ch_3 and Ch_4 will be occupied by the frame exchange sequence. An STA of BSS1 having received the ICF and/or the ICR discovers that the frame exchange sequence of BSS2 will be performed through Ch_3 and Ch_4, and determines that Ch_3 and Ch_4 are virtual BUSY during a time period during which the frame exchange sequence is performed. In this case, information about the time period during which the frame exchange sequence is performed is indicated through a duration ID field of an ICF and ICR frame. Therefore, the STA of BSS1 completes the channel access procedure through the idle Ch_1, but initiates a frame exchange sequence in a manner in which Ch_3 and Ch_4 are not occupied, considering that the virtual CCA result of Ch_3 and Ch_4 is BUSY.

[Channel Occupancy Time Sharing for Protection Enhancement]

As another method for enhancing protection between BSSs which have performed adjustment, changing a channel access method for a secondary subchannel in consideration of a time during which another BSS occupies a channel may be considered.

A frame transmitted in a subchannel disabled by multi-AP coordinated puncturing may have a role of causing STAs having received the frame in the subchannel to configure a value of a specific timer. In this case, the specific timer is a timer used to determine the value of a threshold used for CCA of a non-primary channel. More specifically, an STA having a specific timer equal to 0 may use a first value as a CCA threshold when performing a PHY layer CCA for a non-primary channel, and an STA having a specific timer not equal to 0 may use a second value as a CCA threshold when performing a PHY layer CCA for a non-primary channel. In this case, the first value is greater than the second value. For example, the first value may be -62 dBm or -72 dBm, and the second value may be -82 dBm. That is, the STA having the specific timer not being 0 may be required to determine that the secondary subchannel, which is determined to be IDLE when the timer is 0, is BUSY.

To this end, a first AP that has performed M-AP coordination for multi-AP coordinated puncturing a second AP may notify member STAs of a first BSS operated by the first AP of information for identifying a second BSS operated by the second AP (for example, the MAC address of the second AP and/or the BSS color of the second BSS). The STAs of the first BSS, when a frame received by the STAS has been received from an STA of the second BSS, configure a specific timer of the STAs, based on the duration/ID field of the received frame. In this case, a method for configuring a specific timer may be to configure the value of the specific timer as a time indicated by the duration/ID field. However, when the existing value of a specific timer is greater than the value indicated by the duration/ID field of a newly received frame, the value of the specific timer is not reconfigured. When performing CCA for the secondary subchannel, an STA in which the value of a specific timer is not 0 applies a CCA threshold smaller than when the value of the specific timer is 0.

As described above, if STAs of a specific BSS change and use the CCA threshold for the secondary subchannel, the possibility that the STAs of the specific BSS may disturb a frame exchange sequence of another BSS being in progress in a non-primary channel thereof is reduced, and thus, a result that interference between BSSs of APs which have performed multi-AP coordination is reduced may be obtained.

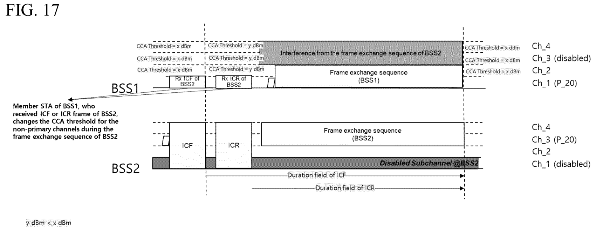

FIG. 17 illustrates an example of a method for changing a CCA threshold to enhance protection between BSSs that have performed multi-AP coordination according to an embodiment of the present disclosure.

Referring to FIG. 17, BSS1 and BSS2 are BSSs that have performed multi-AP coordination for utilizing multi-AP coordinated puncturing. BSS2 has configured Ch_1 as a disabled subchannel of the BSS, in consideration of the fact that the primary channel of BSS1 is Ch_1. An STA of BSS2 transmits an ICF for initiating a frame exchange sequence in a manner in which the disabled subchannel, Ch_1, is occupied, and an STA of BSS1 receives the ICF or an ICR which is a response frame to the ICF. The STA of BSS1 having received the ICF and/or the ICR transmitted by the STA of BBS2 changes a CCA threshold for a non-primary channel from x dBm to y dBm. In this case, y is a value smaller than x, that is, the non-primary channel CCA threshold of the BSS1 STA is configured to be lower during the period in which the frame exchange sequence of BSS2 is in progress. The STA of BSS1 has completed the channel access procedure through Ch_1 which is IDLE, and determines that Ch_3 and Ch_4, which are non-primary channels to which a low CCA threshold is applied, are BUSY. Therefore, the STA of BSS1 initiates a frame exchange sequence in a manner in which the STA of BSS1 does not occupy a subchannel used by BSS2.

Meanwhile, two BSSs that have performed multi-AP coordination to perform multi-AP coordinated puncturing may continue a channel access procedure while ignoring an NAV configured in the counterpart BSS. That is, an STA of the first BSS having configured a NAV (Basic NAV) based on a frame transmitted by an STA of the second BSS may determine the virtual CCA result for a primary channel as IDLE, and perform a channel access procedure, even when a NAV timer configured by the second BSS is not 0.

That is, STAs of two BSSs that have performed multi-AP coordination to use multi-AP coordinated puncturing do not determine the virtual CCA result for the primary channel as BUSY, even when Basic NAV (inter-BSS NAV) is configured by each other. This is because a NAV configured by the counterpart BSS is a NAV configured by a frame transmitted through the disabled subchannel of the counterpart BSS, and the transmitted frame is transmitted for the purpose of indicating the occupied state of a non-primary channel, not for the purpose of configuring a NAV for a primary channel. For example, when a frame transmitted by the second BSS's STA is received, the first BSS's STA may configure a timer for non-primary channels of the first BSS's STA (information about a time period during which a non-primary channel is to be determined to be busy), based on the value of the duration/ID field of the received frame and channel information included in the received frame, and may not configure a timer (NAV timer, basic/inter-BSS NAV timer) for the primary channel or may configure and then ignore the timer. This may allow the exchange of occupied channel and occupied time information between the STA of the first BSS and the STA of the second BSS, and the frame exchange sequence of each BSS may be performed without blocking the channel access procedure of the other BSS. In this case, STAs of a specific BSS may not configure a (basic/inter-BSS) NAV timer when a frame transmitted by another BSS has been received.

Thus, the STAs of each BSS may perform, when a frame is received from another BSS, a determination to configure or not to configure a NAV or a determination to ignore the NAV after having configured the NAV, based on whether the other BSS is a BSS that has performed multi-AP coordination for multi-AP coordinated puncturing with each BSS. In order to help each STA distinguish a frame received from the counterpart BSS, an AP may provide STAs of the AP's BSS with a list of APs (or BSSs) that have performed multi-AP coordination for multi-AP puncturing. For example, a first AP, which has performed M-AP coordination for multi-AP coordinated puncturing with a second AP, may notify member STAs of a first BSS operated by the first AP of information related to a second BSS operated by the second AP (e.g., the MAC address of the second AP and/or the BSS color of a second BSS). If it is determine that the frame received by STAs of the first BSS is transmitted from an STA of the second BSS, the STAs of the first BSS may not configure an NAV (inter-BSS NAV or basic NAV) or may ignore an NAV configured by the frame transmitted by the second BSS and perform channel access (determine that the virtual CCA result of a primary channel is IDLE). In this case, to identify whether the received frame has been transmitted by which BSS, the STAs of the first BSS may perform an operation based on BSS color information (information obtained through the BSS color field of the preamble) of a PPDU including the received frame, or based on the TA field or RA field information of the received frame. In an embodiment, the STA of the first BSS may not configure the NAV, based on the received frame, in case that the TA field or the RA field of a received frame matches the AP MAC address of another BSS indicated by the AP. In another implementation, when the TA field or RA field of a received frame matches the AP MAC address of another BSS indicated by the AP, the STA of the first BSS may ignore the NAV configured in the received frame.

<Method and Procedure for Performing Coordination Between APs>

In the method for transmitting and receiving an AP's low-latency traffic with a non-AP STA within a TXOP configured by another AP as described in FIG. 11 to FIG. 17 above, APs that intend to perform coordination exchange information (e.g., primary channel information, minimum puncturing BW information, R-TWT SP information) necessary for the coordination operation, and then operate TXOP (acquire the TXOP and determine a subchannel for acquiring the TXOP (apply puncturing, apply BW limitation, etc.)) of the APs, based on information indicated by a counterpart AP.

Therefore, the APs that perform the coordination operation must be able to transmit/receive necessary information to/from each other, and in this case, a method different from the method in which STAs belonging to the same BSS exchange information may be used. More specifically, STAs belonging to the same BSS use the same primary channel, and thus may exchange information with each other by using the primary channel or a frequency resource including the primary channel. However, APs of a BSS using different subchannels as primary channels may be restricted from exchanging information with each other by using the primary channels. For example, when a first AP, using a first subchannel as a primary channel, and a second AP, using a second subchannel as a primary channel, intend to exchange information, each of the first AP and the second AP shall exchange information through the primary channel of a BSS thereof and/or the primary channel of a BSS of the counterpart AP. That is, a predetermined method is required for exchanging information between APs using different subchannels as primary channels.

Furthermore, a procedure in which two different APs using different subchannels as primary channels discover each other to perform multi-AP coordination should also be predefined. This is to prevent a situation in which a specific AP has discovered a counterpart AP but the counterpart AP has not discovered the specific AP.

For reference, in the conventional Wi-Fi, in order to help non-AP STAs easily acquire information about other APs, a neighbor report element and a reduced neighbor report element have been included in a beacon frame transmitted by each AP and then transmitted. In this case, the elements transmitted by each AP may include operating channel/class information of a neighbor AP known to the AP transmitting the elements, and a timing synchronization function (TSF) offset, and thus a non-AP STA having received the elements from a specific AP may acquire information (primary channel information and beacon transmission timing information) for receiving a beacon frame of another AP. That is, a non-AP STA was able to discover another AP by using a neighbor report element and/or a reduced neighbor report element received from a specific AP.

However, the conventional Wi-Fi standard did not specify how to identify neighbor AP information when each AP transmits the elements, and thus, even though a neighbor AP exists, each AP may not include information about the neighbor AP in the elements. Therefore, each AP had no reason to perform a thorough discovery operation to identify a neighbor AP, and it was possible for each AP to operate by including only information about a neighbor AP to known the AP in the element. That is, even when a non-AP STA has received a neighbor report element and/or a reduced neighbor report element from a specific AP, it is impossible to identify whether neighbor APs identified through the elements are all neighbor APs of the specific AP.

Thus, an AP following the conventional Wi-Fi standard may acquire or indicate information about a neighbor AP, but may not perform an operation for acquiring information about all neighbor APs, and operations for identifying a neighbor AP may be performed differently. As a result, the first AP may discover that the second AP is a neighbor AP thereof, but the second AP may not discover that the first AP is a neighbor AP thereof (that is, the presence of the first AP). This asymmetric neighbor AP discovery phenomenon does not cause a significant problem in the conventional Wi-Fi operation, which was used only to provide neighbor AP information to a non-AP STA. However, if this phenomenon occurs between APs intending to perform M-AP coordination, the phenomenon may act as a cause of coordination failure. Generally, APs that use the same subchannel as a primary channel are more likely to discover each other because the APs can receive beacon frames transmitted by each other, and APs that use different subchannels as primary channels are less likely to discover each other because the APs cannot receive each other's beacon frames.

For example, the first AP may discover the second AP by receiving a measurement report frame from a non-AP STA associated with the first AP, and then may perform M-AP coordination with the second AP. If the second AP does not discover the presence of the first AP, a series of procedures performed by the first AP to coordinate with the second AP may not be identified by the second AP, and thus may be procedures wasted, that is, the M-AP coordination procedures introduced by the next-generation standard for the purpose of improving wireless LAN efficiency may result in unnecessary resource utilization.

Therefore, a procedure to ensure that APs intending to perform M-AP coordination can discover each other's presence and transmit/receive frames sent for M-AP coordination must be introduced.

According to an embodiment of the present disclosure, an AP may transmit a frame indicating that the AP has an intention to perform multi-AP coordination (hereinafter, M-AP coordination) or that the AP has a capability to perform M-AP coordination, thereby inducing a counterpart AP which has received the frame to perform coordination with the AP. In this case, the frame may be a beacon frame or a management frame of another type. In this case, the frame may be transmitted in a non-HT duplicated PPDU format or in a format in which a 20 MHz UHR PPDU is duplicated. That is, the AP that transmits the frame in a 160 MHz BW may transmit a 20 MHz non-HT PPDU or a 20 MHz UHR PPDU through each of eight 20 MHz subchannels included in the 160 MHz BW.

In this regard, the reason that the frame transmitted by the AP for performing M-AP coordination must be transmitted in a duplicated PPDU format is to allow a device (e.g., a counterpart AP or a non-AP STA associated with the counterpart AP), which has received a PPDU on any one of subchannels included in a BW in which the PPDU is transmitted, to receive the frame included in the PPDU through a primary 20 MHz channel of the device (reception device). More specifically, when a specific AP transmits a frame for M-AP coordination through a 20 MHz duplicated PPDU, devices using subchannels occupied by the PPDU as primary channels may identify the frame transmitted by the specific AP by receiving only the 20 MHz PPDU (a part of the duplicated PPDU) received by occupying the primary channels of the devices. That is, a device (AP and/or non-AP STA) of a BSS which uses, as a primary channel, a subchannel other than the primary channel of an AP that has transmitted a frame may identify (decode) the frame transmitted by the AP through a 20 MHz PPDU reception operation.

As described above, each AP may transmit a frame for M-AP coordination that the AP transmits as a 20 MHz duplicated PPDU, thereby allowing devices (AP and/or non-AP STA) of a BSS that use different subchannels as primary channels to receive the frame. Therefore, a frame for M-AP coordination may be exchanged between APs of BSSs that use different subchannels as primary channels.

A specific AP having received a frame for M-AP coordination transmitted by another AP may discover that the other AP exists, and also may discover that the other AP has an intention to perform M-AP coordination. If the specific AP also has an intention to perform M-AP coordination with the other AP, the specific AP may transmit a frame for M-AP coordination through an RU located in the primary channel of the other AP, when transmitting a PPDU that occupies the primary channel of the other AP. In this case, the specific AP may transmit the format of the PPDU occupying the primary channel of the other AP as a non-HT duplicated PPDU or a format in which a 20 MHz UHR PPDU is duplicated.

As described above, a frame transmitted by an AP to enable another AP to discover the AP's presence has a function similar to that of a beacon frame transmitted by an AP to enable non-AP STAs to discover the AP's presence and capability. In the present disclosure, for the sake of concise expression, a frame transmitted by an AP to be discovered by another AP will be referred to as an M-AP beacon frame.

The M-AP beacon frame may include basic information about an AP that transmits the frame and a BSS operated by the AP. The M-AP beacon frame includes information to help a counterpart AP, which has received the M-AP beacon frame, to determine whether the AP having transmitted the M-AP beacon frame and the receiving AP (the counterpart AP) are in relationship in which coordination can be performed. In other words, the AP having received the M-AP beacon frame may determine whether the receiving AP and the AP having transmitted the M-AP beacon frame are able to perform the M-AP coordination operation, based on information indicated through the M-AP beacon frame.

In this case, a specific method by which the AP that has received the M-AP beacon frame determines whether the AP and a counterpart AP (the AP that has transmitted the M-AP beacon frame) are in a relation in which an M-AP coordination operation can be performed may be based on whether a primary channel of the AP that has transmitted the M-AP beacon frame is a subchannel included in the operating BW of the AP that has received the M-AP beacon frame. More specifically, the AP having received an M-AP beacon frame may be required to determine that M-AP coordination the AP and the AP that transmitted the M-AP beacon frame is impossible when the primary channel of the AP that transmitted the M-AP beacon frame is a subchannel not included in the operating channel of the AP having received the frame. In this case, the reason for not checking whether the primary channel of the first AP, which has received the M-AP beacon frame, is included in the operating channel of the second AP, which has transmitted the M-AP beacon frame, is that a situation in which the M-AP beacon frame transmitted by the second AP is received by the first AP occurs only when a subchannel corresponding to the primary channel of the first AP is included in the operating channel of the second AP (the BSS operated by the second AP).

In addition, even if the AP having received the M-AP beacon frame identifies that the primary channel of the AP having transmitted the corresponding frame is included in the operating channel of the AP having received the frame, the AP having received the frame must identify whether the M-AP coordination operation to be performed is supported by the counterpart AP. Coordination operations that may be utilized between APs may include at least one of the following.

1. Multi-AP Spatial Reuse

1) A spatial reuse technique utilizing information exchanged in advance between APs that perform coordination.
2) Each AP may adjust transmission power for spatial reuse.
3) A shared AP having identified a destination device of a transmission performed by a sharing AP, which is a TXOP holder, may perform spatial reuse, based on pre-obtained interference-related information.

2. Multi-AP Coordinated resource sharing

1) Coordinated TDMA: A sharing AP, which is a TXOP holder, may allocate a part of a time period included in the TXOP obtained by the sharing AP to a shared AP, and the shared AP may use the allocated time period to serve non-AP STAs of a BSS by the shared AP (transmitting a DL PPDU or a trigger frame).
2) Coordinated OFDMA: The sharing AP, which is the TXOP holder, may allocate, to the shared AP, some of the RUs included in a BW in which the TXOP has been obtained, and the shared AP may transmit a DL PPDU or a trigger frame by using the allocated RUs.

3. Multi-AP R-TWT protection (R-TWT coordination, Coordinated R-TWT)

1) APs having performed coordination exchange restricted-TWT (R-TWT) information operated in the respective BSS thereof. Each AP may limit a TXOP length or a subchannel for acquiring the TXOP in consideration of a time point at which the R-TWT SP of another AP starts. Through this, each AP may perform channel access at the start of the R-TWT SP.

4. Multi-AP joint sounding/transmission

1) APs that have performed coordination conduct sounding with STAs belonging to a BSS operated by each AP, and through this, perform joint transmission.

2) When joint transmission is performed, transmissions from a specific AP and another AP may be performed simultaneously to a specific STA associated with the specific AP.

3) When joint transmission is performed, another AP may perform nulling (MIMO technique) to reduce interference to a specific STA associated with a specific AP, while the specific AP performs transmission to the specific STA.

5. Multi-AP Coordinated Puncturing

1) APs having performed M-AP coordination apply puncturing to each other's primary channels, thereby preventing a situation in which due to transmission performed in one AP's BSS, another AP's BSS cannot perform channel access. Since the above operation is provided by the present disclosure, a detailed description thereof will be omitted.

As enumerated above, if multiple M-AP coordination operations are defined, each AP may support all of the M-AP coordination operations or may support only some of the M-AP coordination operations. Therefore, each AP must determine whether to perform the M-AP coordination after identifying, based on information indicated by a counterpart AP through an M-AP beacon frame, whether the counterpart AP supports an M-AP coordination operation that the AP intends to perform with the counterpart AP. For example, an AP that has received an M-AP beacon frame from a counterpart AP may determine, based on information included in the received M-AP beacon frame, whether the counterpart AP supports M-AP coordination that the AP intends to perform with the counterpart AP, and then may perform a procedure for performing the M-AP coordination with the counterpart AP only when the counterpart AP supports the M-AP coordination. On the other hand, if it is determined that the counterpart AP does not support the M-AP coordination that the AP intends to perform with the counterpart AP, the AP may not attempt to perform the M-AP coordination with the counterpart AP. In this case, an operation performed by the AP to perform M-AP coordination with the counterpart that transmitted an M-AP beacon frame received by the AP may be transmitting an M-AP beacon frame of the AP in a band that occupies a band including a primary channel of the counterpart AP. In this case, the operation performed by the AP to perform MAP coordination with the counterpart that transmitted an M-AP beacon frame received by the AP may be transmitting an M-AP coordination request frame of the AP in a band that occupies a band including the primary channel of the counterpart AP. In this case, the M-AP coordination request frame is a frame including information indicating an M-AP coordination operation supported by the AP and/or information indicating an M-AP coordination operation to be performed by the AP with the counterpart AP. In addition, the M-AP coordination request frame may have a configuration including an indicator of the counterpart AP with which the AP intends to perform M-AP coordination. In this case, the AP that receives the M-AP coordination request frame may discover that the AP having transmitted the M-AP coordination request frame intends to perform M-AP coordination with the AP having received the request frame, and may discover the type of M-AP operation for which coordination is requested.

An AP that transmits an M-AP coordination request frame may transmit a PPDU including an indicator related to an AP with which the AP intends to perform coordination, so that the AP that has received the M-AP coordination request frame may discover that an M-AP coordination request has been made to the AP having received the request frame. In this case, the AP that transmits the M-AP coordination request frame may indicate a MAC address of the counterpart AP through the receiver address field (RA field) of the M-AP coordination request frame, thereby enabling the counterpart AP to discover that an M-AP coordination request has been made to the counterpart AP. In this case, the AP that transmits the M-AP coordination request frame may indicate the color of a BSS operated by the counterpart AP through a BSS color field included in the preamble of a 20 MHz duplicated UHR PPDU transmitted by the AP having transmitted the request frame, thereby enabling the counterpart AP to discover that an M-AP coordination has been made to the counterpart AP. If the AP that transmits the M-AP coordination request frame indicates, as described above, the BSS color field of the PPDU as the color of the BSS operated by the counterpart AP, non-AP STAs that are members of the BSS operated by the counterpart AP will discover the PPDU as an intra-PPDU, and as a result, the M-AP coordination frame will receive a higher level of protection from the non-AP STAs. (Although an effect, such as preventing the non-AP STAs from attempting spatial reuse operations based on the BSS color, may be achieved, the detailed description thereof will be omitted because the effect is not closely related to a main idea provided by the present disclosure.)

A process in which APs having different primary channels discover each other, discover the type of M-AP coordination supported by the counterpart AP, and perform M-AP coordination will be described in detail through embodiments of the present disclosure described later.

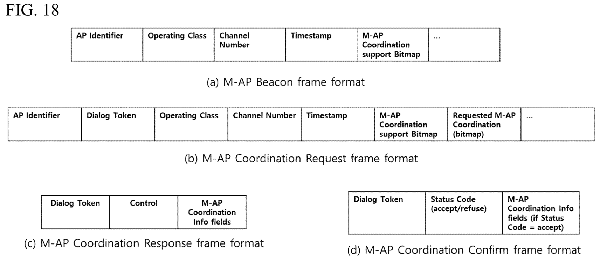

FIG. 18 illustrates an example of a frame format used in a multi-AP coordination process according to an embodiment of the present disclosure.

The frame names described in FIG. 18 are for convenience of description. Thus, each frame is not limited thereto, and other names may be used. In addition, the names of the fields included in each frame may also be changed, or some of the fields may not be included. In addition, the functional aspects of each frame described through the AP discovery/M-AP coordination procedure according to the present disclosure should be understood as the subject matter of the present disclosure.

FIG. 18A illustrates the M-AP beacon frame format.

An M-AP beacon frame includes an AP identifier (identifier) used to identify an AP that transmits the frame. Specifically, the M-AP beacon frame may include an AP ID field. The AP ID field is a field indicating a BSS color value of a BSS operated by the AP that transmits the M-AP beacon frame. Alternatively, the AP ID field may be a field indicating a MAC address of the AP transmitting the M-AP beacon frame. That is, the AP ID field is a field for helping a counterpart device having received the M-AP beacon frame to discover the AP having transmitted the frame, and thus other types of information enabling identification of the transmitting AP may be indicated instead.

The M-AP beacon frame may be a type of broadcast frame.

The M-AP beacon frame may include information about the operating channel of a BSS operated by the AP that transmits the frame. Specifically, the MAP beacon frame includes an operating class field. The operating class indicated by the operating class field may be used to acquire channel starting frequency information, channel spacing information, and channel set information. Therefore, a device that has received the M-AP beacon frame may discover operating channel information (channel set and bandwidth) of the BSS operated by the AP that has transmitted the M-AP beacon frame.

The M-AP beacon frame includes information about a primary channel of a BSS operated by an AP that transmits the frame. Specifically, the M-AP beacon frame includes a channel number field. The channel number field is interpreted in combination with the operating channel information (indicated through the operating class field) and has a function of specifying (as a primary channel) one of subchannels included in an operating channel.

The M-AP beacon frame includes information related to the TSF value of the AP that transmits the frame. Specifically, the M-AP beacon frame includes a timestamp field. The timestamp field indicates a TSF timer value of an STA (AP STA and/or non-AP STA) that transmits the frame. In this case, the timestamp field included in the M-AP beacon frame may have a size the same as or smaller than that of a timestamp field (8-octet) included in a general beacon frame. The timestamp field is used when an AP that has received the M-AP beacon frame calculates the TSF offset between the AP and the AP that has transmitted the M-AP beacon frame. An AP that intends to perform timing synchronization with the AP having transmitted the M-AP beacon frame may adjust a TSF timer thereof by using the timestamp field of the received M-AP beacon frame.

The M-AP beacon frame indicates the types of M-AP coordination operations supported by the AP that transmits the frame. Specifically, the M-AP beacon frame may include an M-AP coordination support bitmap field. In this case, each bit included in the M-AP coordination support bitmap may be set to indicate whether a specific M-AP coordination function is supported. For example, the first bit (e.g., B0) of the M-AP coordination support bitmap field may be set to 1 to indicate that a specific M-AP coordination function is supported, or may be set to 0 to indicate that the specific M-AP coordination function is not supported.

FIG. 18B illustrates an M-AP coordination request frame format.

An M-AP coordination request frame is a frame transmitted by an AP that intends to perform M-AP coordination with a counterpart AP, and the basic function thereof is to indicate, to the counterpart AP, the type of M-AP coordination that the AP is requesting to perform.

The M-AP coordination request frame may be a type of action frame.

The M-AP coordination request frame includes an AP identifier used to identify the AP that transmits the frame. Specifically, the M-AP coordination request frame may include an AP ID field. The AP ID field is a field indicating the BSS color value of a BSS operated by the AP that transmits the M-AP coordination request frame. Since the AP ID field is the same as the AP ID field included in the M-AP beacon frame, a redundant description will be omitted.

The M-AP coordination request frame may include a dialog token field. The dialog token field is used to identify an M-AP coordination request frame to which the received response frame is a response, when the response frame is received after multiple M-AP coordination request frames have been transmitted. That is, an AP transmitting M-AP coordination request frames configured with different methods must set the dialog token field of each request frame to a distinct value. When a response frame is received, the AP must identify an M-AP coordination request frame to which the response frame is a response by identifying the dialog token field value of the received frame.

The M-AP coordination request frame includes an operating class field, a channel number field, a timestamp field, and an M-AP coordination support bitmap. The fields have the same configuration/interpretation method and function as the fields with the same names included in the M-AP beacon frame, and therefore, a redundant description will be omitted.

The M-AP coordination request frame includes a request M-AP coordination field. The request M-AP coordination field serves to indicate an M-AP coordination operation in which the AP transmitting the frame intends to perform coordination with the counterpart AP. The request M-AP coordination field may be configured by a bitmap, and each bit of the request M-AP coordination field may correspond to the same M-AP coordination as the bit at the same position included in the M-AP coordination support bitmap field. That is, a specific M-AP coordination corresponding to a bit at a specific position of the M-AP coordination support bitmap corresponds to a bit at the same position of the request M-AP coordination field. For example, if theB0 bit of the M-AP coordination support bitmap corresponds to M-AP coordinated puncturing, the B0 bit of the request M-AP coordination field also corresponds to M-AP coordinated puncturing. Each bit of the request M-AP coordination field indicates whether an M-AP function corresponding thereto is to be coordinated with a counterpart AP. That is, an AP transmitting the M-AP coordination request frame may request coordination of a specific M-AP function with a counterpart AP by setting a specific bit included in the request M-AP coordination field to 1, and may not request the coordination for the specific M-AP function by setting the specific bit to 0. In this case, each bit of the request M-AP coordination field may be set to 1 only when the corresponding bit of the M-AP coordination support bitmap is set to 1. That is, the AP transmitting the M-AP coordination request frame should make a request to the counterpart AP for only an M-AP coordination function supported by the AP. In addition, the AP transmitting the MAP coordination request frame should request coordination only with regard to an MAP coordination function indicated as being supported by the counterpart AP. That is, the AP transmitting the M-AP coordination request frame should make a request to the counterpart AP for coordination of only an M-AP coordination function supported by both the AP and the counterpart AP. The AP transmitting the request M-AP coordination field may request multiple M-AP coordination functions at once by setting one or more bits included in the field to 1.

FIG. 18C illustrates an M-AP coordination response frame format.

An M-AP coordination response frame is a response frame transmitted by an AP that has received an M-AP coordination request frame.

The M-AP coordination response frame includes a dialog token field, and the dialog token field serves to distinguish a request frame to which the response frame corresponds. That is, an AP responding with a response frame sets the dialog token field of the response frame to a value equal to the value indicated by the dialog token field of a target request frame to which the AP responds.

The M-AP coordination response frame includes a control field. The control field indicates whether any types of M-AP coordination information fields (MAP info fields in FIG. 16C) are included in the frame. That is, the M-AP info field configuration varies depending on the control field configuration.

The M-AP Info fields may include multiple M-AP coordination information fields. Each M-AP coordination information field indicates information required when performing coordination for each M-AP coordination function. For example, an M-AP coordinated information field related to M-AP coordinated puncturing may include information about the minimum puncturing BW. The information required for coordination of each M-AP coordination function may differ, and in the present disclosure, the provided frame format concerns the general M-AP coordination execution procedure and frame format, rather than specifying the coordination method for each M-AP coordination function, and thus a detailed description of the configuration of the M-AP coordination information field will be omitted.

Each M-AP coordination information field included in the M-AP info fields of the M-AP coordination response frame is related to an M-AP coordination function requested by the corresponding M-AP coordination request frame. However, the AP responding with the M-AP coordination request frame may not include, in the M-AP info fields, an M-AP coordination information field for an M-AP coordination function that the AP does not intend to perform. That is, the AP transmitting the MAP coordination response frame may selectively accept only the coordination that the AP intends to perform, among M-AP coordinations requested by the request frame that the AP has received. In this case, the selective acceptance method may include, in the M-AP info fields of the response frame, an M-AP coordination information field related to an M-AP coordination to be accepted, and may not include, in the MAP info fields of the response frame, an M-AP coordination information field related to an M-AP coordination not to be accepted. Therefore, an AP that has transmitted an M-AP coordination request frame and subsequently received an M-AP coordination response frame may refuse to perform the M-AP coordination indicated by the response frame if the type of M-AP coordination function identified through the received M-AP coordination response frame differs from the type that the AP needs.

Alternatively, an AP that has transmitted an M-AP coordination request frame to a counterpart AP and subsequently received an M-AP coordination response frame, may transmit an M-AP coordination response frame (a response as a frame of the same format) in response to the M-AP coordination response frame, thereby re-requesting M-AP coordination of a type different from the M-AP coordination indicated by the M-AP coordination response frame that the AP has been received. That is, APs that perform M-AP coordination may transmit an M-AP coordination response frame to a counterpart AP to indicate M-AP coordination functions that the APs need, without accepting the M-AP coordination functions requested by the counterpart.

In addition, an M-AP coordination information field for an M-AP coordination function not requested by the request frame may also be included in the M-AP info fields. When an M-AP coordination information field for an M-AP coordination function not requested by a request frame is additionally included in the M-AP info fields, the M-AP coordination function corresponding to the additionally included M-AP coordination information field may be understood as a function for which an AP transmitting a response frame has made a coordination request to an AP that transmitted the request frame. That is, the AP that transmits the M-AP coordination response frame may perform a coordination request with regard to an MAP coordination function that is not requested by the AP that transmitted the M-AP coordination request frame. The type of M-AP coordination function, which the AP transmitting the response frame may request from the AP that transmitted the request frame, are limited to an M-AP coordination functions supported by both APs.

FIG. 18D illustrates an M-AP coordination confirm frame format.

The M-AP coordination confirm frame is a frame transmitted by an AP that has received an M-AP coordination response frame, when the AP intends to accept or reject the establishment of M-AP coordination indicated by the received M-AP coordination response frame. The M-AP coordination confirm frame includes a dialog token field, and the field is configured to have the same value as the dialog token field of the M-AP coordination response frame to be accepted/rejected through the M-AP coordination confirm frame. The M-AP coordination confirm frame may include a status code field, and Accept /Reject (Refuse) may be indicated through the status code field. Therefore, an AP that has transmitted the M-AP coordination response frame may determine, based on the status code value of the received M-AP coordination confirm frame, whether M-AP coordination indicated by the AP has been accepted or rejected by a counterpart AP. When the acceptance of M-AP coordination is indicated through the status code field, the corresponding M-AP coordination confirm frame may include an M-AP coordination information field regarding the M-AP coordination to be coordinated. When the rejection of M-AP coordination is indicated through the status code field, the M-AP coordination confirm frame may include information regarding the reason for the rejection (e.g., Reason Code).

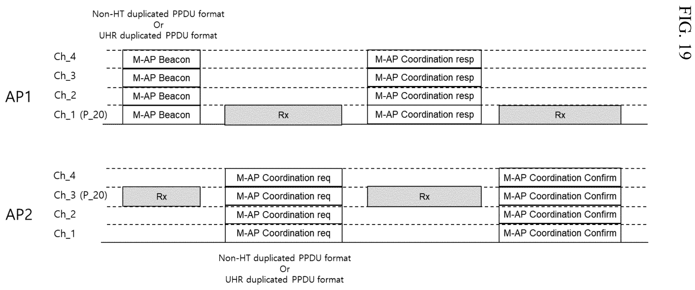

FIG. 19 illustrates an example of a multi-AP coordination process between APs according to an embodiment of the present disclosure.

Referring to FIG. 19, AP1 transmits an M-AP beacon frame not only on AP's primary 20 MHz channel, but also on other subchannels included in AP's operating channel. AP2 may receive the M-AP beacon frame transmitted by AP1 through AP2's primary channel, thereby acquiring the fact that AP1 exists, together with AP1's operating channel, primary channel information, and information about an MAP coordination function supported by AP1.

AP2 transmits an M-AP coordination request frame through subchannels included in AP2's operating channel, for the purpose of performing M-AP coordination with AP1. By receiving the M-AP coordination request frame transmitted by AP2, AP1 may acquire information about the operating channel of AP2, the primary channel information, and information about an M-AP coordination functions supported by AP2 and an M-AP coordination type for which AP2 has requested coordination, and the like.

AP1 transmits an M-AP coordination response frame in response to the MAP coordination request frame requested by AP2, and after receiving the M-AP coordination response frame transmitted from AP1, AP2 transmits an M-AP coordination confirm frame to complete the M-AP coordination procedure. Although not illustrated in FIG. 17, AP1 may perform an Ack response to the M-AP coordination confirm frame, and AP2 may consider that M-AP coordination has been completed (configured) when an Ack response to the M-AP coordination confirm frame transmitted by AP2 is received. That is, when the successful transmission of the M-AP coordination confirm frame is identified between the two APs, the M-AP coordination is completed.

<Multi-AP Coordination Deletion (Delete, Teardown, Expired)>

As described in the above embodiment of the present disclosure, APs identify M-AP coordination functions supported by a counterpart AP, and perform M-AP coordination with the counterpart AP through a series of processes.

According to an embodiment of the present disclosure, M-AP coordination established between two APs may be changed or released through a predetermined procedure. For example, an AP having performed M-AP coordination may transmit a frame requesting M-AP coordination release to a counterpart AP to release the established M-AP coordination. In this case, an AP having received a request for M-AP coordination release from a counterpart AP may always have to accept the request. This indicates that M-AP coordination is a procedure performed/completed by negotiation between two APs, and thus, when one AP has no intention of fulfilling the negotiation, the other AP cannot continue to apply the M-AP coordination.

That is, when a specific channel (e.g., a primary channel) has been configured to be used during a specific period (e.g., an R-TWT period, etc.) through a coordination procedure with another AP in order to serve low-latency traffic within a TXOP configured by the other AP, the use of the specific channel due to the coordination procedure may be released through a procedure agreed between an AP and the other AP. That is, the AP or the other AP may perform a coordination release procedure by transmitting, to a counterpart AP, a release request frame that requests release of the use of a specific channel within the specific period. In this case, the AP having received the release request frame may accept the release request, and when the release request is accepted, the use of the corresponding channel is terminated.

Furthermore, in addition to the above procedure for releasing the coordination, when a specific frame, which must be periodically transmitted by an AP that requested the use of a specific channel, is not received within a predetermined period, another AP may determine that the AP has no intention of using the specific channel, and release the use of that specific channel. That is, when it is determined that an AP does not operate, such as the power of a counterpart AP being turned off, another AP does not need to continue to allow the AP to use a specific channel, and thus may release the coordination of the specific channel. For example, an AP, which can use a specific channel in a specific period through a coordination procedure, must transmit a specific frame that informs another AP of the use of the specific channel at a predetermined period. If the specific frame is not transmitted within the predetermined period, the other AP may consider that the coordination procedure for the specific channel has expired and may release the coordination for the specific channel. In this case, the transmission period of the specific frame may be longer than the transmission period of a general beacon frame. In addition, the specific frame may be transmitted at least once within the predetermined period, or must be transmitted within a predetermined time after the transmission of a previously transmitted specific frame. In this case, the specific frame may be a beacon frame (e.g., a multi-AP (M-AP) beacon frame).

When coordination for multiple M-AP coordination functions is being performed between two APs, it is possible to release M-AP coordination with regard to only some of the multiple M-AP coordinations. For example, when a first AP and a second AP have coordinated a first M-AP coordination function and a second MAP coordination function, the first AP may request the release of only the first M-AP coordination function or only the second M-AP coordination function.

In addition, this may be a situation in which one of APs that have performed M-AP coordination powers off or the operating mode of one of the APs is changed, and thus the previously established M-AP coordination no longer functions effectively. In such a situation, an AP that still believes that M-AP coordination is valid may have an unnecessary burden of performing an operation for M-AP coordination and managing information in a situation where there is no counterpart AP. To resolve this problem, each AP that has performed M-AP coordination may consider that the M-AP coordination established with a counterpart AP is no longer valid and has been terminated, when a frame transmitted from the counterpart AP is not identified within a predetermined time (e.g., M-AP Timeout). That is, when a frame transmitted from a counterpart AP is no longer received, the AP may perform an operation in which the M-AP coordination established with the counterpart AP is considered to have expired (teardown).

Therefore, each AP may need to manage the M-AP coordination established with a counterpart AP so that the M-AP coordination is not released, by transmitting at least one PPDU within the predetermined time in a form in that the primary channel of the counterpart AP is occupied. In this case, the frame included in the PPDU may be an M-AP beacon frame.

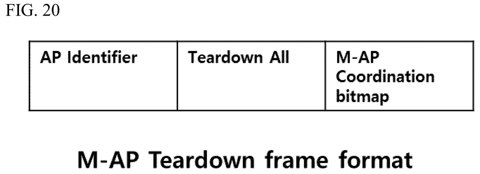

FIG. 20 illustrates an example of a multi-AP coordination teardown frame format according to an embodiment of the present disclosure.

An AP may transmit an M-AP coordination teardown frame to a counterpart AP to terminate M-AP coordination performed coordination with the other AP.

An M-AP coordination teardown frame may include an AP ID field. The AP ID field of an individually addressed M-AP coordination teardown frame indicates the ID (BSS color or the AP's MAC address) of an AP to which the M-AP coordination teardown frame is to be transmitted. The AP ID field of a broadcast M-AP coordinated teardown frame indicates the ID (BSS color or the AP's MAC address) of an AP that transmits the M-AP coordinated teardown frame. The broadcast M-AP coordinated teardown frame is used when an AP that transmits the frame has a purpose of teardown coordination with all APs with which the AP has performed M-AP coordination. That is, an AP that has received the broadcast MAP coordinated teardown frame may release the M-AP coordination performed with an AP indicated through the AP ID field. In this case, the individually addressed MAP coordinated teardown frame refers to a frame in which the RA field (Receiver Address, Address 1 field) of the frame is indicated as the MAC address of a specific AP. In this case, the broadcast address M-AP coordinated teardown frame refers to a frame in which the RA field of the frame is configured to have a pre-designated specific value (e.g., all bits are 1), thereby indicating that all STAs are to receive the frame.

The M-AP coordination teardown frame may include a teardown all field (1-bit) that indicates whether to release all established M-AP coordinations. An AP transmitting the M-AP coordination teardown frame may set the teardown all field to 1 and request the deletion of all M-AP coordination functions for which coordination has been performed with a counterpart AP. When the teardown all field is set to 0, an M-AP coordination function that is to be released through an M-AP coordination bitmap field is specified. However, when the AP that transmits the M-AP coordination teardown frame has only one M-AP coordination function for which coordination has been performed coordination with the counterpart AP, the teardown all field must always be set to 1.

The M-AP coordination teardown frame has a configuration including an MAP coordination bitmap field when the teardown all field is indicated as 0. Bits of the M-AP coordination bitmap field correspond to respective M-AP coordination functions. An AP that transmits the M-AP coordination teardown frame indicates which M-AP coordination function the AP intends to release, by setting, to 1, the bit of the M-AP coordination bitmap field corresponding to an M-AP coordination function for which release is requested, among M-AP coordination functions for which coordination has been established with a counterpart AP.

<Multi-AP Coordination Maintenance>

A conventional Wi-Fi AP may change an operating parameter of a BSS that the AP operates at any time during operation of the BSS. For example, the AP may make a determination to change the operating channel of the BSS or to change the EDCA parameter set. In this case, the AP performs a procedure for notifying non-AP STAs belonging to the BSS to discover the changed BSS parameter and change the operation appropriately. In particular, when a parameter considered to be important is changed, the AP manages the change as a critical update and performs an operation for making non-AP STAs discover that the update has occurred (or is about to occur). Specifically, the AP helps the non-AP STAs to discover whether a critical update has occurred through a check beacon field included in a traffic indication map (TIM) frame that the AP transmits. An STA, which has discovered the occurrence of the critical update through the TIM frame, must receive a beacon frame to acquire (update) information related to the parameter for which the critical update has occurred. A situation managed by the AP as a critical update is a case in which any of the following elements included in a beacon frame undergoes the following change. (Based on Wi-Fi 6)

a) Inclusion of a channel switch announcement element
b) Inclusion of an extended channel switch announcement element
c) Modification of the EDCA parameters element
d) Inclusion of a quiet element
e) Modification of the DSSS parameter set
f) Modification of the HT operation element
g) Inclusion of a wide bandwidth channel switch element
h) Inclusion of a channel switch wrapper element
i) Inclusion of an operating mode notification element
j) Inclusion of a quiet channel element
k) Modification of the VHT operation element
l) Modification of the HE operation element
m) Insertion of a broadcast TWT element
n) Inclusion of the BSS color change announcement element
o) Modification of the MU EDCA parameter set element
p) Modification of the spatial reuse parameter set element
q) Modification of the UORA parameter set element
r) Insertion of an index adjustment factor field in a multiple BSSID configuration element

Thus, when a critical update occurs (or is expected to occur) in the BSS operated by an AP, the AP must provide information to member STAs so that the member STAs can discover the changed parameters and operate correctly. Through this, the AP and non-AP STAs may all perform unified operations regarding the operating channel, operating mode, channel access rules, channel quieting, etc.

In the conventional Wi-Fi, only parameter management between an AP and member STAs of a BSS operated by the AP was required, but when coordination between APs is performed as considered in an embodiment of the present disclosure, parameter management between APs must also be performed. In other words, when an AP that has performed M-AP coordination changes a specific parameter, there is a situation in which a counterpart AP that has performed M-AP coordination must discover the change and operate, and thus a procedure in which the APs notify each other that parameters of the APs have been changed (or are about to be changed) is required. In this case, the already established M-AP coordination may be updated by the changed parameters.

For example, when one of two APs that have performed M-AP coordinated puncturing changes the primary channel of a BSS, the other AP may support puncturing for the primary channel changed by the one AP. That is, a subchannel statically punctured (a subchannel disabled) by M-AP coordinated puncturing may be switched to another subchannel by a primary channel change of the counterpart AP.

As another example, when one of two APs having performed M-AP coordinated puncturing operates a new R-TWT SP, the other AP may support coordinated puncturing for the new R-TWT SP. That is, the time period during which puncturing is performed by M-AP coordinated puncturing may be extended by the addition of the R-TWT SP by the other AP. Conversely, the time period during which puncturing is performed by M-AP coordination puncturing may be reduced by the R-TWT SP deletion (removal) by the counterpart AP.

As another example, when one of two APs performing M-AP coordinated resource sharing changes the operating BW of a BSS, the other AP may need to consider the changed operating BW of the one AP to when determining a resource to share with the one AP, and allocate the resource. If a counterpart AP has reduced the operating BW from the existing 80 MHz to 40 MHz, an AP must allocate a resource to the counterpart AP only for the 40 MHz band including the primary channel of the counterpart AP, and must not allocate the resource to other bands excluding the primary 40 MHz in the 80 MHz band.

Therefore, in a similar manner to the case in which a conventional Wi-Fi AP perform an indication so that non-AP STAs that are members of the AP's BSS can discover a BSS parameter update, when an AP that has performed M-AP coordination intends to change the AP's BSS parameter, the AP may need to perform an indication so that counterpart APs can discover the AP's BSS parameter update. In this case, the type of M-AP critical update, in which the AP having performed M-AP coordination must indicate the AP's BSS parameter change, may include at least one of a) to e) described below. An AP in which an M-AP critical update has occurred must transmit a frame, including an element that triggered the critical update, via the AP's operating channel in a 20 MHz duplicated format, thereby making counterpart APs discover the contents of the critical update of the AP.

For example, an AP in which a critical update occurs due to the following a) must transmit a frame (channel switch announcement frame) including a channel switch announcement element in a 20 MHz duplicated format so that a counterpart AP can discover the AP's channel switch plan.

As another example, an AP in which a critical update occurs a) to e) below must transmit a beacon frame through all subchannels (idle subchannels) included in the operating channel as well as a primary channel in each TBTT. That is, the beacon frame must be transmitted using a 20 MHz duplicated PPDU (20 MHz non-HT duplicated PPDU or 20 MHz duplicated UHR PPDU).

a) When the BSS's operating channel is to be changed

(1) That is, when the beacon frame transmitted by the AP includes a channel switch announcement element,
(2) includes an extended channel switch announcement element,
(3) includes a wide bandwidth channel switch element, or
(4) includes a channel switch wrapper element

b) When the BSS quiet duration is to be added/changed

(1) That is, when the beacon frame transmitted by the AP contains a quiet element, or
(2) includes a quiet channel element

c) When the BSS's operating BW is to be changed

(1) That is, when changing an HT operation element, a VHT operation element, a HE operation element, an EHT operation element, and/or a UHR operation element included in a beacon frame transmitted by the AP to a value different from the existing value

d) When the BSS color is to be changed

(1) That is, when a BSS color change announcement element is included in a beacon frame transmitted by the AP

e) When the R-TWT SP operated in the BSS is to be changed (e.g., addition/removal)

(1) That is, when the beacon frame transmitted by the AP includes a broadcast TWT element which indicates a new R-TWT SP or in which an existing R-TWT SP has been removed

Case a) described above corresponds to a situation in which the operating class/channel (the frequency location of the operating channel and/or the location of the primary channel) of an AP is changed. The change in the operating channel of the AP causes a situation in which an operated operation with a counterpart AP that has performed M-AP coordination is no more possible, or results in a situation in which a channel to which a coordinated operation is applied is changed.

For example, when a first AP which has performed M-AP coordination with a second AP changes the operating channel thereof, the operating channels of the first AP and the second AP may not overlap at all. In this case, there is no operation that the first AP and the second AP may perform for M-AP coordination, and thus the MAP coordination established between the two APs needs to be terminated. In this case, the first AP may notify the second AP of the first AP's operating channel change plan so that the second AP can discover the plan, and the second AP may consider that the M-AP coordination established with the first AP has been terminated at the time when the first AP changes the operating channel thereof.

As another example, when the first AP that has performed coordination for M-AP coordinated puncturing with the second AP changes the primary channel thereof, a subchannel to which the second AP should apply puncturing (a subchannel corresponding to the primary channel of the first AP) may be changed. In this case, the first AP may indicate a plan to change the primary channel thereof to the second AP, thereby enabling the second AP to perform coordinated puncturing for the changed primary channel of the first AP.

Case b) corresponds to a case in which an AP has configured a quiet duration for channel measurement or R-TWT SP. A counterpart AP, which has discovered that a specific AP configured a quiet duration, may configure the same quiet duration as the quiet duration configured by the specific AP in the counterpart AP's BSS. That is, APs having performed M-AP coordination may perform coordination for configuring the same time period as a quiet duration, thereby supporting each STA in performing a more accurate channel measurement or in obtaining a channel access right at the start of an R-TWT SP.

In case c), an AP changes a BSS's operating BW, thereby causing a situation where coordinated operation with a counterpart AP that performed M-AP coordination is no longer possible, or resulting in a situation where the type of resource unit (RU) that can be allocated through resource sharing is changed.

For example, when the first AP having performed M-AP coordination with the second AP changes the operating BW thereof, the operating channels of the first AP and the second AP may not overlap at all. In this case, there is no operation that the first AP and the second AP may perform for M-AP coordination, and therefore, M-AP coordination established between the two APs needs to be terminated. In this case, the first AP may notify the second AP of the first AP's operating BW change plan such that the second AP can discover the plan, and the second AP may consider that the M-AP coordination established with the first AP has been terminated at the time the first AP changes the operating BW thereof.

As another example, when the first AP having performed coordination for M-AP coordinated resource sharing with the second AP changes the operating BW thereof, the types of RUs that the second AP can allocate to the first AP may increase/decrease (the types of RUs may increase when the BW is increased, and the types of RUs may decrease when the BW is reduced). In this case, the first AP may indicate the first AP's operating BW change plan to the second AP, thereby assisting the second AP in performing resource sharing considering the changed operating BW of the first AP.

Cases d) and e) correspond to BSS parameter changes that cause changes in the method or timing for applying M-AP coordinated spatial reuse and M-AP coordinated R-TWT, respectively. A detailed description thereof will be omitted. In this case, the M-AP coordinated R-TWT refers to an M-AP coordination technique in which, after R-TWT SP information is exchanged between APs, a TXOP ends before an R-TWT SP of a counterpart AP begins.

<M-AP Coordinated Puncturing Management Method>

When a counterpart AP's primary channel has been changed, an AP that has performed M-AP coordinated puncturing must change a disabled subchannel configured for the AP's BSS, thereby managing non-AP STAs associated with the AP so that the non-AP STAs do not occupy the changed primary channel of the counterpart AP.

The channel change procedure defined in Wi-Fi may be performed by using a channel switch announcement element and an extended channel switch announcement element, and information about a primary channel change of a counterpart AP, which may be acquired by an AP from the counterpart AP, may also be acquired by using the above elements or other elements having a similar format. That is, an AP may plan to change a disabled subchannel configured for the AP's BSS in accordance with the timing of a channel switch (including a primary channel change) of a counterpart AP that has performed M-AP coordinated puncturing.

An (extended) channel switch announcement element is an element transmitted when an AP intends to change the operating channel of a BSS, and includes information about a new operating channel and information about a time point at which a channel switch starts. Specifically, the (extended) channel switch announcement element includes a channel switch mode (extended channel switch announcement element) field, a new operating class field, a new channel number field, and a channel switch count field. The new operating class field and the new channel number field indicate information about a new operating channel, and the channel switch count field indicates information about a time point at which the channel switch is initiated. The channel switch count field indicates the number of target beacon transmission times (TBTTs) of a BSS remaining until a channel switch starts, and thus, STAs of the BSS may discover how many beacons are transmitted until the channel switch starts.

When one of APs having performed M-AP coordinated puncturing is to perform a channel switch, an AP having received information related to the channel switch may intend to change a disabled subchannel configured for the AP's BSS in accordance with the timing of a scheduled channel switch of a counterpart AP (an AP which is to perform the channel switch). In this case, the AP may include disabled subchannel bitmap information to be newly applied to the BSS in an operation element transmitted by the AP and transmit the information. In this case, the AP may include, in the operation element transmitted by the AP, a counter indicating the time point at which a new disabled subchannel configuration is applied to the BSS, and transmit the counter. That is, the AP may transmit an operation element including a disabled subchannel bitmap subfield indicating a disabled subchannel applied to a current BSS, a new disabled subchannel bitmap subfield indicating a new disabled subchannel, and a disabled subchannel change count subfield indicating the time point at which the new disabled subchannel is applied. A non-AP STA, which has received the new disabled subchannel subfield and the disabled subchannel change count subfield by receiving the operation element from the AP, must perform an operation under the assumption that a disabled subchannel configuration indicated by the new disabled subchannel subfield is applied to the BSS at a time point specified through the disabled subchannel change count subfield. That is, static puncturing for the existing disabled subchannel must be applied before the time point specified by the disabled subchannel change count subfield, and from the time point specified by the disabled subchannel change count subfield, static puncturing must be applied to subchannels indicated as disabled subchannels by the new disabled subchannel bitmap subfield. In this case, when configuring a new disabled subchannel bitmap subfield for the BSS, the AP must configure a puncturing pattern indicated by the subfield to be one of the defined non-OFDMA puncturing patterns.

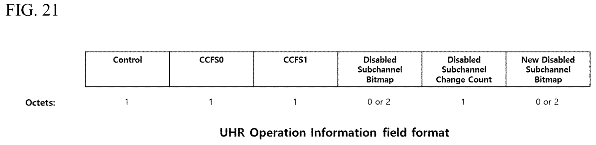

FIG. 21 illustrates an example of the format of an operation information field transmitted by an AP according to an embodiment of the present disclosure to change the disabled subchannel of a BSS.

Referring to FIG. 21, a UHR operation information field includes a control subfield, a CCFS0 subfield, a CCFS1 subfield, a disabled subchannel bitmap subfield, a disabled subchannel change count subfield, and a new disabled subchannel subfield.

The control subfield includes a channel width subfield and a new disabled subchannel information present subfield. The channel width subfield is set to 0 that the UHR BSS bandwidth is 20 MHz, set to 1 to indicate a 40 MHz UHR BSS bandwidth, set to 2 to indicate an 80 MHz UHR BSS bandwidth, set to 3 to indicate a 160 MHz UHR BSS bandwidth, and set to 4 to indicate a 320 MHz UHR BSS bandwidth.

The CCFS0 and CCFS1 subfields indicate information about the center frequency of a BSS operating channel. More specifically, CCFS0 indicates the channel center frequency index of a 20, 40, or 80 MHz channel in which the operating channel is located when the bandwidth of the BSS is 20, 40, or 80 MHz. When the bandwidth of the BSS is 160 MHz, CCFS0 indicates the channel center frequency index of a primary 80 MHz channel, and when the bandwidth of the BSS is 320 MHz, CCFS0 indicates the channel center frequency index of the primary 160 MHz channel. CCFS1 is set to 0 when the bandwidth of the BSS is 20, 40, or 80 MHz. When the bandwidth of the BSS is 160 MHz, CCFS1 indicates the channel center frequency index of a 160 MHz channel corresponding to the operating channel, and when the bandwidth of the BSS is 320 MHz, CCFS1 indicates the channel center frequency index of a 320 MHz channel corresponding to the operating channel.

The disabled subchannel bitmap subfield indicates a disabled subchannel currently applied to the BSS. The first bit of the disabled subchannel bitmap subfield corresponds to a 20 MHz subchannel corresponding to the lowest frequency among subchannels included in the BSS operating channel, the second bit corresponds to a 20 MHz subchannel corresponding to the second lowest frequency, and the third bit corresponds to a 20 MHz subchannel corresponding to the third lowest frequency. When the operating BW of the BSS is 320 MHz, bits up to 16th bit sequentially correspond to subchannels in the manner described above. When the operating BW of the BSS is 160 MHz, the 9th to 16th bits have no corresponding subchannels and are therefore reserved.

The disabled subchannel change count subfield indicates a value related to the number of TBTTs remaining until the disabled subchannel applied to the BSS is changed. Specifically, the disabled subchannel change count subfield may be set to the number of TBTTs remaining until the disabled subchannel of the BSS is changed, or the number of TBTTs - 1.

The new disabled subchannel bitmap subfield indicates a disabled subchannel to be newly applied to a BSS from the time point indicated by the disabled subchannel change count subfield. Each bit of the new disabled subchannel bitmap subfield is configured in the same manner as the disabled subchannel bitmap subfield described above. However, the disabled subchannel indicated through the disabled subchannel bitmap subfield and the disabled subchannel indicated through the new disabled subchannel bitmap subfield are different from each other and cannot be the same. That is, an AP shall not transmit a new disabled subchannel bitmap subfield that indicates a subchannel identical to the existing disabled subchannel as a disabled subchannel.

The disabled subchannel change count subfield and the new disabled subchannel bitmap subfield are subfields that are included in the UHR operation information field when a specific field of a UHR operation parameters field (included in a UHR operation element) is set to 1, and are not included in the UHR operation information field when the specific field is set to 0. In this case, the specific field may be a new disabled subchannel information present subfield.

<Method for Applying M-AP Coordinated Puncturing to a Channel Access Procedure Using a Subchannel Other a Primary Channel>

A UHR STA (AP STA and/or non-AP STA) may perform channel access by using a subchannel other than a primary channel while the primary channel is occupied by an OBSS. For example, an STA of a 160 MHz UHR BSS may attempt channel access through a 20 MHz subchannel (a non-primary channel) located in a secondary 80 MHz band while a primary channel (primary 20 MHz channel) is occupied by the OBSS. The meaning of attempting channel access through a non-primary channel is that a conventional Wi-Fi terminal performs, based on whether the non-primary channel is IDLE/BUSY, an operation that is similar to an operation of performing channel access, i.e., a backoff procedure (according to DCF and EDCA rules), based on whether the primary 20 MHz channel is IDLE/BUSY. The UHR STA having completed the channel access performed via the non-primary channel may perform frame exchange by using the remaining IDLE subchannels, excluding subchannels (including the primary 20 MHz channel) occupied by the OBSS. That is, a TXOP may be acquired for the non-primary channel.

In this way, UHR STAs may perform channel access by using a subchannel other than the primary 20 MHz channel and then initiate transmission, and may prevent the non-primary channel used for channel access from being occupied through M-AP coordinated puncturing. In this case, an AP having performed M-AP coordinated puncturing may apply static puncturing to a non-primary channel to be used when a counterpart AP performs channel access, thereby helping the counterpart AP to perform channel access in the non-primary channel. That is, the above-described M-AP coordinated puncturing procedure may be applied not only to a band including a primary channel, but also to a band including a non-primary channel used for channel access.

For example, when a primary channel of a first AP (or non-AP STA) is occupied by a second AP (or a second non-AP STA) of an OBSS, the first AP may move to a non-primary channel and perform channel access. In this case, the second AP may perform puncturing processing on a channel in which the first AP performs channel access, even within TXOP duration configured by the second AP, without occupying the channel in which the first AP performs channel access, so that the first AP can perform channel access through the channel. In this case, the first AP may perform channel access in the channel and transmit and receive low-latency traffic. Furthermore, within a period (for example, R-TWT) for transmitting and receiving low-latency traffic in the channel, the first AP may transmit and receive traffic even if the period is within a TXOP configured by the second AP.

As such, when a subchannel used for channel access in a non-primary channel is punctured through M-AP coordination between two APs, the operation through M-AP coordinated puncturing may also be performed between APs of two BSSs that use the same subchannel as a primary channel.

For convenience of description, a subchannel used for channel access when the primary channel of a UHR BSS is occupied by an OBSS is referred to as an auxiliary 20 MHz subchannel (A 20).

An AP that performs coordination for M-AP coordinated puncturing indicates information about A20 of the AP (the AP's BSS) to a counterpart AP. In this case, the method for indicating information about A20 may be achieved by the same/similar method as the method for indicating information about a primary channel in the above-described embodiment of FIG. 12, and therefore, a detailed description will be omitted. In addition, information about the minimum BW (the bandwidth including A20) for requesting puncturing may also be indicated in the same/similar manner as in FIG. 12.

Based on information about A20 indicated by a counterpart AP, each AP may configure a disabled subchannel of a BSS operated by the AP, or determine a subchannel which is not occupied when the AP acquires a TXOP, thereby helping the counterpart AP to perform channel access through A20 during a time when the AP and/or STAs of the AP's BSS perform a frame exchange. That is, the above-described M-AP coordinated puncturing operation of the present disclosure may be identically applied to A20 (a 20 MHz subchannel used for channel access, but not a primary 20 MHz channel) of (a BSS of) the counterpart AP, instead of P20 (primary 20 MHz channel) of (a BSS of) the counterpart AP.

In addition, two APs performing M-AP coordinated puncturing may apply M-AP coordinated puncturing to both P20 and A20 of a BSS operated by a counterpart AP. That is, through M-AP coordinated puncturing, a subchannel to which puncturing is applied may include both a band including P20 and a band including A20.

The procedures of the present disclosure described above with respect to P20 may be equally applied to, for example, a method by which an AP that has performed M-AP coordinated puncturing configures a disabled subchannel of the AP's BSS, and a method of applying puncturing in consideration of an SP agreed upon between two APs, such as an R-TWT SP. Therefore, a repeated description will be omitted.

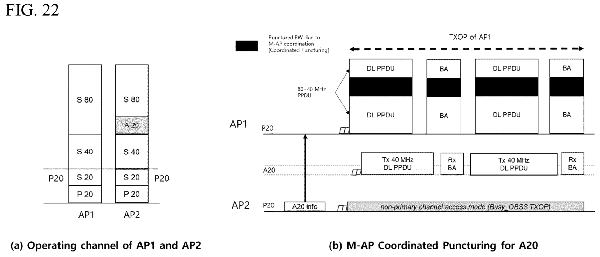

FIG. 22 illustrates an example of a method in which multi-AP coordination puncturing is applied to a subchannel other than a primary channel according to an embodiment of the present disclosure.

FIG. 22A illustrates operating channels of BSSs respectively operated by AP1 and AP2 and the positions of primary 20 MHz channels (P20) and channels for channel access (A20, auxiliary 20 MHz, non-primary channels). It is assumed that the operating channels of the BSSs operated by AP1 and AP2 are fully overlapping, and the primary channel positions of the two BSSs are also the same.

FIG. 22B illustrates a situation in which, during the process in which AP1 acquires a TXOP, an area including the A20 channel of AP2 is punctured to support AP2 in performing a non-primary channel access (channel access using A20). Referring to FIG. 22B, AP2 transmits information related to AP2's A20 to AP1. The diagram is illustrated to symbolically indicate a procedure in which M-AP coordination between APs is performed as described in the above embodiment of FIG. 12, and to indicate that information about A20 is indicated together in the coordination process. AP1 acquires a TXOP after completing a channel access procedure performed in P20. A PPDU transmitted after acquiring the TXOP is transmitted in a form in which puncturing is applied to a band including A20 of AP2. AP2, during the channel access procedure in the P20 channel, identifies that the TXOP of an OBSS (AP1's BBS) has been initiated, and then switches to a non-primary channel access mode. That is, a channel access procedure is performed in A20. A20 is a channel not occupied when AP1 acquires the TXOP, and thus AP2 determines A20 to be IDLE, reduces a backoff counter, and then performs channel access. Through this process, AP1 operates AP1's TXOP in a form in which AP2 can perform channel access through A20. Although not illustrated in FIG. 20, AP1 may configure a band including A20 of AP2 as a disabled subchannel of AP1's BSS, thereby inducing AP1's BSS member STAs to avoid occupying the band including A20 of AP2 by even when the BSS member STAs perform channel access.

<BSS Management Method for Smooth M-AP Negotiation>

Through the aforementioned embodiments of the present disclosure, it has been explained that two BSSs performing coordinated puncturing may perform channel access through a primary channel that remains idle even while a counterpart BSS's TXOP is in progress.

However, each AP may determine whether to perform coordination with a counterpart AP by considering whether the primary channel position of a BSS operated by the counterpart AP is appropriately designated as a disabled subchannel of a BSS operated by the AP. That is, an AP may determine whether to perform coordinated puncturing negotiation with a counterpart AP by considering the effect that occurs when the primary channel of a BSS operated by the counterpart AP is configured as a disabled subchannel of a BSS operated by the AP. This is related to the restriction that when a disabled subchannel of a BSS is configured, the forms of the remaining bandwidth other than a subchannel indicated as a disabled subchannel in an operating bandwidth should have defined non-OFDMA puncturing patterns.

The non-OFDMA puncturing pattern defined in 11be is briefly described below.

A form in which a 20 MHz band is punctured in an 80 MHz band. That is, 40 MHz + 20 MHz (484-tone size RU + 242-tone size RU)

A form in which 20 MHz or 40 MHz is punctured in a 160 MHz band. However, the 40 MHz band to be punctured is limited to one of the defined 40 MHz channel. That is, 80 MHz + 40 MHz + 20 MHz or 80 MHz + 40 MHz (996-tone size RU + 484-tone size RU + 242-tone size RU or 996-tone size RU + 484-tone size RU)

A form in which 40 MHz or 80 MHz or both one 40 MHz and one 80 MHz are punctured in a 320 MHz bandwidth. However, when both one 40 MHz and one 80 MHz are punctured, puncturing is applied to an 80 MHz band located at one edge of the 320 MHz band. That is, 160 MHz + 80 MHz + 40 MHz or 160 MHz + 80 MHz or 160 MHz + 40 MHz or 120 MHz + 80 MHz (996x2-tone size RU + 996-tone size RU + 484-tone size RU or 996x2-tone size RU + 996-tone size RU or 996x2-tone size RU + 484-tone size RU or 996+484-tone size RU + 996-tone size RU)

The limitation of the puncturing pattern defined in various forms as described above is that only a form in which one hole, i.e., one continuous band (e.g., 20/40/80 MHz), is punctured in a continuous non-punctured band is allowed. As a specific example of the above-described limitation, a pattern in which two 20 MHz subchannels are punctured in an 80 MHz PPDU is not defined, and a puncturing pattern in which two separated 20 MHz bands are punctured in a 160 MHz PPDU or in which two separated 40 MHz bands are punctured in a 320 MHz is not defined.

Therefore, an AP intending to perform multi-AP coordination with a counterpart AP may determine whether to perform M-AP coordination by considering whether the puncturing pattern of the AP when puncturing is applied to a primary channel of a BSS operated by the counterpart AP is one of the defined non-OFDMA puncturing patterns. In other words, each AP performing negotiation for multi-AP coordinated puncturing should determine whether to proceed with an M-AP coordinated puncturing negotiation with the other AP, based on the correlation between the disabled subchannel location of a BSS operated by the AP and a subchannel used as a primary channel by the BSS of the counterpart AP.

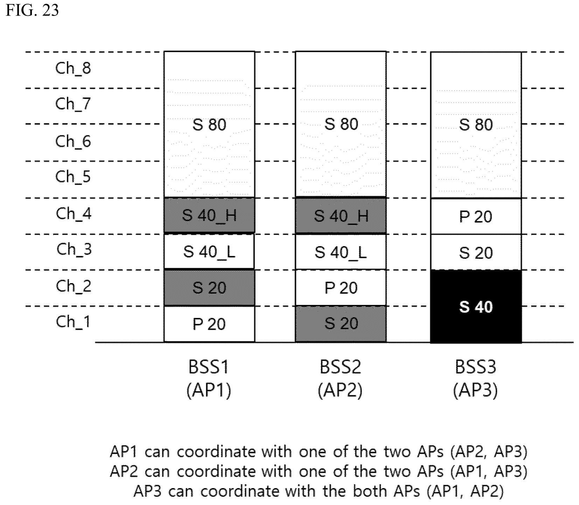

FIG. 23 illustrates an example of a positional relationship of puncturing channels between APs that perform multi-AP coordinated puncturing negotiation according to an embodiment of the present disclosure, and an example of coordination restrictions according to the same.

Referring to FIG. 23, BSS1, BSS2, and BSS3 are all BSSs having an operating BW of 160 MHz. However, the BSS each use different channels as primary channels.

When AP1 of BSS1, which uses Ch_1 as a primary channel, performs negotiation with AP2 for M-AP coordinated puncturing, an S20 channel of BSS1 is disabled. When AP1 performs negotiation with AP3 for M-AP coordinated puncturing, an S40_H channel of BSS1 is disabled. Since a puncturing pattern using only P20, S40_L, and S80 is not defined for 160 MHz, AP1 is unable to perform MAP coordinated puncturing negotiation with both AP2 and AP3, and thus, AP1 is able to perform negotiation for M-AP coordinated puncturing utilization with either AP2 or AP3.

When AP2 of BSS2, which uses Ch_2 as a primary channel, performs negotiation with AP1 for M-AP coordinated puncturing, an S20 channel of BSS2 is disabled. When AP2 performs negotiation with AP3 for M-AP coordinated puncturing, an S40_H channel of BSS2 is disabled. Since a puncturing pattern using only P20, S40_L, and S80 is not defined for 160 MHz, AP2 is unable to perform MAP coordinated puncturing negotiation with both AP1 and AP3, and thus, AP2 is able to perform negotiation for M-AP coordinated puncturing utilization with either AP1 or AP3.

AP3 of BSS3, which uses Ch_3 as a primary channel, may perform negotiation with both AP1 and AP2 for M-AP coordinated puncturing. This is because AP3 may disable the primary channels of both BSS1 and BSS2 by disabling AP3's S40 channel, and a puncturing pattern in which only S40 is punctured is defined for a 160 MHz band.

As a result, AP1, AP2, and AP3 may have the same or different numbers of APs with which negotiation is possible, depending on the positional relationship of channels used as primary channels by the respective BSSs.

As seen in the above-described embodiment, an AP performing negotiation for M-AP coordinated puncturing may determine to perform or not perform M-AP coordination, depending on the position of a counterpart AP's primary channel. The determination of the AP must be respected for the efficient operation of the BSS operated by the AP. Therefore, it is difficult to expect that another AP makes a determination disadvantageous to the other AP at the request of a specific AP.

However, in order to increase the possibility of performing coordination between APs and to increase the effect of coordination performed between the APs, it may be recommended that each AP configure the primary channel (and another subchannel (a non-primary channel in the above example) used for channel access) of the BSS of the AP according to a pre-agreed rule. As a simple example, when half of multiple BSSs having an overlapping operating channel use a specific subchannel as a primary channel and the other half of the BSSs use another specific subchannel as a primary channel, each AP may configure one subchannel as a disabled subchannel, thereby completing coordinated puncturing negotiation with half of the BSSs (APs). That is, in the case of M-AP coordination performed by two APs, whether the coordination is successful is affected by the initial conditions (i.e., primary channel positions) of the two APs.

Therefore, an AP intending to negotiate with neighboring APs for M-AP coordinated puncturing may increase the probability of successful coordination by determining a primary channel of a BSS operated by the AP as a subchannel located at a position suitable for by a counterpart AP to apply puncturing (configure a disabled subchannel). In this case, the primary channel selection method performed by the AP may involve selecting a subchannel at a pre-designated position as the primary channel.

According to an embodiment of the present disclosure, one subchannel within each 80 MHz channel may be designated as a preferred puncturing channel (PPC, which is a provisional name and may be defined differently), and an AP supporting M-AP coordinated puncturing may be required to set up a BSS by configuring the subchannel designated as the PPC as a primary channel. In other words, the AP supporting M-AP coordinated puncturing is required to designate the PPC, among subchannels included in the AP's primary 80 MHz band, as a primary 20 MHz subchannel. In this case, the PPC may be designated for 80 MHz channels included in the 5 GHz band and 80 MHz channels included in the 6 GHz band.

As a specific example, an AP that operates a BSS with an operating BW of 160 MHz must determine one of two 80 MHz subchannels included in the 160 MHz bandwidth as a primary 80 MHz bandwidth, and must determine/use, as a primary 20 MHz subchannel, a subchannel which matches a PPC among four subchannels included in the primary 80 MHz bandwidth. As another specific example, an AP operating a BSS with an operating BW of 320 MHz should determine one of four 80 MHz subchannels included in the 320 MHz bandwidth as a primary 80 MHz bandwidth, and determine/use, as a primary 20 MHz subchannel, a subchannel which matches the PPC among four subchannels included in the primary 80 MHz bandwidth. In addition, an AP operating a BSS with an operating BW of 80 MHz must configure, as a primary 20 MHz subchannel, a subchannel which matches the PPC among four subchannels included in the operating BW.

However, in each 80 MHz channel, an alternate primary channel (APC, which is a provisional name and may be defined differently) may be additionally designated, which may be used as a primary channel only by a BSS having an operating BW of 80 MHz. An APC of a specific 80 MHz channel is designated as a subchannel different from a PPC of the specific 80 MHz channel. An AP of a BSS using the APC of a specific 80 MHz channel as a primary channel may perform negotiation for M-AP coordinated puncturing with an AP of a BSS using the PPC of the same specific 80 MHz channel as a primary channel. That is, there are two different subchannels within the 80 MHz channel that can be used as primary channels by BSSs having an operating channel of 80 MHz, and M-AP coordinated puncturing negotiation may be performed between APs using the different subchannels as primary channels. In this case, the PPC and the APC of the specific 80 MHz channel are positioned consecutively in one of two 40 MHz channels included in the specific 80 MHz channel. That is, the PPC and APC designated for a specific 80 MHz channel are assigned to different 20 MHz subchannels included in a specific 40 MHz. In this case, the reason why the PPC and the APC are included in a specific 40 MHz band is to allow an AP of a BSS having an operating BW of 160 MHz or 320 MHz to designate the specific 40 MHz band as a disabled subchannel (a punctured band), thereby performing negotiation for M-AP coordinated puncturing with an AP of a BSS that uses a specific 80 MHz band as an operating channel. In this case, the APC may be designated for 80 MHz channels included in the 5 GHz band and 80 MHz channels included in the 6 GHz band.

As described above, when the primary channel of a BSS operated by each AP is limited to a subchannel matching the PPC (or APC), the possibility that each BBS and multiple adjacent BSSs use the same subchannel as a primary channel increases. Therefore, when performing M-AP coordination with APs of the multiple BSSs, the AP of the BSS may complete the coordination by puncturing (configuring as disabled subchannels) only subchannels, the number of which is smaller than the number of target APs which performs the coordination.

Additionally, the PPC for the 6 GHz band may be designated by subchannels matching a preferred scanning channel (PSC). The PSC is a subchannel recommended for use as a primary channel by a 6 GHz-only AP (a 6 GHz AP that does not share a co-located AP set with an AP operating in the 2.4 GHz and 5 GHz bands). However, a 6 GHz AP that intends to perform M-AP coordinated puncturing is subject to the constraint that, even if the 6 GHz AP is not a 6 GHz-only AP or is an AP belonging to an AP MLD, the 6 GHz AP must increase the likelihood of coordination with other APs by configuring the primary 20 MHz channel of the BSS thereof as a channel that match the PPC.

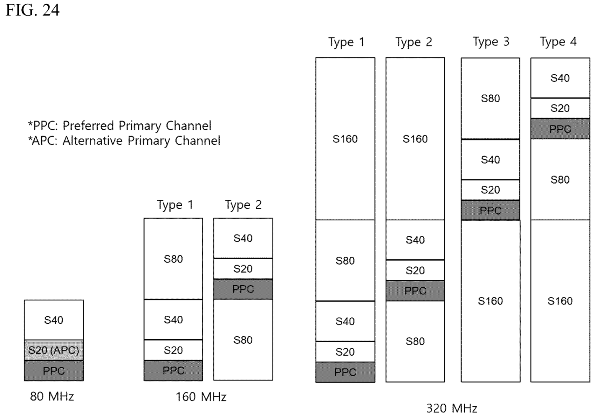

FIG. 24 illustrates an example of a method for designating a PPC and an APC for 80 MHz, 160 MHz, and 320 MHz channels according to an embodiment of the present disclosure.

One PPC and one APC are designated for an 80 MHz channel. A PPC and an APC are designated as channels adjacent to each other and exist within a specific 40 MHz channel. For a 160 MHz channel, two PPCs are designated, and the PPCs are located in different 80 MHz bands. For the 320 MHz channel, four PPCs are designated, and the PPCs are located in different 80 MHz bands.

A method for performing M-AP coordination between APs using a PPC is briefly described below. APs operating 160 MHz BSSs (APs supporting M-AP coordinated puncturing) configure a BSS operating channel by adopting one of two types defined for 160 MHz. That is, all 160 MHz BSS APs supporting M-AP coordinated puncturing use one of two PPCs included in a 160 MHz channel as a primary channel. Therefore, when an AP of a BSS using Type 1 performs coordination with APs of multiple BSSs using Type 2, the AP may complete the coordination by disabling only one subchannel (a 20 MHz subchannel or a 40 MHz channel). Furthermore, when an AP of a BSS using Type 2 performs coordination with APs of multiple BSSs using Type 1, the AP may complete the coordination by disabling only one subchannel (a 20 MHz subchannel or a 40 MHz channel).

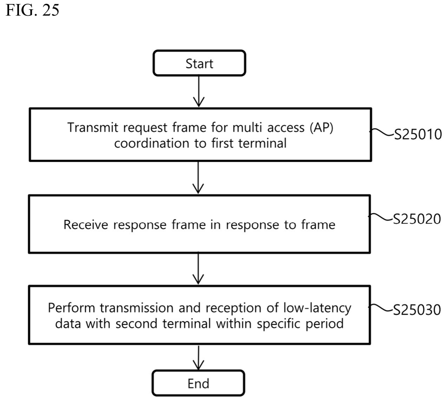

FIG. 25 is a flowchart illustrating an example of a data transmission and reception method performed by a terminal according to an embodiment of the present disclosure.

Referring to FIG. 25, when TXOP duration is configured by NAV configuration by another terminal through coordination with the other UE, a terminal may transmit or receive data for a specific period within the TXOP duration.

Specifically, the terminal transmits a request frame for multi-access point (AP) coordination to a first terminal (S25010). The frame may include channel information indicating a specific channel used for transmitting/receiving low-latency data during a specific period.

Subsequently, the terminal may receive a response frame from the first terminal in response to the frame (S25020), and may perform transmission and reception of the low-latency data with a second terminal within the specific period (S25030). The transmission and reception of the low-latency data using the specific channel within a specific period may be guaranteed by the frame. In addition, the specific channel is not occupied by the first terminal during the specific period, and is used for the transmission and reception the low-latency data with the second terminal.

When a specific period partially or fully overlaps transmission opportunity (TXOP) duration via a network allocation vector (NAV) configuration by the first terminal, the specific channel is used during the specific period to perform transmission and reception the low-latency data with the second terminal. The request frame is duplicated and transmitted in 20MHz units within the entire bandwidth of the wireless communication terminal.

The terminal may transmit, to the first terminal, a release request message for releasing the use of the specific channel by the multi-AP coordination. The use of the specific channel within the specific period is released based on the release request message.

Furthermore, the terminal transmits a specific frame to the first terminal at intervals of a predetermined time to notify the first terminal of the use of the specific channel.

When the specific frame is not transmitted to the first terminal within the predetermined time, the use of the specific channel within the specific period is released, and the predetermined time, which is the transmission period of the specific frame, is longer than the transmission period of a beacon frame.

The specific period is a restricted-target wake time (R-TWT) period for transmitting and receiving the low-latency data.

The above description of the present disclosure is for illustrative purposes, and those skilled in the art to which the present disclosure pertains will be able to understand that the present disclosure may be easily modified in other specific forms without changing the technical idea or essential features of the present disclosure. Therefore, the embodiments described above are to be understood as illustrative and not restrictive in all aspects. For example, each element described as a single type may be implemented in a distributed manner, and likewise, elements described as being distributed may be implemented in a combined form.

The scope of the present disclosure is defined by the appended claims rather than the detailed description, and all changes or modified forms derived from the meaning and scope of the claims, and equivalents thereof, should be construed as being included in the scope of the present disclosure.

**Claims**

1.  A wireless communication terminal comprising:

    a transceiver; and
    a processor,
    wherein the processor is configured to:

transmit a request frame for multi-access point (AP) coordination to a first terminal, the frame comprising channel information indicating a specific channel used for transmission and reception of low-latency data during a specific period;

receive a response frame in response to the frame; and

perform transmission and reception of the low-latency data with a second terminal within the specific period, wherein the transmission and reception of the low-latency data via the specific channel within the specific period is guaranteed by the frame, and

wherein the specific channel is not occupied by the first terminal during the specific period and is used for the transmission and reception of the low latency data with the second terminal.

2. The wireless communication terminal of claim 1,
wherein, in case that the specific period partially or fully overlaps a transmission opportunity (TXOP) duration through a network allocation vector (NAV) configuration by the first terminal, the specific channel is used during the specific period to perform the transmission and reception the low-latency data with the second terminal.

3. The wireless communication terminal of claim 1,
wherein the request frame is duplicated and transmitted in 20MHz units within the entire bandwidth of the wireless communication terminal.

4. The wireless communication terminal of claim 1,

wherein the processor is configured to transmit, to the first terminal, a release request message for releasing the use of the specific channel by the multi-AP coordination, and

wherein the use of the specific channel within the specific period is released based on the release request message.

5. The wireless communication terminal of claim 1,
wherein the processor is configured to transmit a specific frame to the first terminal at intervals of a predetermined time to notify the first terminal of the use of the specific channel.

6. The wireless communication terminal of claim 5,

wherein, in case that the specific frame is not transmitted to the first terminal within the predetermined time, the use of the specific channel within the specific period is released, and

wherein the predetermined time, which is a transmission period of the specific frame, is longer than a transmission period of a beacon frame.

7. The wireless communication terminal of claim 1,
wherein the specific period is a restricted-target wake time (R-TWT) period for the transmission and reception of the low-latency data.

8. A method performed by a wireless communication terminal, the method comprising:

transmitting a request frame for multi-access point (AP) coordination to a first terminal, the frame comprising channel information indicating a specific channel used for transmission and reception of low-latency data during a specific period;

receiving a response frame in response to the frame; and

performing transmission and reception of the low-latency data with a second terminal within the specific period, wherein the transmission and reception of the low-latency data via the specific channel within the specific period is guaranteed by the frame, and

wherein the specific channel is not occupied by the first terminal during the specific period and is used for the transmission and reception of the low-latency data with the second terminal.

9. The method of claim 8,
wherein, in case that the specific period partially or fully overlaps transmission opportunity (TXOP) duration through a network allocation vector (NAV) configuration by the first terminal, the specific channel is used during the specific period to perform the transmission and reception the low-latency data with the second terminal.

10. The method of claim 8,
    wherein the request frame is duplicated and transmitted in 20MHz units within the entire bandwidth of the wireless communication terminal.

11. The method of claim 8, further comprising:

    transmitting, to the first terminal, a release request message for releasing the use of the specific channel by the multi-AP coordination,
    wherein the use of the specific channel within the specific period is released based on the release request message.

12. The method of claim 8, further comprising:
    transmitting a specific frame to the first terminal at intervals of a predetermined time to notify the first terminal of the use of the specific channel.

13. The method of claim 12,
    wherein, in case that the specific frame is not transmitted to the first terminal within the predetermined time, the use of the specific channel within the specific period is released, and
    wherein the predetermined time, which is a transmission period of the specific frame, is longer than a transmission period of a beacon frame.

14. The method of claim 8,
    wherein the specific period is a restricted-target wake time (R-TWT) period for the transmission and reception of the low-latency data.

15. A wireless communication terminal comprising:

    a transceiver; and
    a processor,
    wherein the processor is configured to:

    receive, from a first terminal, a frame indicating that use of a specific channel within a specific period is not allowed, the specific channel being used by a second terminal of another BSS to transmit and receive low-latency data during the specific period; and
    perform transmission and reception of data with the first terminal, based on the frame,
    wherein the transmission and reception of the low-latency data via the specific channel within the specific period is guaranteed by the frame, and
    wherein the specific channel is not occupied by the first terminal during the specific period and is used for the transmission and reception of the low-latency data with the second terminal.

16. The wireless communication terminal of claim 15,
    wherein, in case that a first primary channel of the second terminal and a second primary channel of the wireless communication terminal are identical, a channel access procedure between the wireless communication terminal and the first terminal is performed via a subchannel of an operating channel not including the first primary channel in the entire bandwidth.

FIG. 1

FIG. 2

FIG. 3

100

110

120

User Interface Unit

Display Unit

Memory

Processor

Communication Unit

140

150

160

FIG. 4

200

210

Communication Unit

Processor

Memory

220

260

FIG. 5

FIG. 6

FIG. 7

FIG. 8

(a) EHT/UHR SU PPDU

| L-STF | L-LTF | L-SIG | RL-SIG | U-SIG | EHT/UHR SIG | EHT-STF | EHT-LTF | SVC | MPDU | TAIL |

(b) EHT/UHR TB PPDU

| L-STF | L-LTF | L-SIG | RL-SIG | U-SIG | EHT-STF | EHT-LTF | SVC | MPDU | TAIL |

(c) EHT/UHR MU PPDU

| L-STF | L-LTF | L-SIG | RL-SIG | U-SIG | EHT-SIG-B | EHT-STF | EHT-LTF | SVC | MPDU | TAIL |

(d) EHT/UHR ER SU PPDU

| L-STF | L-LTF | L-SIG | RL-SIG | U-SIG | EHT-SIG-A | EHT-SIG-A | EHT-STF | EHT-LTF | SVC | MPDU | TAIL |

FIG. 9

FIG. 10

FIG. 11

AP2 & AP3 cannot transmit LL traffic packets until the TXOP of AP1 ends.

FIG. 12

| ... | Coordinated Puncturing Required | Primary Channel Info | Minimum BW Info | TWT element(s) - R-TWT | ... |
|---|---|---|---|---|---|

**(a) Element format for M-AP coordination**

**(b) Example setting for the operating BW & primary channel of the coordinated APs**

Example frame exchange sequences with coordinated puncturing for AP2's R-TWT SP

FIG. 13

EP 4 709 018 A1

Example frame exchange sequences with coordinated puncturing for AP2's R-TWT SP

FIG. 14

EP 4 709 018 A1

FIG. 15

| ... | Disabled Subchannel Bitmap Present (1-bit) | Disabled Subchannel Bitmap Resolution (2-bit) | ... |
|---|---|---|---|

**(a) UHR Operation Parameters field format**

| ... | Disabled Subchannel Bitmap (1 or 2 or 4-Octet) | ... |
|---|---|---|

**(b) UHR Operation element format**

| ... | Coordinated Puncturing Subchannel Bitmap (4-Octet) | Coordinated Puncturing Offset (2-Octet) | Coordinated Puncturing Duration (1-Octet) | Coordinated Puncturing Interval (1-Octet) | ... |
|---|---|---|---|---|---|

**(c) Coordinated Puncturing element format**

FIG. 16

FIG. 17

Member STA of BSS1, who received ICF or ICR frame of BSS2, changes the CCA threshold for the non-primary channels during the frame exchange sequence of BSS2

BSS1

BSS2

CCA Threshold = x dBm | CCA Threshold = y dBm | Interference from the frame exchange sequence of BSS2 | CCA Threshold = x dBm | Ch_4
CCA Threshold = x dBm | CCA Threshold = y dBm | | CCA Threshold = x dBm | Ch_3 (disabled)
CCA Threshold = x dBm | CCA Threshold = y dBm | | CCA Threshold = x dBm | Ch_2
Rx ICF of BSS2 | Rx ICR of BSS2 | Frame exchange sequence (BSS1) | | Ch_1 (P_20)

Frame exchange sequence (BSS2) | Ch_4
ICF | ICR | | Ch_3 (P_20)
| | | Ch_2
Disabled Subchannel @BSS2 | Ch_1 (disabled)

Duration field of ICF

Duration field of ICR

y dBm < x dBm

FIG. 18

| AP Identifier | Operating Class | Channel Number | Timestamp | M-AP Coordination support Bitmap | ... |
|---|---|---|---|---|---|
| | | | | | |

(a) M-AP Beacon frame format

| AP Identifier | Dialog Token | Operating Class | Channel Number | Timestamp | M-AP Coordination support Bitmap | Requested M-AP Coordination (bitmap) | ... |
|---|---|---|---|---|---|---|---|
| | | | | | | | |

(b) M-AP Coordination Request frame format

| Dialog Token | Control | M-AP Coordination Info fields |
|---|---|---|
| | | |

(c) M-AP Coordination Response frame format

| Dialog Token | Status Code (accept/refuse) | M-AP Coordination Info fields (if Status Code = accept) |
|---|---|---|
| | | |

(d) M-AP Coordination Confirm frame format

FIG. 19

Non-HT duplicated PPDU format
Or
UHR duplicated PPDU format

| | | | | | |
|---|---|---|---|---|---|
| Ch_4 | M-AP Beacon | | | M-AP Coordination resp | |
| Ch_3 | M-AP Beacon | | | M-AP Coordination resp | |
| Ch_2 | M-AP Beacon | | | M-AP Coordination resp | |
| Ch_1 (P_20) | M-AP Beacon | | Rx | M-AP Coordination resp | Rx |

AP1

| | | | | | |
|---|---|---|---|---|---|
| Ch_4 | | | M-AP Coordination req | | M-AP Coordination Confirm |
| Ch_3 (P_20) | Rx | | M-AP Coordination req | Rx | M-AP Coordination Confirm |
| Ch_2 | | | M-AP Coordination req | | M-AP Coordination Confirm |
| Ch_1 | | | M-AP Coordination req | | M-AP Coordination Confirm |

AP2

Non-HT duplicated PPDU format
Or
UHR duplicated PPDU format

FIG. 20

| AP Identifier | Teardown All | M-AP Coordination bitmap |
|---|---|---|
| | | |

## M-AP Teardown frame format

FIG. 21

| Control | CCFS0 | CCFS1 | Disabled Subchannel Bitmap | Disabled Subchannel Change Count | New Disabled Subchannel Bitmap |
|---------|-------|-------|---------------------------|----------------------------------|--------------------------------|
| 1 | 1 | 1 | 0 or 2 | 1 | 0 or 2 |

Octets:

**UHR Operation Information field format**

FIG. 22

(a) Operating channel of AP1 and AP2

(b) M-AP Coordinated Puncturing for A20

FIG. 23

AP1 can coordinate with one of the two APs (AP2, AP3)
AP2 can coordinate with one of the two APs (AP1, AP3)
AP3 can coordinate with the both APs (AP1, AP2)

FIG. 24

*PPC: Preferred Primary Channel
*APC: Alternative Primary Channel

FIG. 25

```
                    ┌─────────────┐
                    │    Start    │
                    └─────────────┘
                           │
                           ▼
        ┌──────────────────────────────────────┐
        │ Transmit request frame for multi      │ ⌐S25010
        │ access (AP) coordination to first     │
        │ terminal                              │
        └──────────────────────────────────────┘
                           │
                           ▼
        ┌──────────────────────────────────────┐
        │ Receive response frame in response    │ ⌐S25020
        │ to frame                              │
        └──────────────────────────────────────┘
                           │
                           ▼
        ┌──────────────────────────────────────┐
        │ Perform transmission and reception    │ ⌐S25030
        │ of low-latency data with second       │
        │ terminal within specific period       │
        └──────────────────────────────────────┘
                           │
                           ▼
                    ┌─────────────┐
                    │     End     │
                    └─────────────┘
```

## INTERNATIONAL SEARCH REPORT

International application No.

**PCT/KR2024/005732**

### A. CLASSIFICATION OF SUBJECT MATTER

**H04W 74/04**(2009.01)i; **H04W 74/00**(2009.01)i; **H04W 74/08**(2009.01)i; **H04W 72/0453**(2023.01)i; **H04W 84/12**(2009.01)i

According to International Patent Classification (IPC) or to both national classification and IPC

### B. FIELDS SEARCHED

Minimum documentation searched (classification system followed by classification symbols)

H04W 74/04(2009.01); H04L 25/02(2006.01); H04L 5/00(2006.01); H04W 72/04(2009.01); H04W 74/06(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 다중 액세스 포인트 조정(multi AP coordinating), 저지연 데이터(low latency data), 네트워크 할당 벡터(NAV), 전송기회(TXOP)

### C. DOCUMENTS CONSIDERED TO BE RELEVANT

| Category* | Citation of document, with indication, where appropriate, of the relevant passages | Relevant to claim No. |
|---|---|---|
| Y | US 2022-0104257 A1 (LG ELECTRONICS INC.) 31 March 2022 (2022-03-31)<br>See paragraphs [0013] and [0189]; and claim 1. | 1-2,7-9,14-15 |
| A | | 3-6,10-13,16 |
| Y | LU, Liuming et al. Multi-AP Coordination for Low Latency Traffic Delivery: Usage Scenarios and potential features. Doc.: IEEE 802.11-23/0046r1. 15 March 2023.<br>See slides 3 and 7. | 1-2,7-9,14-15 |
| A | US 2023-0007684 A1 (HUAWEI TECHNOLOGIES CO., LTD.) 05 January 2023 (2023-01-05)<br>See paragraphs [0013] and [0189]; and claim 1. | 1-16 |
| A | WO 2022-261104 A1 (INTERDIGITAL PATENT HOLDINGS, INC.) 15 December 2022 (2022-12-15)<br>See claims 1-6. | 1-16 |
| A | SZOTT, Szymon et al. Proposed IEEE 802.11 AIML TIG Technical Report Text for the Multi-AP Coordination Use Case. doc.: IEEE 802.11-23/0227r1. 27 February 2023.<br>See pages 1-4. | 1-16 |

☐ Further documents are listed in the continuation of Box C.　　☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **02 August 2024** | **02 August 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/005732**

| Patent document cited in search report | | | Publication date (day/month/year) | Patent family member(s) | | | Publication date (day/month/year) |
|---|---|---|---|---|---|---|---|
| US | 2022-0104257 | A1 | 31 March 2022 | US | 11985704 | B2 | 14 May 2024 |
| | | | | WO | 2020-166770 | A1 | 20 August 2020 |
| US | 2023-0007684 | A1 | 05 January 2023 | AU | 2020-332462 | A1 | 25 February 2021 |
| | | | | AU | 2020-386587 | A1 | 27 May 2021 |
| | | | | AU | 2020-404339 | A1 | 24 June 2021 |
| | | | | AU | 2020-414943 | A1 | 01 July 2021 |
| | | | | AU | 2021-359357 | A1 | 21 April 2022 |
| | | | | CN | 111091106 | A | 01 May 2020 |
| | | | | CN | 112143926 | A | 29 December 2020 |
| | | | | CN | 113045570 | A | 29 June 2021 |
| | | | | CN | 113161720 | A | 23 July 2021 |
| WO | 2022-261104 | A1 | 15 December 2022 | AU | 2022-289708 | A1 | 04 January 2024 |
| | | | | CN | 117652118 | A | 05 March 2024 |
| | | | | EP | 4352906 | A1 | 17 April 2024 |
| | | | | JP | 2024-521945 | A | 04 June 2024 |
| | | | | KR | 10-2024-0018597 | A | 13 February 2024 |

Form PCT/ISA/210 (patent family annex) (July 2022)